# EUROPEAN PATENT SPECIFICATION

(11) **EP 4 056 822 B1**
(45) Date of publication and mention of the grant of the patent: **05.02.2025**
(21) Application number: 22156912.2
(22) Date of filing: 18.12.2015
(51) Int. Cl.: F01N 3/24, F01N 3/20, F01N 3/28, F01N 11/00, F01N 13/00, F01N 13/08, F01N 13/10, B62M 7/02, F02D 41/14

(54) **STRADDLED VEHICLE WITH AN COMBUSTION ENGINE, A TURBOCHARGER AND A CATALYST**
GRÄTSCHSITZFAHRZEUG MIT EINEM VERBRENNUNGSMOTOR, EINEM TURBOLADER UND EINEN KATALYSATOR
VÉHICULE À ENFOURCHER AVEC UN MOTEUR À COMBUSTION, UN TURBOCOMPRESSEUR ET UN CATALYSEUR

(30) Priority: 19.12.2014 JP 2014256984; 19.12.2014 JP 2014256983; 19.12.2014 JP 2014256985; 06.04.2015 JP 2015077744; 07.08.2015 JP 2015157520
(43) Date of publication of application: 14.09.2022
(62) Divisional of application: 15870105.2
(73) Proprietor: Yamaha Hatsudoki Kabushiki Kaisha, Iwata-shi, Shizuoka 438-8501 (JP)
(72) Inventor: TAKASU, Daisuke, Iwata-shi, Shizuoka, 438-8501 (JP); KOBAYASHI, Makoto, Iwata-shi, Shizuoka, 438-8501 (JP); KUROIWA, Makoto, Iwata-shi, Shizuoka, 438-8501 (JP); WAKIMURA, Makoto, Iwata-shi, Shizuoka, 438-8501 (JP); OKU, Yuji, Iwata-shi, Shizuoka, 438-8501 (JP)
(74) Representative: Zimmermann, Tankred Klaus

(56) References cited:
- EP-A1- 2 031 200
- EP-A2- 0 038 201
- EP-A2- 2 075 181
- WO-A2-2005/111395
- JP-A- 2005 225 383
- JP-A- 2008 190 505
- JP-A- S58 185 931

## Description

### [Technical Field]

The present invention relates to a straddled vehicle which has an engine unit including a turbocharger.

### [Background Art]

A straddled vehicle such as a motorcycle is required to improve the fuel consumption and the output power of the engine. To satisfy these requirements, a turbocharger is provided and the engine displacement is lowered. As the engine displacement is lowered, the fuel consumption is improved. The turbocharger improves the intake efficiency. In this way, the output power of the engine is improved at the same time the fuel consumption is improved.

As the engine displacement is lowered, the engine main body is downsized. However, providing the turbocharger increases the number of components. To restrain the increase the size of the straddled vehicle, additional components must be provided in a narrow limited space in the straddled vehicle. Patent Literature 1 proposes a layout of a straddled vehicle in which a turbocharger is provided but the increase the size of the vehicle is restrained.

Patent Literature 1 discloses the layout of a turbocharger, an intercooler, a surge tank, a throttle body, and a cylinder head of an engine main body. The intercooler is a device configured to cool air compressed by the turbocharger. The air discharged from the intercooler is supplied to the throttle body via the surge tank. The throttle body and the surge tank are provided behind the cylinder head. The intercooler is provided rearward of the cylinder head and the throttle body. The intercooler is provided next to the surge tank. The turbocharger is provided forward of the intercooler. With this layout, intake air is efficiently cooled by the intercooler. The intake efficiency is therefore improved. As such, the layout of Patent Literature 1 makes it possible to improve the intake efficiency and restrain the increase the size of the straddled vehicle.

### [Citation List]

### [Patent Literatures]

[Patent Literature 1] U.S. Patent Publication No. 2015/083513 JP S58 185931 A and JP 2008 190505 A are further state of the art documents.

### [Summary of Invention]

### [Technical Problem]

These days straddled vehicles are required to improve the exhaust gas purification performance.

In this regard, it has been found that it is difficult to improve the exhaust gas purification performance of the straddled vehicle of Patent Literature 1 while restraining the increase the size of the vehicle.

An object of the present invention is to provide a straddled vehicle in which the increase the size of the vehicle is restrained even when a turbocharger is provided, and the exhaust gas purification performance is further improved.

### [Solution to Problem and Advantageous Effects]

As described above, straddled vehicles are these days required to further improve the exhaust gas purification performance. In this regard, it has been found that it is difficult to improve the exhaust gas purification performance of the straddled vehicle of Patent Literature 1 while restraining the increase the size of the vehicle. The following will describe why it is difficult to do so.

The engine main body is connected to an exhaust passage member provided for exhausting exhaust gas. In the straddled vehicle of Patent Literature 1, a part of the exhaust passage member, the part being downstream of the turbocharger, is termed a turbine downstream passage member. In Patent Literature 1, the turbocharger is provided in front of a lower part of the engine main body. When viewed in the left-right direction, the direction in which the exhaust gas flows in the turbine downstream passage member is substantially in parallel to the front-rear direction. The entirety of the turbine downstream passage member is therefore positioned to be substantially as low as the turbocharger. Patent Literature 1 does not teach about catalysts. The inventors of the subject application tried to provide a catalyst in this turbine downstream passage member. To achieve improvement in the exhaust gas purification performance, a catalyst is increased in size. When an upsized catalyst is provided in the turbine downstream passage member, the turbine downstream passage member also increases in size. As described above, the entirety of the turbine downstream passage member is at a low position. Due to this, in cases where the turbine downstream passage member is increased in size crosswise, the turbine downstream passage member makes contact with the ground when the straddled vehicle is leaned. Meanwhile, in cases where the turbine downstream passage member is increased in size downward, the distance between the turbine downstream passage member and the ground is insufficient. For these reasons, the turbine downstream exhaust passage member can be increased in size only upward. In Patent Literature 1, the turbine downstream exhaust passage member is provided to be close to a part of the lower surface of the engine main body. Due to this, when the turbine downstream exhaust passage member is increased in size upward, the vehicle is increased in size upward. To put it differently, when an upsized catalyst is simply provided in the turbine downstream passage member, the straddled vehicle is increased in size upward.

The technology recited in Patent Literature 1 aims at restraining the increase the size of the straddled vehicle while improving the intake efficiency. To achieve this object, Patent Literature 1 employs a technical idea that, after the layout of the intake system is determined, the position of the turbocharger is lastly determined. However, if one tries to improve the exhaust gas purification performance of an engine unit which employs this technical idea, the straddled vehicle is increased in size upward as described above.

Under this circumstance, the inventors of the subject application tried to design the layout of an engine unit based on the following technical idea in place of the previous technical idea. The technical idea is to determine the position of the turbocharger so that the degree of freedom in position of the catalyst provided in the turbine downstream passage member is increased. As the degree of freedom in position of the catalyst is increased, it is possible to provide an upsized catalyst at a position where the increase the size of the vehicle is restrained. As a result, the increase the size of the vehicle is restrained while the exhaust gas purification performance is further improved.

(1) A straddled vehicle of the present teaching includes: a vehicle body frame; an engine unit supported by the vehicle body frame; a front wheel unit including at least one front wheel and provided in front of the engine unit in a vehicle front-rear direction when viewed in a vehicle left-right direction; and a rear wheel unit including at least one rear wheel and provided behind the engine unit in the front-rear direction when viewed in the left-right direction, the engine unit includes: an engine main body including combustion chambers; an intake passage member which is connected to the engine main body and includes an atmosphere suction port through which air is sucked from atmosphere, air supplied to the combustion chambers passing through the intake passage member; an upstream exhaust passage member which is connected to the engine main body, exhaust gas exhausted from the combustion chambers passing through the upstream exhaust passage member; a downstream collective exhaust passage member which includes an atmosphere discharge port through which the exhaust gas is discharged to the atmosphere; a turbocharger which includes a turbine wheel provided in the upstream exhaust passage member and a compressor wheel which is provided in the intake passage member and is connected to the turbine wheel via a connecting shaft having a central axis along the left-right direction; and a catalyst portion having a main catalyst which purifies the exhaust gas discharged from the combustion chambers most in exhaust paths from the combustion chambers to the atmosphere discharge port, the length of the catalyst portion in a flow direction of the exhaust gas being identical to the length of the main catalyst in the flow direction of the exhaust gas , the catalyst portion being connected to a downstream end of the upstream exhaust passage member and an upstream end of the downstream collective exhaust passage member, a downstream end of the catalyst portion being provided below the turbine wheel in a vehicle up-down direction, at least a part of the catalyst portion being, when viewed in the left-right direction, provided, in the up-down direction, straight above a linear line which passes a lowermost end of the front wheel unit and a lowermost end of the engine main body, and at least a part of the catalyst portion overlapping the engine main body when viewed in the front-rear direction, the upstream exhaust passage member includes a scroll exhaust passage member which wholly surrounds an outer circumference of the turbine wheel, at least a part of the scroll exhaust passage member being below a horizontal plane passing an upper end of the front wheel unit, and at least a part of the scroll exhaust passage member overlapping the engine main body when viewed in the front-rear direction. The distance in the left-right direction between the center in the left-right direction of the vehicle and the turbine wheel is shorter than the distance in the left-right direction between the center in the left-right direction of the vehicle and the compressor wheel. Each of the combustion chambers is connected to an internal intake passage member provided for each combustion chamber, the intake passage member includes one main intake passage member and branched intake passage members each having an upstream end connected to a downstream end of the one main intake passage member in the flow direction of air. The engine main body includes injectors each of which is positioned to inject fuel in the combustion chamber, the internal intake passage member, or the branched intake passage member. The upstream exhaust passage member includes: independent exhaust passage members connected to the engine main body; and an upstream collective exhaust passage member which is connected to downstream ends of the independent exhaust passage members and an upstream end of the catalyst portion and gathers the exhaust gas exhausted from the independent exhaust passage members, the turbine wheel being provided in the upstream collective exhaust passage member. The downstream collective exhaust passage member includes: a downstream exhaust passage member having an upstream end connected to a downstream end of the catalyst portion; and a muffler member having an upstream end connected to the downstream end of the catalyst portion. On the upstream collective exhaust passage member, a first oxygen sensor is provided downstream of the turbine wheel to detect oxygen density in the exhaust gas in the upstream collective exhaust passage member. A second sensor is provided either on the downstream exhaust passage member or on the muffler member.

According to this structure, the straddled vehicle includes the vehicle body frame, the engine unit, the front wheel unit, and the rear wheel unit. Hereinafter, a left-right direction, a front-rear direction, and an up-down direction are a vehicle left-right direction, a vehicle front-rear direction, and a vehicle up-down direction, respectively. The engine unit is supported by the vehicle body frame. The front wheel unit includes at least one front wheel. The front wheel unit is provided in front of the engine unit when viewed in the left-right direction. The rear wheel unit includes at least one rear wheel. The rear wheel unit is provided behind the engine unit when viewed in the left-right direction. The engine unit includes an engine main body, an intake passage member, an upstream exhaust passage member, a downstream collective exhaust passage member, a turbocharger, and a catalyst portion (catalytic converter). The engine main body includes combustion chambers. The intake passage member is connected to the engine main body. The intake passage member includes an atmosphere suction port through which air is sucked from atmosphere. Air supplied to combustion chambers passes through the intake passage member. The upstream exhaust passage member is connected to the engine main body. The exhaust gas exhausted from the combustion chambers passes through the upstream exhaust passage member. The downstream collective exhaust passage member has an atmosphere discharge port for discharging the exhaust gas to the atmosphere. The turbocharger includes a turbine wheel and a compressor wheel which is connected to the turbine wheel via a connecting shaft. The turbine wheel is provided in the upstream exhaust passage member. The compressor wheel is provided in an intake passage member. The connecting shaft has a central axis along the left-right direction. The axes of the rotation centers of the turbine wheel and the compressor wheel are therefore along the left-right direction. The turbine wheel rotates as it receives the exhaust gas. In accordance with the rotation of the turbine wheel, the compressor wheel rotates. As a result of this, the compressor wheel compresses air. The compressed air is supplied to the engine main body. The catalyst portion is connected to the downstream end of the upstream exhaust passage member and the upstream end of the downstream collective exhaust passage member. The catalyst portion includes a main catalyst. The length in the flow direction of the exhaust gas of the catalyst portion is identical to the length in the flow direction of the exhaust gas of the main catalyst. The engine unit has exhaust paths which extend from combustion chambers to the atmosphere discharge port. The main catalyst purifies the exhaust gas exhausted from the combustion chambers most in the exhaust paths. The upstream exhaust passage member includes a scroll exhaust passage member. The scroll exhaust passage member wholly surrounds the outer circumference of the turbine wheel.

In the straddled vehicle arranged as described above, the downstream end of the catalyst portion is provided below the turbine wheel. In other words, the downstream end of the catalyst portion is provided below a plane which passes the lower end of the turbine wheel and is orthogonal to the up-down direction. To put it differently, the turbine wheel is provided above the downstream end of the catalyst portion. As a result of this, the position of the turbine wheel is high as compared to Patent Literature 1 described above. Due to this, the path length from the upstream end of the upstream exhaust passage member to the turbine wheel is short. The path length from the turbine wheel to the atmosphere discharge port is therefore long. For this reason, the degree of freedom in position of the catalyst portion is increased. It is therefore possible to provide the catalyst portion at a position where the increase in size in the up-down direction of the vehicle is restrained even when the main catalyst is increased in size. As a result, the increase the size of the vehicle is restrained while the exhaust gas purification performance is further improved. In this way, because the turbocharger is positioned so that the degree of freedom in the position of the catalyst portion is increased, the increase the size of the vehicle is restrained while the exhaust gas purification performance is further improved.

A linear line passing the lowermost end of the front wheel unit and the lowermost end of the engine main body when viewed in the left-right direction is termed a linear line L1. When viewed in the left-right direction, at least a part of the catalyst portion is provided straight or directly above this linear line L1. If the entirety of the catalyst portion is provided below this linear line L1, at least one of the following arrangements is employed. The first one of the arrangements is such that the lower end of the catalyst portion is significantly below the lowermost end of the engine main body. In this arrangement, it is necessary to increase the size of the vehicle in the up-down direction in order to provide for a sufficient distance between the catalyst portion and the ground. As at least a part of the catalyst portion is provided straight above the linear line L1 when viewed in the left-right direction, the increase in size of the vehicle in the up-down direction is restrained. The second one of the arrangements is such that the path length from the combustion chamber to the catalyst portion is long. With this arrangement, the temperature of the exhaust gas flowing into the main catalyst is lowered. The turbocharger compresses air by utilizing the kinetic energy of the exhaust gas. The exhaust gas having passed through the turbine wheel therefore has a lower pressure and a lower temperature when compared to the exhaust gas before passing through the turbine wheel. Due to this, according to the second arrangement, the temperature of the exhaust gas flowing into the main catalyst is further lowered. As a result, at the cold start of the engine unit, the time required to activate the deactivated main catalyst is elongated. Due to this, the exhaust gas purification performance of the main catalyst deteriorates. Therefore, as at least a part of the catalyst portion is provided straight above the linear line L1 when viewed in the left-right direction, the decrease in temperature of the exhaust gas flowing into the main catalyst is restrained, and hence the exhaust gas purification performance is further improved. The cold start of the engine unit indicates that the engine unit is started in a state in which the temperature of the engine main body is equal to or lower than the outside temperature.

The distance between the center in the left-right direction of the vehicle and the turbine wheel in left-right direction is termed a distance D1. The distance between the center in the left-right direction of the vehicle and the compressor wheel in left-right direction is termed a distance D2. The distance D1 is shorter than the distance D2. In other words, the turbine wheel is closer to the center in the left-right direction of the vehicle than the compressor wheel. Exhaust ports connected to the upstream exhaust passage member are formed in the outer surface of the engine main body. The center of all ranges of the exhaust ports in the left-right direction is close to the center in the left-right direction of the vehicle. Therefore the path length from the upstream end of the upstream exhaust passage member to the turbine wheel is further shortened as the turbine wheel is provided at a position close to the center in the left-right direction of the vehicle. The path length from the combustion chamber to the catalyst portion is therefore shortened. For this reason, the temperature of the exhaust gas flowing into the main catalyst is increased. As a result, at the cold start of the engine unit, the time required to activate the deactivated main catalyst is shortened. Due to this, the exhaust gas purification performance of the main catalyst is further improved.

A horizontal plane passing the upper end of the front wheel unit is termed a horizontal plane HP. At least a part of the scroll exhaust passage member is provided below the horizontal plane HP. It is assumed that the entirety of the scroll exhaust passage member is provided above the horizontal plane HP. In such a case, the vehicle is upsized in the up-down direction to provide for a space where the turbocharger is provided. Due to this, as at least a part of the scroll exhaust passage member is provided below the horizontal plane HP, the increase in size of the vehicle in the up-down direction is further restrained.

When viewed in the front-rear direction, at least a part of the catalyst portion overlaps the engine main body. Furthermore, when viewed in the front-rear direction, at least a part of the scroll exhaust passage member overlaps the engine main body. It is therefore possible to restrain the increase in size of the engine unit in the left-right direction. Due to this, the increase in size of the vehicle is restrained in the left-right direction.

Because of the above, even when the turbocharger is provided, the increase in size of the vehicle is restrained and the exhaust gas purification performance is further improved. In Patent Literature 1, an exhaust passage member provided downstream of a turbine wheel is termed a turbine downstream passage member. The turbine downstream passage member is provided to be adjacent to a part of the lower surface of the engine main body. Due to this, when a catalyst portion is provided at a part of the turbine downstream passage member, the catalyst portion is positioned to be adjacent to a part of the lower surface of the engine main body. The present teaching does not exclude cases where the catalyst portion is provided to be adjacent to a part of the lower surface of the engine main body. According to the layout disclosed in Patent Literature 1, the catalyst portion must be provided at the above-described position. Meanwhile, the degree of freedom in position of the catalyst portion is high according to the present teaching. Depending on the shape of the engine main body, the increase in size of the vehicle may be restrained even if the catalyst portion is provided to be adjacent to a part of the lower surface of the engine main body. According to the present teaching, the position of the catalyst portion is selectable in order to restrain the increase in size of the vehicle, in accordance with the shape of the engine main body or the like. Due to this, the increase in size of the vehicle is restrained while the exhaust gas purification performance is further improved by increasing the size of the catalyst.

The engine main body includes a plurality of the combustion chambers. The upstream exhaust passage member includes independent exhaust passage members and an upstream collective exhaust passage member. The independent exhaust passage members are connected to the engine main body. The turbine wheel is provided on the upstream collective exhaust passage member. The upstream collective exhaust passage member is connected to the downstream ends of the independent exhaust passage members and the upstream end of the catalyst portion. The upstream collective exhaust passage member gathers the exhaust gas discharged from the independent exhaust passage members. Therefore no passage member for gathering exhaust gas exhausted from the combustion chambers is formed in the engine main body. It is assumed that a passage member for gathering exhaust gas exhausted from the combustion chambers is formed in the engine main body. In such a case, the pressure of the exhaust gas exhausted from first combustion chamber may obstruct the exhaust of the exhaust gas from second combustion chamber. The flow rate and the pressure of the exhaust gas may deteriorate. As a result, the output of the engine is decreased. Furthermore, because the flow rate and the pressure of the exhaust gas deteriorate the rotation speed of the turbine wheel is decreased, with the result that the intake efficiency is decreased. As the intake efficiency is decreased, the fuel consumption deteriorates and the output of the engine is further decreased. As the upstream exhaust passage member includes the plurality of independent exhaust passage members and the upstream collective exhaust passage member, the deterioration in output and the deterioration in fuel consumption are prevented.

When each of the injectors is positioned to inject fuel in the combustion chamber, the temperature of the combustion chamber is lowered on account of the evaporation of the fuel. Due to this, knocking is less likely to occur even if the compression ratio increases. This allows the compression ratio to be increased. Increase in the compression ratio improves the fuel consumption.

(2) The straddled vehicle of the present teaching preferably includes the following features. The engine main body includes a crankshaft having a central axis along the left-right direction. At least a part of the catalyst portion is provided forward of the central axis of the crankshaft in the front-rear direction.

According to this arrangement, the engine main body includes the crankshaft. The crankshaft has a central axis along the left-right direction. At least a part of the catalyst portion central axis is provided forward of the central axis of the crankshaft. The path length from the combustion chamber to the catalyst portion is therefore shortened. For this reason, the temperature of the exhaust gas flowing into the main catalyst is increased. As a result, at the cold start of the engine unit, the time required to activate the deactivated main catalyst is shortened. Due to this, the exhaust gas purification performance of the main catalyst is further improved.

(3) The straddled vehicle of the present teaching preferably includes the following feature. At least a part of the catalyst portion is provided below a horizontal plane passing the center of the front wheel unit.

According to this structure, at least a part of the catalyst portion is provided below a horizontal plane passing the center of the front wheel unit. If the entire catalyst portion is provided above the horizontal plane passing the center of the front wheel unit, the position of the turbocharger is significantly high. The vehicle is upsized in the up-down direction to provide for a space where the turbocharger is provided. Due to this, as at least a part of the catalyst portion is provided below the horizontal plane passing the center of the front wheel unit, the increase in size of the vehicle in the up-down direction is further restrained.

(4) The straddled vehicle of the present teaching preferably includes the following feature. When viewed in the front-rear direction, the catalyst portion is provided leftward of or rightward of the turbine wheel in the left-right direction.

According to this arrangement, when viewed in the front-rear direction, the catalyst portion is provided leftward of or rightward of the turbine wheel. Furthermore, as described above, the downstream end of the catalyst portion is provided below the turbine wheel. In other words, when viewed in the front-rear direction, at least a part of the catalyst portion is not provided straight or directly below at least a part of the turbine wheel. It is assumed that, when viewed in the front-rear direction, at least a part of the catalyst portion is provided straight below at least a part of the turbine wheel. In this case, the path from the turbine wheel to the downstream end of the upstream exhaust passage member is bended to form an S-shape when viewed in the front-rear direction. The larger the number of bended portions of a path, the longer the path length is. Therefore, as the catalyst portion is provided rightward of or leftward of the turbine wheel, it is possible to shorten the path length from the combustion chamber to the catalyst portion. For this reason, the temperature of the exhaust gas flowing into the main catalyst is increased. As a result, at the cold start of the engine unit, the time required to activate the deactivated main catalyst is shortened. Due to this, the exhaust gas purification performance of the main catalyst is further improved.

(5) The straddled vehicle of the present teaching preferably includes the following features. The engine main body has cylinder holes each including a crankshaft having a central axis along the left-right direction and forming a part of the combustion chambers. When viewed in the left-right direction, at least a part of the scroll exhaust passage member is provided, in the front-rear direction, in front of a linear line which is orthogonal to the central axis of the cylinder hole and passes the central axis of the crankshaft.

According to this arrangement, the engine main body includes a crankshaft and cylinder holes. The crankshaft has a central axis along the left-right direction. The cylinder hole forms a part of the combustion chamber. It is assumed that a linear line which is orthogonal to the central axis of the cylinder hole and passes the central axis of the crankshaft when viewed in the left-right direction is a linear line L2. When viewed in the left-right direction, at least a part of the scroll exhaust passage member is provided in front of the linear line L2. Due to this, the path length from the upstream end of the upstream exhaust passage member to the turbine wheel is short when compared to cases where the entire scroll exhaust passage member is provided behind the linear line L2 when viewed in the left-right direction. Due to this, the path length of a part of the upstream exhaust passage member, the part being downstream of the turbine wheel, is long. For this reason, the degree of freedom in position of the catalyst portion is further increased. It is therefore possible to provide the catalyst portion at a position where the increase in size in the up-down direction of the vehicle is restrained even when the main catalyst is increased in size. As a result, the increase in size of the vehicle is restrained while the exhaust gas purification performance is further improved.

(6) The straddled vehicle of the present teaching preferably includes the following feature. The catalyst portion is provided below the turbine wheel in the up-down direction.

According to this arrangement, the catalyst portion is provided below the turbine wheel. The degree of freedom in the position of the catalyst portion is therefore high when compared to cases where at least a part of the catalyst portion is provided above the lower end of the turbine wheel. It is therefore possible to provide the catalyst portion at a position where the increase in size in the up-down direction of the vehicle is restrained even when the main catalyst is increased in size. As a result, the increase in size of the vehicle is restrained while the exhaust gas purification performance is further improved.

(7) The straddled vehicle of the present teaching preferably includes the following features. The engine main body has cylinder holes each forming a part of the combustion chambers. The engine main body is disposed so that the central axes of the cylinder holes are along the up-down direction.

According to this arrangement, the engine main body has cylinder holes. The cylinder hole forms a part of the combustion chamber. The central axis of the cylinder hole is along the up-down direction. This makes it easy to realize an arrangement that at least a part of the catalyst portion is provided straight above the linear line L1 when viewed in the left-right direction and the downstream end of the catalyst portion is provided below the turbine wheel. As a result, the increase in size of the vehicle is restrained while the exhaust gas purification performance is further improved. In this connection, the definition that a central axis is along the up-down direction is not limited to cases where the central axis is in parallel to the up-down direction. The definition encompasses cases where the central axis is tilted by +45 to -45 degrees with respect to the up-down direction.

(8) The straddled vehicle of the present teaching preferably includes the following feature. The catalyst portion is disposed so that the flow direction of the exhaust gas flowing in the catalyst portion is along the up-down direction.

According to this arrangement, the flow direction of the exhaust gas flowing in the catalyst portion is along the up-down direction. The length in the front-rear direction of the catalyst portion is therefore shorter than the length in the up-down direction of the catalyst portion. It is therefore possible to restrain the increase in size of the vehicle in the front-back direction when the catalyst portion is provided in front of the engine main body. The direction along the up-down direction is not limited to the direction in parallel to the up-down direction. This direction includes a direction tilted by +45 to -45 degrees with respect to the up-down direction.

(9) The straddled vehicle of the present teaching preferably includes the following features. The engine main body includes a crankshaft having a central axis along the left-right direction. When viewed in the left-right direction, at least a part of the catalyst portion is provided, in the front-rear direction, in front of a linear line which is orthogonal to the central axis of the cylinder hole and passes the central axis of the crankshaft.

According to this arrangement, the engine main body includes the crankshaft. The crankshaft has a central axis along the left-right direction. It is assumed that a linear line which is orthogonal to the central axis of the cylinder hole and passes the central axis of the crankshaft when viewed in the left-right direction is a linear line L2. When viewed in the left-right direction, at least a part of the catalyst portion is provided in front of the linear line L2. Due to this, the path length from the combustion chamber to the catalyst portion is short when compared to cases where the catalyst portion is entirely provided behind the linear line L2 when viewed in the left-right direction. For this reason, the temperature of the exhaust gas flowing into the main catalyst is further increased. As a result, at the cold start of the engine unit, the time required to activate the deactivated main catalyst is shortened. Due to this, the exhaust gas purification performance of the main catalyst is further improved.

(10) The straddled vehicle of the present teaching preferably includes the following feature. When viewed in the left-right direction, at least a part of the catalyst portion is provided straight below the scroll exhaust passage member in the up-down direction.

According to this arrangement, when viewed in the left-right direction, at least a part of the catalyst portion is provided straight below the scroll exhaust passage member. In other words, when viewed in the left-right direction, at least a part of the catalyst portion and at least a part of the scroll exhaust passage member are side by side in the up-down direction. The space where the catalyst portion and the turbocharger are provided is shortened in the front-rear direction. It is therefore possible to restrain the increase in size of the vehicle in the front-back direction.

(11) The straddled vehicle of the present teaching preferably includes the following feature. The catalyst portion is disposed so that the flow direction of the exhaust gas flowing in the catalyst portion is along a horizontal direction.

According to this arrangement, the flow direction of the exhaust gas flowing in the catalyst portion is along the horizontal direction. The length in the up-down direction of the catalyst portion is therefore shorter than the length in the front-rear direction of the catalyst portion. It is therefore possible to further restrain the increase in size of the vehicle in the up-down direction, even when the main catalyst is increased in size. The direction along the horizontal direction is not limited to the direction in parallel to the horizontal direction. This direction includes a direction tilted by +45 to -45 degrees with respect to the horizontal direction.

(12) The straddled vehicle of the present teaching preferably includes the following features. The engine main body includes a crankshaft having a central axis along the left-right direction and has cylinder holes each forming a part of the combustion chambers. When viewed in the left-right direction, at least a part of the catalyst portion is provided, in the front-rear direction, behind a linear line which is orthogonal to the central axis of the cylinder hole and passes the central axis of the crankshaft.

According to this arrangement, the engine main body includes a crankshaft and cylinder holes. The crankshaft has a central axis along the left-right direction. The cylinder hole forms a part of the combustion chamber. It is assumed that a linear line, which is orthogonal to the central axis of the cylinder hole and passes the central axis of the crankshaft when viewed in the left-right direction, is a linear line L2. When viewed in the left-right direction, at least a part of the catalyst portion is provided behind the linear line L2. The flow direction of exhaust gas flowing in the catalyst portion is along the horizontal direction. It is assumed that the entirety of such a catalyst portion is provided in front of the linear line L2 when viewed in the left-right direction. In this case, the front end of the catalyst portion may be significantly ahead of the front end of the engine main body. In this arrangement, it is necessary to increase the size of the vehicle in the front-back direction in order to provide for a sufficient distance between the front wheel unit and the catalyst portion. Due to this, as at least a part of the catalyst portion is provided behind the linear line L2 when viewed in the left-right direction, the increase in size of the vehicle in the front-back direction is restrained.

(13) The straddled vehicle of the present teaching preferably includes the following features. The engine unit includes an exhaust gas cooling passage member in which cooling medium for cooling the exhaust gas flows, at least a part of the exhaust gas cooling passage member being formed at an outer periphery of at least a part of the upstream collective exhaust passage member.

According to this arrangement, at least a part of the exhaust gas cooling passage member is formed at the outer periphery of at least a part of the upstream collective exhaust passage member. Due to this, the exhaust gas cooling passage member is downsized when compared to cases where the exhaust gas cooling passage member is not provided at the outer periphery of the upstream collective exhaust passage member but provided at the outer periphery of each of the independent exhaust passage members. It is therefore possible to restrain the increase in size of the vehicle in the up-down direction and the front-rear direction.

(14) The straddled vehicle of the present teaching preferably includes the following feature. The turbine wheel does not overlap the vehicle body frame when viewed in the left-right direction.

According to this arrangement, the turbine wheel does not overlap the vehicle body frame when viewed in the left-right direction. It is assumed that at least a part of the turbine wheel overlaps the vehicle body frame when viewed in the left-right direction. In such a case, the position of the turbocharger is high. When the position of the turbocharger is high, the vehicle is upsized in the up-down direction to provide for a space where the turbocharger is provided. Due to this, as the turbine wheel does not overlap the vehicle body frame when viewed in the left-right direction, the increase in size of the vehicle in the up-down direction is further restrained.

### [Brief Description of Drawings]

[FIG. 1] FIG. 1 is a right side view of a motorcycle of a First Embodiment.
[FIG. 2] FIG. 2 is a cross-section taken along a line II-II in FIG. 1.
[FIG. 3] FIG. 3 is a right side view of a part of an engine unit.
[FIG. 4] FIG. 4 is a front view of a part of the engine unit.
[FIG. 5] FIG. 5 is a schematic diagram of a part of the engine unit.
[FIG. 6] FIG. 6 is a cross-section of a turbocharger.
[FIG. 7] FIG. 7 is a side view of a turbocharger.
[FIG. 8] FIG. 8 is a right side view of a part of an engine unit of Modification 1.
[FIG. 9] FIG. 9 is a right side view of a motorcycle of a Second Embodiment.
[FIG. 10] FIG. 10 is a right side view of a part of an engine unit.
[FIG. 11] FIG. 11 is a front view of a part of the engine unit.
[FIG. 12] FIG. 12 is a right side view of a motorcycle of a Third Embodiment.
[FIG. 13] FIG. 13 is a right side view of a part of an engine unit.
[FIG. 14] FIG. 14 is a front view of a part of the engine unit.
[FIG. 15] FIG. 15 is a right side view of a part of an engine unit of a modification.
[FIG. 16] FIG. 16 is a cross-section of an upstream exhaust passage member of another modification.
[FIG. 17] FIG. 17 is a plan view of a part of the engine unit of another modification.
[FIG. 18] FIG. 18 is a front view of a part of the engine unit of another modification.
[FIG. 19] FIG. 19 is a cross-section of a part of a turbocharger of another modification. Description of Embodiments

### (First Embodiment)

The following will describe the First Embodiment of the present invention. The present embodiment is an example in which a straddled vehicle of the present teaching is embodied as a sports-type motorcycle. Hereinafter, a front-rear direction is a vehicle front-rear direction for a rider seated on a below-described seat 9 of a motorcycle 1. A left-right direction is a vehicle left-right direction for the rider seated on the seat 9. The vehicle left-right direction is identical to a vehicle width direction. In each figure, arrows F and B indicate forward and backward, respectively, arrows Land R indicate leftward and rightward, respectively, and arrows U and D indicate upward and downward, respectively. The present embodiment is described based on the definition of terms described at the end of this specification. The same applies to later-described embodiments and modifications.

### [Overall Structure of Motorcycle]

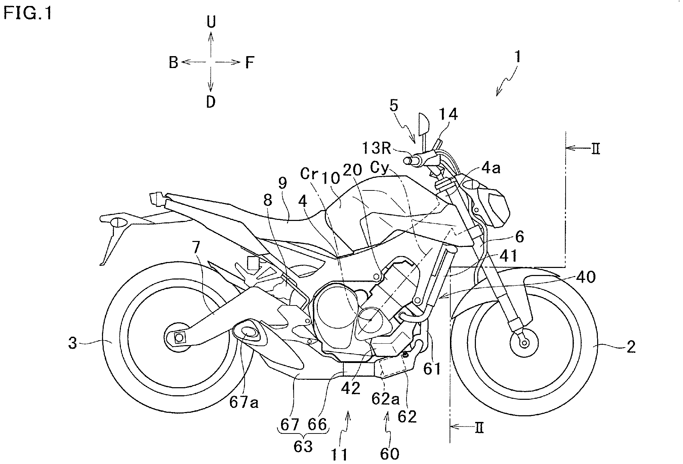

As shown in FIG. 1, the motorcycle 1 is provided with a front wheel unit 2, a rear wheel unit 3, and a vehicle body frame 4. The vehicle body frame 4 includes a head pipe 4a at a front portion. A steering shaft (not illustrated) is rotatably inserted into the head pipe 4a. An upper end portion of the steering shaft is connected to a handle unit 5. An upper end portion of a pair of front forks 6 is fixed to the handle unit 5. The lower end portions of the front forks 6 support the front wheel unit 2. The front forks 6 are configured to absorb shocks in the up-down direction. The front wheel unit 2 includes a single front wheel. An upper part of the front wheel unit 2 is covered with a fender. This fender is not included in the front wheel unit 2.

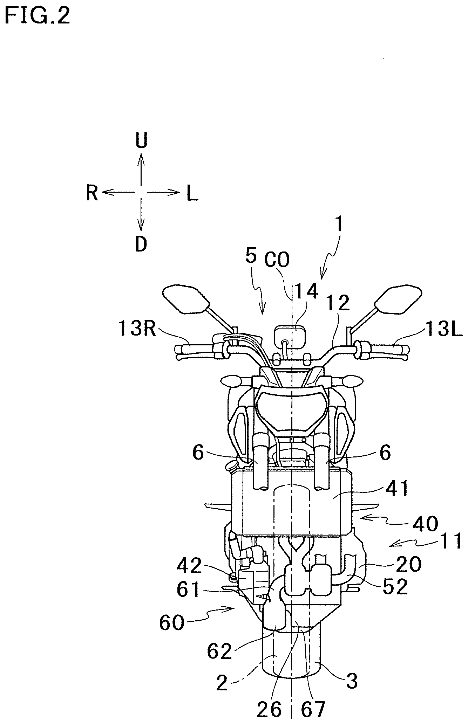

As shown in FIG. 2, the handle unit 5 includes a single handlebar 12 which extends in the left-right direction. Grips 13L and 13R are provided at left and right ends of the handlebar 12, respectively. The left grip 13R is a throttle grip for adjusting the output of the engine. A display 14 is attached to the handlebar 12. Although not illustrated, the display 14 displays vehicle speed, engine rotation speed, and the like. A warning lamp is provided on the display 14. Furthermore, switches are provided on the handlebar 12.

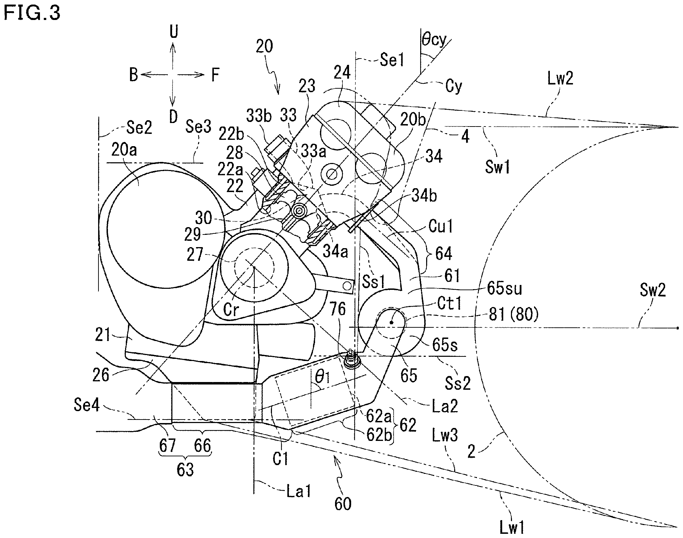

As shown in FIG. 1, a pair of swingarms 7 is swingably supported by the vehicle body frame 4. The rear end portions of the swingarms 7 support the rear wheel unit 3. The rear wheel unit 3 includes a single rear wheel. One end portion of a rear suspension 8 is attached to a part of each swingarm 7, which is rearward of the swing center. The other end portion of the rear suspension 8 is attached to the vehicle body frame 4. The rear suspension 8 is configured to absorb shocks in the up-down direction. FIG. 1, FIG. 2, and later-described FIG. 3 show a state in which the front forks 6 and the rear suspension 8 are maximally elongated in the up-down direction. In other words, the vehicle body frame 4 is at the highest relative to the front wheel unit 2 and the rear wheel unit 3.

The vehicle body frame 4 supports the seat 9 and the fuel tank 10. The fuel tank 10 is provided in front of the seat 9. The vehicle body frame 4 supports the engine unit 11. The engine unit 11 may be directly or indirectly connected to the vehicle body frame 4. The engine unit 11 is provided straight below the fuel tank 10. The engine unit 11 is provided below the upper end of the seat 9. The front wheel unit 2 is provided in front of the engine unit 11 when viewed in the left-right direction. The rear wheel unit 3 is provided behind the engine unit 11 when viewed in the left-right direction. As shown in FIG. 2, the width in the left-right direction of the engine unit 11 is longer than the width in the left-right direction of the front wheel unit 2. The width in the left-right direction of the engine unit 11 is longer than the width in the left-right direction of the rear wheel unit 3. In this specification, the width in the left-right direction indicates the maximum length in the left-right direction. The vehicle body frame 4 supports a battery (not illustrated). The battery supplies electric power to electronic devices such as a controller (not illustrated) for controlling the engine unit 11 and sensors.

### [Structure of Engine Unit]

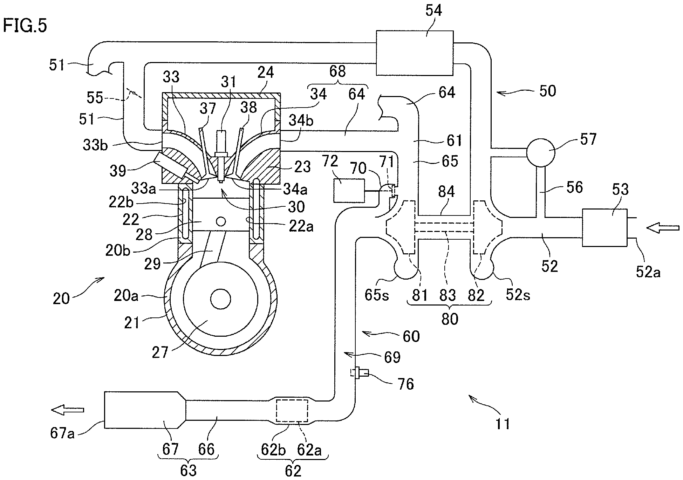

As shown in FIG. 1, the engine unit 11 includes an engine main body 20, a water cooling device 40, an exhaust passage member 60, and a turbocharger 80. Furthermore, as shown in FIG. 5, the engine unit 11 further includes an intake passage member 50. The engine main body 20 is connected to the water cooling device 40, the intake passage member 50, and the exhaust passage member 60. The engine unit 11 is a two-cylinder engine having two cylinders. The engine unit 11 is a 4-stroke engine. The 4-stroke engine repeats an intake process, a compression process, a combustion process (expansion process), and an exhaust process. The combustion process in the two-cylinder engine is performed at different timings in the respective two cylinders. FIG. 5 shows only one of the two cylinders of the engine main body 20 and does not show the remaining cylinder.

The engine unit 11 is a water-cooled engine. The engine main body 20 is cooled by coolant water. To the water cooling device 40, hot coolant water having absorbed heat from the engine main body 20 is supplied from the engine main body 20. The water cooling device 40 decreases the temperature of the coolant water supplied from the engine main body 20 and returns the coolant water to the engine main body 20. The water cooling device 40 includes a radiator 41, a radiator fan (not illustrated), and a reserve tank 42. The radiator 41 is provided in front of an upper part of the engine main body 20. The radiator fan is provided between the engine main body 20 and the radiator 41. The reserve tank 42 is provided in front of a lower part of the engine main body 20. The reserve tank 42 is provided in front of a right part of the engine main body 20. The reserve tank 42 may not be provided in front of a right part of the engine main body 20. The engine unit 11 includes a water pump (not illustrated) for circulating the coolant water. This water pump is provided in the engine main body 20.

### [Structure of Engine Main Body]

As shown in FIG. 3, the engine main body 20 includes a crankcase member 20a and a cylinder portion 20b. The crankcase member 20a is provided at a lower part of the engine main body 20. The cylinder portion 20b is provided at an upper part of the engine main body 20. The cylinder portion 20b is connected to an upper end portion of the crankcase member 20a.

The crankcase member 20a includes a crankcase 21 and an oil pan 26. The crankcase member 20a is further provided with a crankshaft 27 housed in the crankcase 21. Although not illustrated, the crankcase member 20a includes a transmission, a clutch, a starter motor, and a power generator. These members are also housed in the crankcase 21. Hereinafter, the central axis Cr of the crankshaft 27 is referred to as a crankshaft axis Cr. The crankshaft axis Cr is along the left-right direction. To be more specific, the crankshaft axis Cr is in parallel to the left-right direction.

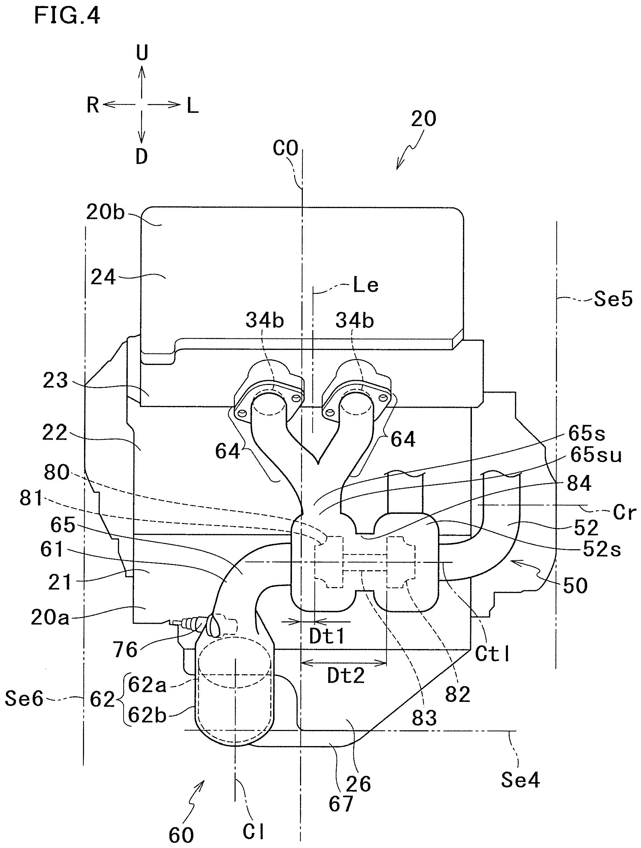

The oil pan 26 is provided at a lower part of the crankcase member 20a. The oil pan 26 is connected to a lower end of the crankcase 21. As shown in FIG. 4, a right part of the oil pan 26 is dented. In other words, the right part of the oil pan 26 is above the left part of the oil pan 26. A part of the exhaust passage member 60 is provided in the dent of the oil pan 26. The oil pan 26 stores lubrication oil. The crankcase member 20a includes an oil pump (not illustrated) which is configured to suck the lubrication oil stored in the oil pan 26.

As shown in FIG. 3, the cylinder portion 20b includes a cylinder body 22, a cylinder head 23, and a head cover 24. The cylinder body 22 is connected to an upper end portion of the crankcase 21. The cylinder head 23 is connected to an upper end portion of the cylinder body 22. The head cover 24 is connected to an upper end portion of the cylinder head 23.

As shown in FIG. 3 and FIG. 5, cylinder holes 22a are formed in the cylinder body 22. Two cylinder holes 22a are formed in the cylinder body 22. The two cylinder holes 22a are side by side in the left-right direction. A piston 28 is slidably housed in each cylinder hole 22a. The two pistons 28 are connected to a single crankshaft 27 via two connecting rods 29. Around the two cylinder holes 22a, a cooling passage 22b is formed to allow the coolant water to flow therein.

Hereinafter, the central axis Cy of the cylinder hole 22a is referred to as a cylinder axial line Cy. The two cylinder axial lines Cy are in parallel to one another. When viewed in the left-right direction, the two cylinder axial lines Cy overlap. As shown in FIG. 3, the cylinder axial lines Cy do not intersect with the crankshaft axis Cr. The cylinder axial lines Cy may intersect with the crankshaft axis Cr. The cylinder axial lines Cy are along the up-down direction. When viewed in the left-right direction, each cylinder axial line Cy is inclined in the front-rear direction with respect to the up-down direction. The cylinder axial line Cy is inclined so that the cylinder portion 20b is inclined forward. In other words, the cylinder axial line Cy is inclined with a positive slope in the forward direction. When viewed in the left-right direction, an inclination angle of the cylinder axial line Cy with respect to the up-down direction is termed an inclination angle θcy. The inclination angle θcy is not limited to the angle shown in FIG. 3. The inclination angle θcy is 0 degrees or greater than 0 degrees and 45 degrees or less than 45 degrees. The inclination angle θcy may be greater than 45 degrees. In other words, the cylinder axial line Cy may be along the front-rear direction.

As shown in FIG. 3 and FIG. 5, combustion chambers 30 are formed in the cylinder portion 20b. Two combustion chambers 30 are formed in the cylinder member 20b. The two combustion chambers 30 are side by side in the left-right direction. Each combustion chamber 30 is formed of the lower surface of the cylinder head 23, the cylinder hole 22a, and the upper surface of the piston 28. In other words, a part of the combustion chamber 30 is formed by the inner surface of the cylinder hole 22a. As shown in FIG. 3, it is assumed that a linear line which passes the crankshaft axis Cr and is in parallel to the up-down direction when viewed in the left-right direction is a linear line La1. When viewed in the left-right direction, the two combustion chambers 30 are provided in front of the linear line La1. In other words, when viewed in the left-right direction, the two combustion chambers 30 are provided forward of the crankshaft axis Cr.

A leading end portion of an ignition plug 31 is provided in the combustion chamber 30, as shown in FIG. 5. Spark discharge occurs at the leading end portion of the ignition plug 31. With this spark discharge, air-fuel mixture in the combustion chamber 30 is ignited. In this specification, the air-fuel mixture indicates a mixture of air and fuel. The ignition plug 31 is connected to an ignition coil (not illustrated). The ignition coil stores electric power to cause spark discharge of the ignition plug 31. The ignition plug 31 and the ignition coil constitute an ignition device.

Internal intake passage members 33 and internal exhaust passage members 34 are formed in the cylinder head 23. In this specification, a passage member is a structure forming a path. A path is a space through which gas or the like passes. The internal intake passage member 33 is connected to the combustion chamber 30. The internal intake passage member 33 is provided for each combustion chamber 30. The internal exhaust passage member 34 is connected to the combustion chamber 30. The internal exhaust passage member 34 is provided for each combustion chamber 30. The internal intake passage member 33 is provided to introduce air into the combustion chamber 30. The internal exhaust passage member 34 is provided to discharge the exhaust gas generated in the combustion chamber 30 from the combustion chamber 30.

A combustion chamber intake port 33a and a combustion chamber exhaust port 34a are formed in surfaces of the cylinder head 23 which form the combustion chamber 30. The combustion chamber intake port 33a is at the downstream end of the internal intake passage member 33. The combustion chamber exhaust port 34a is at the upstream end of the internal exhaust passage member 34. Intake ports 33b and exhaust ports 34b are formed in an outer surface of the cylinder head 23. The intake port 33b is at the upstream end of the internal intake passage member 33. The exhaust port 34b is at the downstream end of the internal exhaust passage member 34. The number of combustion chamber intake ports 33a provided for one combustion chamber 30 may be one, two, or more than two. The number of intake ports 33b is only one for one combustion chamber 30. For example, when two combustion chamber intake ports 33a are provided for one combustion chamber 30, the internal intake passage member 33 is formed to be branched into two. The number of combustion chamber exhaust ports 34a provided for one combustion chamber 30 may be one, two, or more than two. The number of exhaust ports 34b is only one for one combustion chamber 30. As shown in FIG. 3, the intake ports 33b are formed in the front surface of the cylinder head 23. The exhaust ports 34b are formed in the front surface of the cylinder head 23. As shown in FIG. 4, the two exhaust ports 34b are arranged to be side by side along the left-right direction.

As shown in FIG. 5, in the internal intake passage member 33, an intake valve 37 is provided to open and close the combustion chamber intake port 33a. The intake valve 37 is provided for each combustion chamber intake port 33a. In the internal exhaust passage member 34, an exhaust valve 38 is provided to open and close the combustion chamber exhaust port 34a. The exhaust valve 38 is provided for each combustion chamber exhaust port 34a. The intake valve 37 and the exhaust valve 38 are driven by a valve driving device (not illustrated) housed in the cylinder head 23. The valve driving device operates in sync with the crankshaft 27. The valve driving device may include a variable valve timing device. A known device is used as the variable valve timing device. The variable valve timing device is configured to change the timings to open and close the intake valve and/or the exhaust valve.

The engine main body 20 includes injectors 39. Each injector 39 is a fuel supplier configured to supply fuel to the combustion chamber 30. The injector 39 is provided for each combustion chamber 30. The injector 39 is positioned to inject fuel in the combustion chamber 30. The injector 39 is equivalent to a fuel injector of the present teaching. The injector 39 is connected to the fuel tank 10. A low-pressure pump (not illustrated) is provided inside the fuel tank 10. In addition to this, the engine unit 11 includes a high-pressure pump (not illustrated). The low-pressure pump sucks and pressure-supplies fuel in the fuel tank 10. The high-pressure pump further pressurizes the fuel pressurized by the low-pressure pump. The fuel pressurized by the high-pressure pump is supplied to the injector 39. Due to this, the injector 39 is allowed to inject the fuel into the combustion chamber 30 in spite of the pressure in the combustion chamber 30. The injector 39 may be positioned to inject fuel in the internal intake passage member 33. Alternatively, the injector 39 may be positioned to inject fuel in a later-described branched intake passage member 51 of the intake passage member 50.

As the injector 39 injects fuel in the combustion chamber 30, the temperature of the combustion chamber 30 is lowered on account of the heat of evaporation of the fuel. When compared to the injection of the fuel in the internal intake passage member 33 or the intake passage member 50, the temperature of the combustion chamber 30 is lowered. Due to this, knocking is less likely to occur even if the compression ratio increases. This allows the compression ratio to be increased. Increase in the compression ratio improves the fuel consumption. The knocking is a phenomenon in which metallic pinging sounds or pinging vibrations occur due to abnormal combustion in the combustion chamber 30. Typically, combustion of air-fuel mixture is started by ignition due to spark discharge, and the flame of the burning air-fuel mixture propagates in the combustion chamber. This air-fuel mixture is a mixture of air and fuel. Knocking is caused by spontaneous ignition of unburned air-fuel mixture, to which the flame propagation does not extend, in the combustion chamber 30. The compression ratio is a value obtained by dividing the volume of the combustion chamber 30 at the time when the piston 28 is at the bottom dead center by the volume of the combustion chamber 30 at the time when the piston 28 is at the top dead center.

### [Structure of Intake passage Member]

As shown in FIG. 5, the intake passage member 50 includes one main intake passage member 52 and two branched intake passage members 51. Hereinafter, the upstream and downstream in the flow direction of air of the intake passage member 50 and the internal intake passage member 33 will be simply referred to as upstream and downstream. The main intake passage member 52 is provided with an atmosphere suction port 52a which is exposed to the atmosphere. The atmosphere suction port 52a is at the upstream end of the main intake passage member 52. The downstream end of the main intake passage member 52 is connected to the upstream ends of the two branched intake passage members 51. The downstream ends of the two branched intake passage members 51 are connected to the two intake ports 33b formed in the rear surface of the cylinder head 23, respectively. The atmosphere suction port 52a sucks air from the atmosphere. The air flowing into the main intake passage member 52 through the atmosphere suction port 52a is supplied to the engine main body 20 via the two branched intake passage members 51.

The main intake passage member 52 is provided with an air cleaner 53 configured to purify air. A compressor wheel 82 of the turbocharger 80 is provided in the main intake passage member 52. The compressor wheel 82 is provided downstream of the air cleaner 53. As detailed later, the Clean copy compressor wheel 82 is configured to compress air. The bypass intake passage member 56 is connected to the main intake passage member 52 so as to bypass the compressor wheel 82. A blow-off valve 57 is provided on the bypass intake passage member 56. This blow-off valve 57 is provided to adjust the flow rate of the air supplied to the engine main body 20. Opening and closing of the blow-off valve 57 are controlled by a controller (not illustrated). The blow-off valve 57 is, for example, an electromagnetic valve. The bypass intake passage member 56 and the blow-off valve 57 may not be provided.

An intercooler 54 is provided on the main intake passage member 52. The intercooler 54 is provided downstream of the compressor wheel 82. The air compressed by the compressor wheel 82 flows into the intercooler 54. The intercooler 54 is configured to cool the air which is increased in temperature due to the compression. With this, the density of the air supplied to the engine main body 20 is increased and hence the intake efficiency is improved. The intercooler 54 may be an air-cooled type or a water-cooled type. The air-cooled intercooler 54 is provided at a position onto which the air is blown during the running. The air flowing in the main intake passage member 52 is cooled by the air blown onto the intercooler 54 during the running. The water-cooled intercooler 54 includes a coolant water passage in which coolant water flows. The air flowing in the main intake passage member 52 is cooled by the coolant water flowing in the coolant water passage. The water-cooled intercooler 54 requires a sub radiator for cooling the coolant water. The coolant water is different from the coolant water for lubricating the water cooling device 40 and the engine main body 20. The sub radiator is provided at a position onto which the air is blown during the running.

A throttle valve 55 is provided in the branched intake passage member 51. One throttle valve 55 is provided for each combustion chamber 30. The opening degree of the throttle valve 55 is changed as the rider rotationally operates the throttle grip 13R.

### [Structures of Exhaust Passage Member and Turbocharger]

As shown in FIG. 5, the exhaust passage member 60 includes an upstream exhaust passage member 61, a catalyst portion (catalytic converter) 62, and a downstream collective exhaust passage member 63. Hereinafter, the upstream and downstream in the flow direction of exhaust gas of the exhaust passage member 60 and the internal exhaust passage member 34 will be simply referred to as upstream and downstream. The upstream exhaust passage member 61 includes two independent exhaust passage members 64 and an upstream collective exhaust passage member 65. One independent exhaust passage member 64 is provided for each combustion chamber 30. The downstream collective exhaust passage member 63 includes a downstream exhaust passage member 66 and a muffler member 67. The upstream ends of the two independent exhaust passage members 64 are connected to the two exhaust ports 34b formed in the front surface of the cylinder head 23, respectively. The downstream ends of the two independent exhaust passage members 64 are connected to the upstream end of the upstream collective exhaust passage member 65. The upstream collective exhaust passage member 65 gathers (merges) flows of the exhaust gas discharged from the two independent exhaust passage members 64. The downstream end of the upstream collective exhaust passage member 65 is connected to the upstream end of the catalyst portion 62. The catalyst portion 62 includes a main catalyst 62a which is configured to purify exhaust gas. The downstream end of the catalyst portion 62 is connected to the upstream end of the downstream exhaust passage member 66. The downstream end of the downstream exhaust passage member 66 is connected to the upstream end of the muffler member 67. The muffler member 67 has an atmosphere discharge port 67a exposed to the atmosphere. The exhaust gas discharged from the two exhaust ports 34b of the engine main body 20 passes the upstream exhaust passage member 61 and flows into the catalyst portion 62. After the exhaust gas is purified while passing through the main catalyst 62a, the exhaust gas passes the downstream collective exhaust passage member 63 and is discharged from the atmosphere discharge port 67a. The independent exhaust passage member 64 is equivalent to an external independent exhaust passage member of the present teaching. The upstream collective exhaust passage member 65 is equivalent to an external upstream collective exhaust passage member of the present teaching.

A passage member including the internal exhaust passage member 34 and the independent exhaust passage member 64 will be referred to as an independent exhaust passage member 68. One independent exhaust passage member 68 is provided for each combustion chamber 30. Furthermore, a passage from the combustion chamber 30 to the atmosphere discharge port 67a will be referred to as an exhaust path 69. The engine unit 11 is provided with two exhaust paths 69. The exhaust path 69 is a space in which the exhaust gas discharged from one combustion chamber 30 passes. The exhaust path 69 is formed of the independent exhaust passage member 68, the upstream collective exhaust passage member 65, the catalyst portion 62, and the downstream collective exhaust passage member 63. To put it differently, the exhaust path 69 is formed of the internal exhaust passage member 34, the upstream exhaust passage member 61, the catalyst portion 62, and the downstream collective exhaust passage member 63.

As shown in FIG. 5, the turbocharger 80 includes a turbine wheel 81 and a compressor wheel 82. The turbine wheel 81 is provided in the upstream collective exhaust passage member 65 of the exhaust passage member 60. The compressor wheel 82 is provided in the main intake passage member 52 of the intake passage member 50. As shown in FIG. 4, the turbine wheel 81 is provided to the right of the compressor wheel 82.

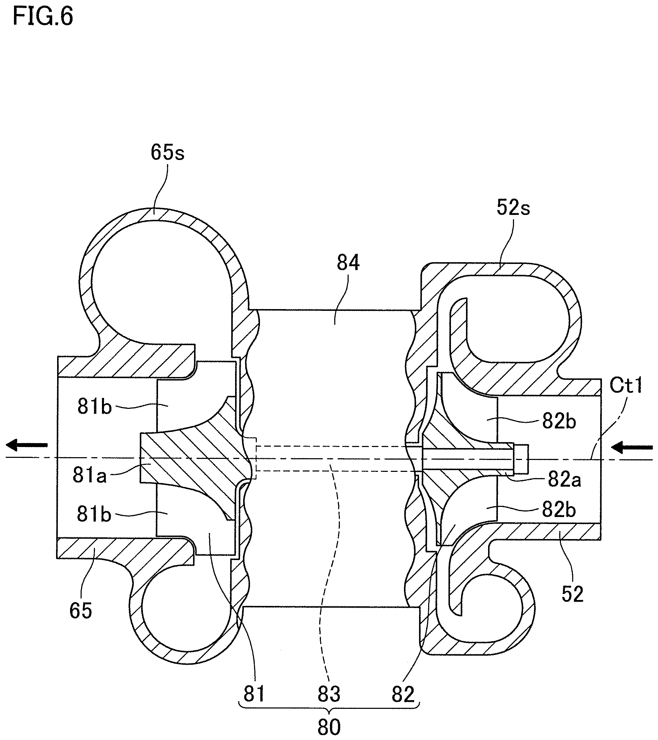

As shown in FIG. 6, the turbine wheel 81 is connected to the compressor wheel 82 via the connecting shaft 83. The connecting shaft 83 is housed in a center housing 84. The center housing 84 is connected to the upstream collective exhaust passage member 65 and the main intake passage member 52. The connecting shaft 83 is rotatably supported by the center housing 84 via an unillustrated bearing. The central axis of the connecting shaft 83 is referred to as a central axis Ct1. The turbine wheel 81 and the compressor wheel 82 are rotatable about the central axis Ct. As shown in FIG. 3 and FIG. 4, the central axis Ct1 is along the left-right direction. To be more specific, the central axis Ct1 is substantially in parallel to the left-right direction. The central axis of a part of the upstream collective exhaust passage member 65, the part where the turbine wheel 81 is provided, is coaxial with the central axis Ct1. The central axis of a part of the main intake passage member 52, the part where the turbine wheel 81 is provided, is coaxial with the central axis Ct1.

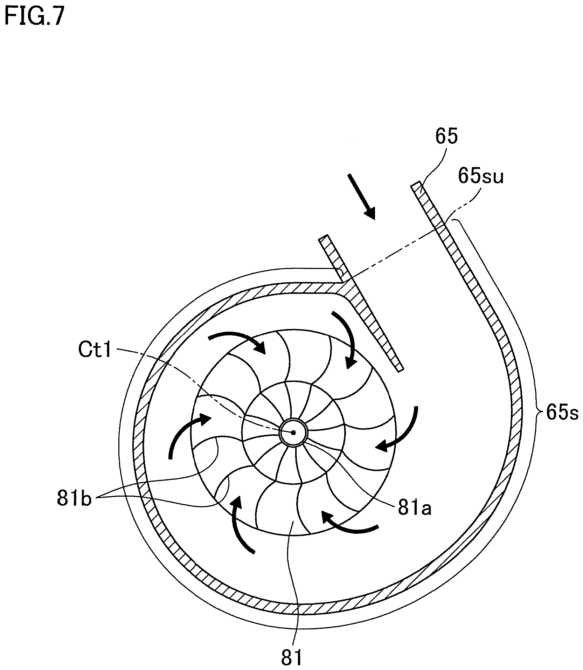

As shown in FIG. 6, the turbine wheel 81 includes a shaft portion 81a and blades 81b provided on the outer circumferential surface of the shaft portion 81a. As shown in FIG. 7, the blades 81b are radially provided. The compressor wheel 82 includes a shaft portion 82a and blades 82b provided on the outer circumferential surface of the shaft portion 82a. The blades 82b are radially provided. The maximum diameter of the turbine wheel 81 is identical to or longer than the maximum diameter of the compressor wheel 82. The maximum diameter of the turbine wheel 81 may be shorter than the maximum diameter of the compressor wheel 82.

As shown in FIG. 6 and FIG. 7, the upstream collective exhaust passage member 65 includes a scroll exhaust passage member 65s. The scroll exhaust passage member 65s is formed to wholly surround the outer circumference of the turbine wheel 81. As shown in FIG. 6, the main intake passage member 52 includes a scroll intake passage member 52s. The scroll intake passage member 52s is formed to wholly surround the outer circumference of the compressor wheel 82. As shown in FIG. 7, when viewed in the direction along the central axis Ct1, the outline of the scroll exhaust passage member 65s is not a perfect circle centered at the central axis Ct1. In other words, the lengths from the central axis Ct1 to the outer surface of the scroll exhaust passage member 65s are not constant. The same applies to the scroll intake passage member 52s. The maximum length from the central axis Ct1 to the outer surface of the scroll exhaust passage member 65s is substantially identical to the maximum length from the central axis Ct1 to the outer surface of the scroll intake passage member 52s. The scroll exhaust passage member 65s is provided upstream of the turbine wheel 81. The scroll intake passage member 52s is provided downstream of the compressor wheel 82. The scroll exhaust passage member 65s may not be an independent member. For this reason, an upstream end 65su of the scroll exhaust passage member 65s may not be an end portion of a member. Being similar to the scroll exhaust passage member 65s, the scroll intake passage member 52s may not be an independent member.

The exhaust gas in the scroll exhaust passage member 65s is blown onto the outer periphery of the turbine wheel 81. As a result of this, the turbine wheel 81 rotates. The exhaust gas blown onto the outer periphery of the turbine wheel 81 is discharged from the turbine wheel 81 in the direction along the central axis Ct1. In accordance with the rotation of the turbine wheel 81, the compressor wheel 82 rotates. As a result, the compressor wheel 82 sucks air in the direction along the central axis Ct1. The compressor wheel 82 compresses the sucked air and discharges the air from the outer periphery. The compressed air discharged from the outer periphery of the compressor wheel 82 flows into the scroll intake passage member 52s. The compressed air is then cooled by the intercooler 54 and supplied to the combustion chamber 30. As the compressed air is supplied to the combustion chamber 30, the intake efficiency is improved. As a result, the output of the engine is improved. Furthermore, because compressed air is supplied to the combustion chamber 30, the cubic capacity of the engine main body 20 can be decreased. As a result, the fuel consumption is improved and the engine main body 20 is downsized. As the engine main body 20 is downsized, the increase in size of the vehicle is restrained.

As shown in FIG. 5, the upstream collective exhaust passage member 65 is connected to a bypass exhaust passage member 70 which bypasses the turbine wheel 81. The bypass exhaust passage member 70 may be formed at the outer surface of the scroll exhaust passage member 65s. FIG. 3 and FIG. 4 do not show the bypass exhaust passage member 70. A waste gate valve 71 is provided in the bypass exhaust passage member 70. This waste gate valve 71 is provided to adjust the flow rate of the exhaust gas supplied to the turbine wheel 81. Opening and closing of the waste gate valve 71 are controlled by an electric actuator 72. The electric actuator 72 is driven by an unillustrated motor. The bypass exhaust passage member 70 and the waste gate valve 71 may not be provided.

As shown in FIG. 3, the scroll exhaust passage member 65s and the scroll intake passage member 52s are provided below the exhaust port 34b. As a matter of course, the turbine wheel 81 is provided below the exhaust port 34b. A plane which passes the rearmost end of the scroll exhaust passage member 65s and is orthogonal to the front-rear direction is termed a plane Ss1. At least a part of the exhaust port 34b is behind the plane Ss1. In other words, at least a part of the exhaust port 34b is rearward of the scroll exhaust passage member 65s. Furthermore, at least a part of the exhaust port 34b is rearward of the scroll intake passage member 52s. The turbine wheel 81 is provided forward of the exhaust port 34b. Only a part of the turbine wheel 81 may be provided forward of the exhaust port 34b. At least a part of the turbine wheel 81 is preferably provided forward of the exhaust port 34b.

As shown in FIG. 3, the upstream end 65su of the scroll exhaust passage member 65s is formed at an upper part of the scroll exhaust passage member 65s. The upstream end 65su of the scroll exhaust passage member 65s is positioned below the exhaust port 34b. The upstream end 65su of the scroll exhaust passage member 65s is positioned forward of the exhaust port 34b. At the upstream end 65su of the scroll exhaust passage member 65s, the flow direction of the exhaust gas is along the up-down direction. When viewed in the left-right direction, the flow direction of the exhaust gas from the upstream end of the exhaust passage member 60 to the scroll exhaust passage member 65s is inclined with a negative slope in the forward direction. In the scroll exhaust passage member 65s, the exhaust gas flows in the circumferential direction and in the radially inward direction. The downstream end of the scroll exhaust passage member 65s is formed at a central part of the scroll exhaust passage member 65s. As shown in FIG. 4, the downstream end of the scroll intake passage member 52s is formed at an upper part of the scroll intake passage member 52s. The downstream end of the scroll intake passage member 52s may be formed at a lower part of the scroll intake passage member 52s. The downstream end of the scroll intake passage member 52s may be formed at a rear part or a front part of the scroll intake passage member 52s. Air flows inside the scroll intake passage member 52s in the circumferential direction and in the radially inward direction. The upstream end of the scroll intake passage member 52s is formed at a central part of the scroll intake passage member 52s.

As shown in FIG. 3, an axis passing the center of the exhaust port 34b when viewed in the left-right direction is a central axis Cu1. The direction of the central axis Cu1 is identical to the flow direction of the exhaust gas at the exhaust port 34b. When viewed in the left-right direction, the scroll exhaust passage member 65s and the scroll intake passage member 52s are provided straight below the central axis Cu1. As a matter of course, the turbine wheel 81 is provided straight below the central axis Cu1 when viewed in the left-right direction. A part of the scroll exhaust passage member 65s may be provided straight above the central axis Cu1 when viewed in the left-right direction. At least a part of the scroll exhaust passage member 65s is preferably provided straight below the central axis Cu1. Similarly, at least a part of the scroll intake passage member 52s is preferably provided straight below the central axis Cu1.

As shown in FIG. 3, at least a part of the scroll exhaust passage member 65s is provided straight below the engine main body 20 when viewed in the left-right direction. When viewed in the left-right direction, at least a part of the scroll intake passage member 52s is provided straight below the engine main body 20. When viewed in the left-right direction, at least a part of the turbine wheel 81 is provided straight below the engine main body 20. A plane which passes the frontmost end of the crankcase member 20a and is orthogonal to the front-rear direction is termed a plane Se1. The scroll exhaust passage member 65s and the scroll intake passage member 52s are provided in front of the plane Se1. In other words, the scroll exhaust passage member 65s and the scroll intake passage member 52s are provided forward of the crankcase member 20a. As shown in FIG. 3, a plane which passes the uppermost end of the crankcase member 20a and is orthogonal to the up-down direction is termed a plane Se3. A plane which passes the rearmost end of the crankcase member 20a and is orthogonal to the up-down direction is termed a plane Se4. The scroll exhaust passage member 65s and the scroll intake passage member 52s are provided between the plane Se3 and the plane Se4. When viewed in the left-right direction, the scroll exhaust passage member 65s and the scroll intake passage member 52s are provided in front of the crankcase member 20a. As a matter of course, the turbine wheel 81 is provided in front of the crankcase member 20a when viewed in the left-right direction.

As shown in FIG. 4, a plane which passes the leftmost end of the engine main body 20 and is orthogonal to the left-right direction is termed a plane Se5. The plane Se5 passes the leftmost end of the crankcase member 20a. A plane which passes the rightmost end of the engine main body 20 and is orthogonal to the left-right direction is termed a plane Se6. The plane Se6 passes the rightmost end of the crankcase member 20a. The scroll exhaust passage member 65s and the scroll intake passage member 52s are provided between the plane Se5 and the plane Se6. When viewed in the front-back direction, the scroll exhaust passage member 65s and the scroll intake passage member 52s overlap the crankcase member 20a. As a matter of course, the turbocharger 80 overlaps the crankcase member 20a when viewed in the front-back direction. When viewed in the front-rear direction, at least a part of the scroll intake passage member 52s may not overlap the engine main body 20. Furthermore, when viewed in the front-rear direction, a part of the scroll exhaust passage member 65s may not overlap the engine main body 20. When viewed in the front-rear direction, at least a part of the scroll exhaust passage member 65s preferably overlaps the engine main body 20. The scroll exhaust passage member 65s and the scroll intake passage member 52s are provided in front of the crankcase member 20a. As a matter of course, the turbocharger 80 is provided in front of the crankcase member 20a. A part of the scroll exhaust passage member 65s may not be provided in front of the crankcase member 20a. At least a part of the scroll intake passage member 52s may not be provided in front of the crankcase member 20a.

As shown in FIG. 3, when viewed in the left-right direction, the scroll exhaust passage member 65s and the scroll intake passage member 52s are provided in front of the linear line La1. In other words, the scroll exhaust passage member 65s and the scroll intake passage member 52s are provided forward of the crankshaft axis Cr. A linear line which is orthogonal to the cylinder axial line Cy and passes the crankshaft axis Cr when viewed in the left-right direction is termed a linear line La2. When viewed in the left-right direction, the scroll exhaust passage member 65s and the scroll intake passage member 52s are provided in front of (straight above) the linear line La2. When viewed in the left-right direction, only a part of the scroll exhaust passage member 65s may be provided in front of the linear line La2. When viewed in the left-right direction, at least a part of the scroll exhaust passage member 65s is preferably provided in front of the linear line La2. Being similar to the scroll exhaust passage member 65s, when viewed in the left-right direction, at least a part of the scroll intake passage member 52s is preferably provided in front of the linear line La2. The scroll intake passage member 52s and the scroll intake passage member 52s are provided below the crankshaft axis Cr. At least a part of the scroll exhaust passage member 65s may be provided above the crankshaft axis Cr. At least a part of the scroll intake passage member 52s may be provided above the crankshaft axis Cr.

As shown in FIG. 3, when viewed in the left-right direction, the scroll exhaust passage member 65s and the scroll intake passage member 52s do not overlap the vehicle body frame 4. As a matter of course, the turbine wheel 81 does not overlap the vehicle body frame 4 when viewed in the left-right direction. The shape of the vehicle body frame 4 is not limited to the shape shown in FIG. 1.

As shown in FIG. 3, a line segment, which is the lowest one of line segments connecting points on the outline of the engine main body 20 with points on the outline of the front wheel unit 2 when viewed in the left-right direction, is referred to as a line segment Lw1. The line segment Lw1 connects the lowermost end of the engine main body 20 with a position in the vicinity of the lowermost end of the front wheel unit 2. When viewed in the left-right direction, the scroll exhaust passage member 65s and the scroll intake passage member 52s are provided straight above the line segment Lw1. A line segment, which is the highest one of line segments connecting points on the outline of the engine main body 20 with points on the outline of the front wheel unit 2 when viewed in the left-right direction, is referred to as a line segment Lw2. The line segment Lw2 connects the uppermost end of the engine main body 20 with the uppermost end of the front wheel unit 2 or a position in the vicinity of the uppermost end of the front wheel unit 2. When viewed in the left-right direction, the scroll exhaust passage member 65s and the scroll intake passage member 52s are provided straight below the line segment Lw2. When viewed in the left-right direction, the scroll exhaust passage member 65s and the scroll intake passage member 52s are provided inside a rectangular region having the line segment Lw1 and the line segment Lw2 as two sides. The quadrangle having the line segment Lw1 and the line segment Lw2 as two sides can be rephrased as a quadrangle in which apexes thereof are the ends of the line segment Lw1 and the ends of the line segment Lw2. When viewed in the left-right direction, the scroll exhaust passage member 65s and the scroll intake passage member 52s are provided inside the above-described quadrangle and do not overlap the engine main body 20. In other words, when viewed in the left-right direction, the scroll exhaust passage member 65s and the scroll intake passage member 52s are provided between the engine main body 20 and the front wheel unit 2. When viewed in the left-right direction, only a part of the scroll exhaust passage member 65s may be provided between the engine main body 20 and the front wheel unit 2. For example, when viewed in the left-right direction, a part of the scroll exhaust passage member 65s may overlap the engine main body 20. When viewed in the left-right direction, at least a part of the scroll exhaust passage member 65s is preferably provided between the engine main body 20 and the front wheel unit 2. Being similar to the scroll exhaust passage member 65s, when viewed in the left-right direction, at least a part of the scroll intake passage member 52s is preferably provided between the engine main body 20 and the front wheel unit 2. When the front forks 6 and/or the rear suspension 8 expands and contracts, the relative position of the vehicle body frame 4 relative to the front wheel unit 2 is changed. The relative position of the engine unit 11 relative to the front wheel unit 2 is therefore changed. When viewed in the left-right direction, at least a part of the catalyst portion 62 is provided between the engine main body 20 and the front wheel unit 2 as described above. This, however, does not indicate that at least a part of the catalyst portion 62 is always provided in this way irrespective of the position of the engine unit 11 relative to the front wheel unit 2. This indicates that at least a part of the catalyst portion 62 is provided between the engine main body 20 and the front wheel unit 2 when viewed in the left-right direction when the position of the engine unit 11 is within a particular range relative to the front wheel unit 2.

As shown in FIG. 3, a horizontal plane passing the upper end of the front wheel unit 2 is termed a horizontal plane Sw1. The scroll exhaust passage member 65s and the scroll intake passage member 52s are provided below the horizontal plane Sw1. As a matter of course, the turbine wheel 81 is provided below the horizontal plane Sw1. In the present specification, a definition that a part of a member or a component is provided below the horizontal plane Sw1 indicates that the part is provided below the horizontal plane Sw1 when the position of the engine unit 11 is within a particular range relative to the front wheel unit 2.

As shown in FIG. 3, a horizontal plane passing the center of the front wheel unit 2 is termed a horizontal plane Sw2. The horizontal plane Sw2 passes the scroll exhaust passage member 65s and the scroll intake passage member 52s. The entirety of the scroll exhaust passage member 65s may be provided above the horizontal plane Sw2. To put it differently, at least a part of the scroll exhaust passage member 65s may be provided above the horizontal plane Sw2. The entirety of the scroll exhaust passage member 65s may be provided below the horizontal plane Sw2. To put it differently, at least a part of the scroll exhaust passage member 65s may be provided below the horizontal plane Sw2. The same applies to the scroll intake passage member 52s. At least a part of the turbine wheel 81 is provided above the horizontal plane Sw2. At least a part of the turbine wheel 81 may be provided below the horizontal plane Sw2. In the present specification, a definition that a part of a member or a component is provided below or above the horizontal plane Sw2 indicates that the part is provided below or above the horizontal plane Sw2 when the position of the engine unit 11 is within a particular range relative to the front wheel unit 2.

As shown in FIG. 4, the scroll exhaust passage member 65s and the scroll intake passage member 52s are provided at a left part of the motorcycle 1. It is assumed that a plane which passes the center in the left-right direction of the front wheel unit 2 and the rear wheel unit 3 is C0. The center in the left-right direction of the front wheel unit 2 and the rear wheel unit 3 is the center in the left-right direction of the motorcycle 1. Hereinafter, the center in the left-right direction of the motorcycle 1 will be referred to as the center C0 in the left-right direction of the motorcycle 1. The turbocharger 80 is provided to the left of the center C0 in the left-right direction of the motorcycle 1. The distance between the center C0 in the left-right direction of the motorcycle 1 and the turbine wheel 81 is termed a distance Dt1. The distance between the center C0 in the left-right direction of the motorcycle 1 and the compressor wheel 82 is termed a distance Dt2. As described above, the turbine wheel 81 is provided to the right of the compressor wheel 82. Therefore the distance Dt1 is shorter than the distance Dt2. The turbine wheel 81 may be provided at the center C0 in the left-right direction of the motorcycle 1. Alternatively, the turbine wheel 81 may be provided to the right of the center C0 in the left-right direction of the motorcycle 1. Also in these cases, the distance Dt1 is preferably shorter than the distance Dt2. In addition to the above, a linear line which passes the center in the left-right direction of all ranges of the exhaust ports 34b and is in parallel to the up-down direction when viewed in the front-rear direction is termed a linear line Le. When viewed in the front-rear direction, the distance between the turbine wheel 81 and the linear line Le in the left-right direction is preferably as short as possible. This includes a case where the distance is zero. In other words, preferably, when viewed in the front-rear direction, the turbine wheel 81 is preferably close to the center (Le) in the left-right direction of all ranges of the exhaust ports 34b as much as possible. With this, a difference between the path lengths of the independent exhaust passage members 64 is decreased.

As shown in FIG. 3, FIG. 4, and FIG. 5, an oxygen sensor 76 is provided on the upstream collective exhaust passage member 65. The oxygen sensor 76 is provided downstream of the turbine wheel 81. The upstream oxygen sensor 76 is configured to detect the oxygen density in the exhaust gas in the upstream collective exhaust passage member 65.

As shown in FIG. 3 and FIG. 4, the catalyst portion 62 includes the main catalyst 62a and the cylindrical part 62b. The cylindrical part 62b is connected to the downstream end of the upstream collective exhaust passage member 65 and the upstream end of the downstream exhaust passage member 66. The cylindrical part 62b may be integrally molded with a part of the upstream collective exhaust passage member 65. The cylindrical part 62b may be integrally molded with a part of the downstream exhaust passage member 66. Catalysts other than the main catalyst 62a are not provided in the exhaust passage member 60. The main catalyst 62a purifies the exhaust gas most in a plurality of exhaust paths 69 (see FIG. 5).

The main catalyst 62a is formed to be cylindrical. The main catalyst 62a has a porous structure. The porous structure indicates a structure in which through holes are formed along the flow direction of the exhaust gas. The main catalyst 62a is a three-way catalyst. The three-way catalyst removes three substances in exhaust gas, namely hydrocarbon (HC), carbon monoxide (CO), and nitrogen oxide (NOx), by oxidation or reduction. The three-way catalyst is a type of oxidation-reduction catalyst. The main catalyst 62a may be a catalyst which removes one or two of hydrocarbon, carbon monoxide, and nitrogen oxide. The main catalyst 62a may not be an oxidation-reduction catalyst. The main catalyst may be an oxidation catalyst which removes harmful substances only by oxidation. The main catalyst may be a reduction catalyst which removes harmful substances only by reduction. The main catalyst 62a includes a base and catalyst materials attached to the surface of the base. The catalyst materials are formed of a carrier and noble metals. The carrier has a function of attaching noble metals to a base. The noble metal has a function of purifying the exhaust gas. Examples of noble metals include platinum, palladium, and rhodium which remove hydrocarbon, carbon monoxide, and nitrogen oxide, respectively. When the temperature of the main catalyst 62a is lower than a predetermined temperature, the main catalyst 62a is inactive and does not exert the purification performance. When the temperature of the main catalyst 62a is equal to or higher than the predetermined temperature, the main catalyst 62a is active and exerts the purification performance. The main catalyst 62a may be a metal-base catalyst or a ceramic-base catalyst. The metal-base catalyst is a catalyst in which the base is made of metal. The ceramic-base catalyst is a catalyst in which the base is made of ceramic. The base of the metal-base catalyst is formed by, for example, alternately stacking metal corrugated plates and metal flat plates and winding them. The base of the ceramic-base catalyst is, for example, a honeycomb structure body.

The central axis C1 of the catalyst portion 62 is coaxial with the central axis of the main catalyst 62a. The central axis C1 of the catalyst portion 62 indicates the central axis of the cylindrical part 62b. The length in the flow direction of the exhaust gas of the catalyst portion 62 is identical to the length in the flow direction of the exhaust gas of the main catalyst 62a. The center of the upstream end of the main catalyst 62a is identical in position to the center of the upstream end of the catalyst portion 62. The center of the downstream end of the main catalyst 62a is identical in position to the center of the downstream end of the catalyst portion 62. The length in the flow direction of the exhaust gas of the catalyst portion 62 is termed a length Dc1 (not illustrated). Furthermore, the maximum length in the direction orthogonal to the flow direction of the exhaust gas of the catalyst portion 62 is termed Dc2 (not illustrated). The length Dc1 is longer than the length Dc2.

As shown in FIG. 3, when viewed in the left-right direction, the central axis C1 of the catalyst portion 62 is inclined in the front-rear direction with respect to the up-down direction. When viewed in the left-right direction, an inclination angle of the central axis C1 with respect to the up-down direction is termed as an inclination angle θ1. The inclination angle θ1 is not limited to the angle shown in FIG. 3. The inclination angle θ1 is greater than 45 degrees. The inclination angle θ1 is less than 90 degrees. Due to this, when viewed in the left-right direction, the central axis C1 is along the front-rear direction. In other words, when viewed in the left-right direction, the flow direction of the exhaust gas flowing in the catalyst portion 62 is along the front-rear direction. The inclination angle θ1 may be 0 degrees or greater than 0 degrees and 45 degrees or less than 45 degrees. In other words, when viewed in the left-right direction, the flow direction of the exhaust gas flowing in the catalyst portion 62 may be along the up-down direction. As shown in FIG. 4, when viewed in the front-rear direction, the central axis C1 of the catalyst portion 62 is along the up-down direction. To be more specific, when viewed in the front-rear direction, the central axis C1 of the catalyst portion 62 is substantially in parallel to the up-down direction. When viewed in the front-rear direction, the central axis C1 of the catalyst portion 62 may be tilted in the left-right direction with respect to the up-down direction. Furthermore, when viewed in the front-rear direction, the central axis C1 of the catalyst portion 62 may be along the left-right direction. Although not illustrated, when viewed in the up-down direction, the central axis C1 of the catalyst portion 62 is along the front-rear direction. When viewed in the up-down direction, the central axis C1 of the catalyst portion 62 may be along the left-right direction. The flow direction of the exhaust gas flowing in the catalyst portion 62 is along the front-rear direction. The flow direction of the exhaust gas flowing in the catalyst portion 62 may be along the up-down direction. The flow direction of the exhaust gas flowing in the catalyst portion 62 may be along the left-right direction. In such cases, the center of the upstream end of the catalyst portion 62 is preferably forward of and above the center of the downstream end of the catalyst portion 62 when viewed in the left-right direction.

As shown in FIG. 3, when viewed in the left-right direction, the catalyst portion 62 is provided straight below the engine main body 20. A plane which passes the rearmost end of the crankcase member 20a and is orthogonal to the front-rear direction is termed a plane Se2. The catalyst portion 62 is provided between the plane Se1 and the plane Se2. As described above, the plane Se1 is a plane which passes the frontmost end of the crankcase member 20a and is orthogonal to the front-rear direction. When viewed in the left-right direction, the catalyst portion 62 is provided straight below the crankcase member 20a. When viewed in the left-right direction, only a part of the catalyst portion 62 may be provided straight below the crankcase member 20a. At least a part of the catalyst portion 62 is preferably provided straight below the crankcase member 20a when viewed in the left-right direction. As shown in FIG. 3, at least a part of the catalyst portion 62 is provided between the plane Se3 and the plane Se4. The plane Se3 is a plane which passes the uppermost end of the crankcase member 20a and is orthogonal to the up-down direction. The plane Se4 is a plane which passes the rearmost end of the crankcase member 20a and is orthogonal to the up-down direction. When viewed in the left-right direction, at least a part of the catalyst portion 62 is provided in front of the crankcase member 20a. As shown in FIG. 4, the catalyst portion 62 is provided between the plane Se5 and the plane Se6. The plane Se5 is a plane which passes the leftmost end of the crankcase member 20a and is orthogonal to the left-right direction. The plane Se6 is a plane which passes the rightmost end of the crankcase member 20a and is orthogonal to the left-right direction. When viewed in the front-rear direction, at least a part of the catalyst portion 62 overlaps the crankcase member 20a. Although not illustrated, when viewed in the up-down direction, at least a part of the catalyst portion 62 overlaps the crankcase member 20a. At least a part of a catalyst portion 62 is provided in front of the crankcase member 20a. At least a part of a catalyst portion 62 is provided straight below the crankcase member 20a. The entire catalyst portion 62 may not be provided straight below the crankcase member 20a. At least a part of the catalyst portion 62 is preferably provided straight below the engine main body 20.

When viewed in the left-right direction, the catalyst portion 62 is provided in front of the linear line La1. In other words, the catalyst portion 62 is provided forward of the crankshaft axis Cr. Only a part of the catalyst portion 62 may be provided forward of the crankshaft axis Cr. At least a part of the catalyst portion 62 is preferably provided forward of the crankshaft axis Cr. When viewed in the left-right direction, the catalyst portion 62 is provided behind (straight below) the linear line La2. The linear line La2 is a linear line which is orthogonal to the cylinder axial line Cy and passes the crankshaft axis Cr when viewed in the left-right direction. When viewed in the left-right direction, only a part of the catalyst portion 62 may be provided behind (straight below) the linear line La2. When viewed in the left-right direction, at least a part of the catalyst portion 62 is preferably provided behind (straight below) the linear line La2. When viewed in the left-right direction, the catalyst portion 62 may be entirely provided in front of (straight above) the linear line La2. In other words, when viewed in the left-right direction, at least a part of the catalyst portion 62 may be provided in front of (straight above) the linear line La2. The catalyst portion 62 is provided below the crankshaft axis Cr. When viewed in the left-right direction, the catalyst portion 62 is provided in front of the cylinder axial line Cy.

As shown in FIG. 3, a plane which passes the lowermost end of the scroll exhaust passage member 65s and is orthogonal to the up-down direction is termed a plane Ss2. The catalyst portion 62 is provided straight below the plane Ss2. In other words, the catalyst portion 62 is provided below the scroll exhaust passage member 65s. Only a part of the catalyst portion 62 may be provided below the scroll exhaust passage member 65s. At least a part of the catalyst portion 62 is preferably provided below the scroll exhaust passage member 65s. The catalyst portion 62 is provided below of the turbine wheel 81. As a matter of course, the downstream end of the catalyst portion 62 is provided below of the turbine wheel 81.

As shown in FIG. 3, the catalyst portion 62 is disposed behind the plane Ss1. The plane Ss1 is a plane which passes the rearmost end of the scroll exhaust passage member 65s and is orthogonal to the front-rear direction. Due to this, the catalyst portion 62 is provided rearward of the scroll exhaust passage member 65s. Only a part of the catalyst portion 62 may be provided rearward of the scroll exhaust passage member 65s. At least a part of the catalyst portion 62 is preferably provided rearward of the scroll exhaust passage member 65s.

As shown in FIG. 4, the catalyst portion 62 is provided rightward of the turbine wheel 81. In other words, the catalyst portion 62 is provided on the side opposite to the compressor wheel 82 of the turbine wheel 81.

As shown in FIG. 3, when viewed in the left-right direction, the catalyst portion 62 is provided straight above the line segment Lw1. The line segment Lw1 is a line segment which is the lowest one of line segments connecting points on the outline of the engine main body 20 with points on the outline of the front wheel unit 2 when viewed in the left-right direction. When viewed in the left-right direction, the catalyst portion 62 is provided straight below the line segment Lw2. The line segment Lw2 is a line segment which is the highest one of line segments connecting points on the outline of the engine main body 20 with points on the outline of the front wheel unit 2 when viewed in the left-right direction. When viewed in the left-right direction, the catalyst portion 62 is provided in a quadrangle having the line segment Lw1 and the line segment Lw2 as two sides. When viewed in the left-right direction, the catalyst portion 62 is provided inside the above-described quadrangle and does not overlap the engine main body 20. In other words, when viewed in the left-right direction, the catalyst portion 62 is provided between the engine main body 20 and the front wheel unit 2. When viewed in the left-right direction, only a part of the catalyst portion 62 may be provided between the engine main body 20 and the front wheel unit 2. For example, when viewed in the left-right direction, a part of the catalyst portion 62 may overlap the engine main body 20. Furthermore, for example, a part of the catalyst portion 62 may be provided straight below the line segment Lw1 when viewed in the left-right direction. When viewed in the left-right direction, at least a part of the catalyst portion 62 is preferably provided between the engine main body 20 and the front wheel unit 2.

As shown in FIG. 3, a line segment connecting the lowermost end of the engine main body 20 with the lowermost end of the front wheel unit 2 when viewed in the left-right direction is termed a line segment Lw3. When viewed in the left-right direction, the lowermost end of the engine main body 20 is long in the front-rear direction. While the end of the line segment Lw3 in FIG. 3 is the front end of the lowermost end of the engine main body 20, this end of the line segment may be any position of the lowermost end of the engine main body 20. When viewed in the left-right direction, the catalyst portion 62 is provided straight above the line segment Lw3. When viewed in the left-right direction, only a part of the catalyst portion 62 may be provided straight above the line segment Lw3. When viewed in the left-right direction, at least a part of the catalyst portion 62 is preferably provided straight above the line segment Lw3 and its extension.

As shown in FIG. 3, the catalyst portion 62 is disposed below the horizontal plane Sw2. The horizontal plane Sw2 is a horizontal plane passing the center of the front wheel unit 2. Only a part of the catalyst portion 62 may be provided below the horizontal plane Sw2. At least a part of the catalyst portion 62 is preferably provided below the horizontal plane Sw2.

As shown in FIG. 4, the catalyst portion 62 is disposed at a right part of the motorcycle 1. The center of the upstream end and the center of the downstream end of the catalyst portion 62 are not disposed at the center C0 in the left-right direction of the motorcycle 1. The center of the upstream end and the center of the downstream end of the catalyst portion 62 are to the right of the center C0 in the left-right direction of the motorcycle 1. When viewed in the front-rear direction, the catalyst portion 62 is provided to the right of the center C0 in the left-right direction of the motorcycle 1. When viewed in the front-rear direction, a part of the catalyst portion 62 may be disposed to the right of the center C0 in the left-right direction of the motorcycle 1 and the rest of the catalyst portion 62 may be disposed to the left of the center C0 in the left-right direction of the motorcycle 1.

The downstream end of the catalyst portion 62 is connected to the upstream end of the downstream exhaust passage member 66. The flow direction of the exhaust gas flowing in the downstream exhaust passage member 66 is along the front-rear direction. The downstream end of the downstream exhaust passage member 66 is connected to the upstream end of the muffler member 67. The muffler member 67 is a device for reducing noise generated by exhaust gas.

The engine unit 11 further includes sensors other than the above-described oxygen sensor 76. The sensors include, for example, a sensor which is configured to detect the pressure in the intake passage member 50. The sensors further include a sensor which is configured to detect the temperature in the intake passage member 50. The sensors further include a sensor which is configured to detect the temperature of the coolant water in the cooling passage 22b. In addition to the oxygen sensor 76, the engine unit 11 includes an oxygen sensor provided on the downstream exhaust passage member 66 or the muffler member 67. The sensors including the oxygen sensor 76 are connected to a controller (not illustrated). The controller controls the engine unit 11 based on signals from the sensors. For example, the controller controls the low-pressure pump and the injector 39 based on the signals from the sensors. With this, the controller controls a fuel injection amount and a fuel injection timing. Furthermore, the controller controls electric conduction to the ignition coil based on signals from the sensors. In this way, the controller controls an ignition timing. The ignition timing indicates a timing at which the ignition plug 31 discharges electricity. When an oxygen sensor is provided on the downstream exhaust passage member 66 or the muffler member 67, the controller may determine the deterioration of the main catalyst 62a based on a signal from at least this oxygen sensor.

The motorcycle 1 of the present embodiment having been described above has the following characteristics.

The motorcycle 1 includes a vehicle body frame 4, an engine unit 11, a front wheel unit 2, and a rear wheel unit 3. The front wheel unit 2 is provided in front of the engine unit 11 when viewed in the left-right direction. The rear wheel unit 3 includes at least one rear wheel. The rear wheel unit 3 is provided behind the engine unit 11 when viewed in the left-right direction. The engine unit 11 includes an engine main body 20, an intake passage member 50, an upstream exhaust passage member 61, a downstream collective exhaust passage member 63, a turbocharger 80, and a catalyst portion 62. The engine main body 20 forms at least one combustion chamber 30. The intake passage member 50 includes an atmosphere suction port 52a which is connected to the engine main body 20 and sucks air from the atmosphere. Air supplied to at least one combustion chamber 30 passes through the intake passage member 50. The upstream exhaust passage member 61 is connected to the engine main body 20. The exhaust gas exhausted from the at least one combustion chamber 30 passes through the upstream exhaust passage member 61. The downstream collective exhaust passage member 63 has an atmosphere discharge port 67a through which exhaust gas is exhausted to the atmosphere. The turbocharger 80 includes a turbine wheel 81 and a compressor wheel 82 which is connected to the turbine wheel 81 via a connecting shaft 83. The turbine wheel 81 is provided in the upstream exhaust passage member 61. The compressor wheel 82 is provided in an intake passage member 50. The connecting shaft 83 has a central axis Ct1 which is along the left-right direction. The axes of the rotation centers of the turbine wheel 81 and the compressor wheel 82 are therefore along the left-right direction. The turbine wheel 81 rotates as it receives the exhaust gas. In accordance with the rotation of the turbine wheel 81, the compressor wheel 82 rotates. As a result of this, the compressor wheel 82 compresses air. The compressed air is supplied to the engine main body 20. The catalyst portion 62 is connected to the downstream end of the upstream exhaust passage member 61 and the upstream end of the downstream collective exhaust passage member 63. The catalyst portion 62 includes a main catalyst 62a. The length in the flow direction of the exhaust gas of the catalyst portion 62 is identical to the length in the flow direction of the exhaust gas of the main catalyst 62a. The engine unit 11 has at least one exhaust passage 69 which extends from at least one combustion chamber 30 to the atmosphere discharge port 67a. The main catalyst 62a purifies the exhaust gas exhausted from the at least one combustion chamber 30 most in the at least one exhaust passage 69. The upstream exhaust passage member 61 includes a scroll exhaust passage member 65s. The scroll exhaust passage member 65s wholly surrounds the outer circumference of the turbine wheel 81.

In the motorcycle 1 arranged as described above, the downstream end of the catalyst portion 62 is provided below the turbine wheel 81. To put it differently, the turbine wheel 81 is provided above the downstream end of the catalyst portion 62. As a result of this, the position of the turbine wheel 81 is high when compared to Patent Literature 1 described above. Due to this, the path length from the upstream end of the upstream exhaust passage member 61 to the turbine wheel 81 is short. The path length from the turbine wheel 81 to the atmosphere discharge port 67a is therefore long. For this reason, the degree of freedom in position of the catalyst portion 62 is increased. It is therefore possible to provide the catalyst portion 62 at a position where the increase in size in the up-down direction of the motorcycle 1 is restrained even when the main catalyst 62a is increased in size. As a result, the increase in size of the motorcycle 1 is restrained while the exhaust gas purification performance is further improved. In this way, because the turbocharger 80 is positioned so that the degree of freedom in the position of the catalyst portion 62 is increased, the increase in size of the motorcycle 1 is restrained while the exhaust gas purification performance is further improved.

When viewed in the left-right direction, at least a part of the catalyst portion 62 is provided straight above the line segment Lw3. The line segment Lw3 is a line segment connecting the lowermost end of the engine main body 20 with the lowermost end of the front wheel unit 2 when viewed in the left-right direction. When the entirety of the catalyst portion 62 is provided below this line segment Lw3 and its extension, at least one of the following arrangements is employed. The first one of the arrangements is such that the lower end of the catalyst portion 62 is significantly below the lowermost end of the engine main body 20. In this arrangement, it is necessary to increase the size of the motorcycle 1 in the up-down direction in order to provide for a sufficient distance between the catalyst portion 62 and the ground. As at least a part of the catalyst portion 62 is provided straight above the line segment Lw3 when viewed in the left-right direction, the increase in size of the motorcycle 1 in the up-down direction is restrained. The second one of the arrangements is such that the path length from the combustion chamber 30 to the catalyst portion 62 is long. With this arrangement, the temperature of the exhaust gas flowing into the main catalyst 62a is lowered. The turbocharger 80 compresses air by utilizing the kinetic energy of the exhaust gas. The exhaust gas having passed through the turbine wheel 81 therefore has a lower pressure and a lower temperature when compared to the exhaust gas before passing through the turbine wheel. Due to this, according to the second arrangement, the temperature of the exhaust gas flowing into the main catalyst 62a is further lowered. As a result, at the cold start of the engine unit 11, the time required to activate the deactivated main catalyst 62a is elongated. Due to this, the exhaust gas purification performance of the main catalyst 62a deteriorates. Therefore, when at least a part of the catalyst portion 62 is provided straight above the line segment Lw3 when viewed in the left-right direction, the decrease in temperature of the exhaust gas flowing into the main catalyst 62a is restrained, and hence the exhaust gas purification performance is further improved. The cold start of the engine unit 11 indicates that the engine unit 11 is started in a state in which the temperature of the engine main body 20 is equal to or lower than the outside temperature.

At least a part of the scroll exhaust passage member 65s is provided below the horizontal plane Sw1. The horizontal plane Sw1 is a horizontal plane passing the upper end of the front wheel unit 2. It is assumed that the entirety of the scroll exhaust passage member 65s is provided above the horizontal plane Sw1. In such a case, the motorcycle 1 is upsized in the up-down direction to provide for a space where the turbocharger 80 is provided. Due to this, the increase in size of the motorcycle 1 in the up-down direction is further restrained when at least a part of the scroll exhaust passage member 65s is provided below the horizontal plane Sw1.

When viewed in the front-rear direction, at least a part of the catalyst portion 62 overlaps the engine main body 20. Furthermore, when viewed in the front-rear direction, at least a part of the scroll exhaust passage member 65s overlaps the engine main body 20. It is therefore possible to restrain the increase in size of the engine unit 11 in the left-right direction. Due to this, the increase in size of the motorcycle 1 is restrained in the left-right direction.

Because of the above, even when the turbocharger 80 is provided, the increase in size of the motorcycle 1 is restrained and the exhaust gas purification performance is further improved.

The crankshaft 27 of the engine main body 20 has a central axis Cr which is along the left-right direction. At least a part of the catalyst portion 62 is provided forward of the central axis Cr of the crankshaft 27. The path length from the combustion chamber 30 to the catalyst portion 62 is therefore shortened. For this reason, the temperature of the exhaust gas flowing into the main catalyst 62a is increased. As a result, at the cold start of the engine unit 11, the time required to activate the deactivated main catalyst 62a is shortened. Due to this, the exhaust gas purification performance of the main catalyst 62a is further improved.

At least a part of the catalyst portion 62 is provided below the horizontal plane Sw2 which passes the center of the front wheel unit 2. It is assumed that the entire catalyst portion 62 is provided above the horizontal plane Sw2 passing the center of the front wheel unit 2. In this case, the position of the turbocharger 80 is significantly high. The motorcycle 1 is upsized in the up-down direction to provide for a space where the turbocharger 80 is provided. Due to this, the increase in size of the motorcycle 1 in the up-down direction is further restrained when at least a part of the catalyst portion 62 is provided below the horizontal plane passing the center of the front wheel unit 2.

As described above, the distance Dt1 is shorter than the distance Dt2. The distance Dt1 is the distance in the left-right direction between the center C0 in the left-right direction of the motorcycle 1 and the turbine wheel 81. The distance Dt2 is the distance in the left-right direction between the center C0 in the left-right direction of the motorcycle 1 and the compressor wheel 82. Therefore, the distance between turbine wheel 81 and the center C0 in the left-right direction of the motorcycle 1 is shorter than the distance between the compressor wheel 82 and the center C0. At least one exhaust port 34b connected to the upstream exhaust passage member 61 is formed in the outer surface of the engine main body 20. The center (Le) of all ranges of the at least one exhaust port 34b in the left-right direction is close to the center C0 in the left-right direction of the motorcycle 1. Therefore, the path length from the upstream end of the upstream exhaust passage member 61 to the turbine wheel 81 is further shortened as the turbine wheel 81 is provided at a position close to the center C0 in the left-right direction of the motorcycle 1. The path length from the combustion chamber 30 to the catalyst portion 62 is therefore shortened. For this reason, the temperature of the exhaust gas flowing into the main catalyst 62a is increased. As a result, at the cold start of the engine unit 11, the time required to activate the deactivated main catalyst 62a is shortened. Due to this, the exhaust gas purification performance of the main catalyst 62a is further improved.

The catalyst portion 62 is provided rightward of the turbine wheel 81. As described above, the lower end of the catalyst portion 62 is provided below the turbine wheel 81. In other words, when viewed in the front-rear direction, at least a part of the catalyst portion 62 is not provided straight below at least a part of the turbine wheel 81. It is assumed that, when viewed in the front-rear direction, at least a part of the catalyst portion 62 is not provided straight below at least a part of the turbine wheel 81. In this case, the passage from the turbine wheel 81 to the downstream end of the upstream exhaust passage member 61 is bended to form an S-shape when viewed in the front-rear direction. The larger the number of bended portions of a path, the longer the path length is. It is therefore possible to shorten the path length from the combustion chamber 30 to the catalyst portion 62 by providing the catalyst portion 62 rightward of the turbine wheel 81. For this reason, the temperature of the exhaust gas flowing into the main catalyst 62a is increased. As a result, at the cold start of the engine unit 11, the time required to activate the deactivated main catalyst 62a is shortened. Due to this, the exhaust gas purification performance of the main catalyst 62a is further improved.

When viewed in the left-right direction, at least a part of the scroll exhaust passage member 65s is provided in front of the linear line La2. The linear line La2 is a linear line which is orthogonal to the cylinder axial line Cy and passes the crankshaft axis Cr when viewed in the left-right direction. Due to this, the path length from the upstream end of the upstream exhaust passage member 61 to the turbine wheel 81 is short when compared to cases where the entire scroll exhaust passage member 65s is provided behind the linear line La2 when viewed in the left-right direction. Due to this, the path length of a part of the upstream exhaust passage member 61, the part being downstream of the turbine wheel 81, is long. For this reason, the degree of freedom in position of the catalyst portion 62 is further increased. It is therefore possible to provide the catalyst portion 62 at a position where the increase in size in the up-down direction of the motorcycle 1 is restrained even when the main catalyst 62a is increased in size. As a result, the increase in size of the motorcycle 1 is restrained while the exhaust gas purification performance is further improved.

The catalyst portion 62 is provided downstream of the turbine wheel 81. The degree of freedom in the position of the catalyst portion 62 is therefore high when compared to cases where at least a part of the catalyst portion 62 is provided above the lower end of the turbine wheel 81. It is therefore possible to provide the catalyst portion 62 at a position where the increase in size in the up-down direction of the motorcycle 1 is restrained even when the main catalyst 62a is increased in size. As a result, the increase in size of the motorcycle 1 is restrained while the exhaust gas purification performance is further improved.

The central axis Cy of the cylinder hole 22a is along the up-down direction. This makes it easy to realize an arrangement that at least a part of the catalyst portion 62 is provided straight above the line segment Lw3 when viewed in the left-right direction and the downstream end of the catalyst portion 62 is provided below the turbine wheel 81. As a result, the increase in size of the motorcycle 1 is restrained while the exhaust gas purification performance is further improved.

The flow direction of exhaust gas flowing in the catalyst portion 62 is along the horizontal direction. The length in the up-down direction of the catalyst portion 62 is therefore shorter than the length in the front-rear direction of the catalyst portion 62. It is therefore possible to further restrain the increase in size of the motorcycle 1 in the up-down direction, even when the main catalyst 62a is increased in size.

When viewed in the left-right direction, at least a part of the catalyst portion 62 is provided behind the linear line La2. The flow direction of the exhaust gas flowing in the catalyst portion 62 is along the horizontal direction. When the entirety of such a catalyst portion 62 is provided in front of the linear line La2 when viewed in the left-right direction, the front end of the catalyst portion 62 may be significantly ahead of the front end of the engine main body 20. In this arrangement, it is necessary to increase the size of the motorcycle 1 in the front-rear direction in order to provide for a sufficient distance between the front wheel unit 2 and the catalyst portion 62. As at least a part of the catalyst portion 62 is provided behind the linear line La2 when viewed in the left-right direction, the increase in size of the motorcycle 1 in the front-back direction is restrained.

The upstream exhaust passage member 61 includes a plurality of independent exhaust passage members 64 and an upstream collective exhaust passage member 65. The independent exhaust passage members 64 are connected to the engine main body 20. The turbine wheel 81 is provided on the upstream collective exhaust passage member 65. The upstream collective exhaust passage member 65 is connected to the downstream ends of the independent exhaust passage members 64 and the upstream end of the catalyst portion 62. The upstream collective exhaust passage member 65 gathers the exhaust gas discharged from the independent exhaust passage members 64. Therefore no passage member for gathering exhaust gas exhausted from the combustion chambers 30 is formed in the engine main body 20. It is assumed that a passage member for gathering exhaust gas exhausted from the combustion chambers 30 is formed in the engine main body 20. In such a case, the pressure of the exhaust gas exhausted from first combustion chamber 30 may obstruct the exhaust of the exhaust gas from second combustion chamber 30. The flow rate and the pressure of the exhaust gas may deteriorate. As a result, the output of the engine is decreased. Furthermore, because the flow rate and the pressure of the exhaust gas deteriorate, the rotation speed of the turbine wheel 81 is decreased and the intake efficiency is decreased. As the intake efficiency is decreased, the fuel consumption deteriorates and the output of the engine is further decreased. As the upstream exhaust passage member 61 includes the plurality of independent exhaust passage members 64 and the upstream collective exhaust passage member 65, the deterioration in output and the deterioration in fuel consumption are prevented.

The turbine wheel 81 does not overlap the vehicle body frame 4 when viewed in the left-right direction. It is assumed that at least a part of the turbine wheel 81 overlaps the vehicle body frame 4 when viewed in the left-right direction. In such a case, the position of the turbocharger 80 is high. When the position of the turbocharger 80 is high, the motorcycle 1 is upsized in the up-down direction to provide for a space where the turbocharger 80 is provided. Due to this, when the turbine wheel 81 does not overlap the vehicle body frame 4 when viewed in the left-right direction, the increase in size of the motorcycle 1 in the up-down direction is further restrained.

### (Modification 1)

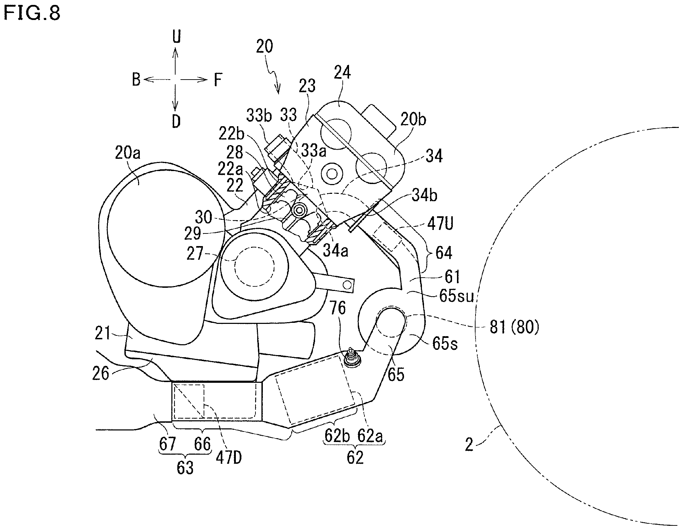

FIG. 8 is a right side view of a part of an engine unit of Modification 1 of the First Embodiment. In Modification 1, members identical to those in the First Embodiment above are indicated by the same reference numerals and detailed descriptions thereof are omitted.

As shown in FIG. 8, an engine unit of Modification 1 includes a downstream sub-catalyst 47D and an upstream sub-catalyst 47U. In the following explanations, the upstream sub-catalyst 47U and the downstream sub-catalyst 47D may be collectively termed sub-catalysts 47 (not illustrated).

The upstream sub-catalyst 47U is provided upstream of the catalyst portion 62. The upstream sub-catalyst 47U is provided in the upstream exhaust passage member 61. The upstream sub-catalyst 47U is provided in at least one of the independent exhaust passage members 64. The upstream sub-catalyst 47U may be provided in the upstream collective exhaust passage member 65. The upstream sub-catalyst 47U may be provided in at least one of the internal exhaust passage members 34. The upstream sub-catalyst 47U is provided upstream of the oxygen sensor 76.

The downstream sub-catalyst 47D is provided downstream of the catalyst portion 62. The downstream sub-catalyst 47D is provided in the downstream collective exhaust passage member 63. The downstream sub-catalyst 47D is provided in the downstream exhaust passage member 66. The downstream sub-catalyst 47D may be provided in the muffler member 67.

The sub-catalysts 47 are configured to purify the exhaust gas. The sub-catalysts 47 include a catalyst material which is identical to that in the main catalyst 62a. The sub-catalysts 47 may have a porous structure in the same manner as the main catalyst 62a. The sub-catalysts 47 may not have a porous structure. The following is an example of a sub-catalyst 47 which does not have a porous structure. For example, the sub-catalyst 47 solely includes a catalyst material which is adhered to the inner surface of the downstream collective exhaust passage member 63. In this case, the base to which the catalyst material of the sub-catalyst 47 is adhered is the downstream collective exhaust passage member 63. The following is another example of a sub-catalyst 47 which does not have a porous structure. For example, a sub-catalyst 47 is structured by arranging a catalyst material to be adhered to a plate-shaped base. The cross-sectional shape of the plate-shaped base cut along the direction orthogonal to the flow direction of the exhaust gas is, for example, circular, C-shaped, or S-shaped.

According to Modification 1, the main catalyst 62a purifies the exhaust gas most in the plurality of exhaust paths 69. In other words, the main catalyst 62a purifies the exhaust gas discharged from the combustion chamber 30 in the exhaust paths 69 more than the sub-catalysts 47. To put it differently, the degree of the contribution of the sub-catalysts 47 to the purification of the exhaust gas is lower than that of the main catalyst 62a. The degree of the contribution to the purification of each of the main catalyst 62a, the upstream sub-catalyst 47U, and the downstream sub-catalyst 47D may be measured by the following method.

The engine unit of Modification 1 is driven and, in a warm-up state, the density of harmful substances in the exhaust gas discharged from the atmosphere discharge port 67a is measured. The warm-up state indicates a state in which the temperature of the engine main body 20 is sufficiently high. The method of measuring the exhaust gas is in compliance with European regulations. When the engine unit is in the warm-up state, the main catalyst 62a and the sub-catalysts 47 are hot and activated. The main catalyst 62a and the sub-catalysts 47 can therefore sufficiently exert their purification performances in the warm-up state.

Subsequently, the downstream sub-catalyst 47D is detached from the engine unit of Modification 1 and only the base of the downstream sub-catalyst 47D is provided in place of the downstream sub-catalyst 47D. The engine unit in this state is assumed to be a measurement engine unit A. This measurement engine unit A is driven, and the density of harmful substances in the exhaust gas discharged from the atmosphere discharge port 67a is measured in the warm-up state.

The downstream sub-catalyst 47D may be arranged such that the catalyst material is directly adhered to the inner surface of the downstream collective exhaust passage member 63. In this case, "only the base of the downstream sub-downstream sub-catalyst 47D is provided" indicates that no catalyst material is adhered to the inner surface of the downstream collective exhaust passage member 63.

Subsequently, the main catalyst 62a is detached from the measurement engine unit A, and only the base of the main catalyst 62a is provided in place of the main catalyst 62a. The engine unit in this state is assumed to be a measurement engine unit B. This measurement engine unit B is driven, and the density of harmful substances in the exhaust gas discharged from the atmosphere discharge port 67a is measured in the warm-up state.

Subsequently, the upstream sub-catalyst 47U is detached from the measurement engine unit B, and only the base of the upstream sub-catalyst 47U is provided in place of the upstream sub-catalyst 47U. The engine unit in this state is assumed to be a measurement engine unit C. This measurement engine unit C is driven, and the density of harmful substances in the exhaust gas discharged from the atmosphere discharge port 67a is measured in the warm-up state.

The measurement engine unit C includes neither the main catalyst 62a nor the sub-catalysts 47. The measurement engine unit B includes the upstream sub-catalyst 47U but does not include the main catalyst 62a and the downstream sub-catalyst 47D. The measurement engine unit A includes the main catalyst 62a and the upstream sub-catalyst 47U but does not include the downstream sub-catalyst 47D. Due to this, the degree of the contribution to the purification of the downstream sub-catalyst 47D is calculated from a difference between a measurement result of the engine unit of Modification 1 and a measurement result of the measurement engine unit A. Furthermore, the degree of the contribution to the purification of the main catalyst 62a is calculated from a difference between a measurement result of the measurement engine unit A and a measurement result of the measurement engine unit B. Furthermore, the degree of the contribution to the purification of the upstream sub-catalyst 47U is calculated from a difference between a measurement result of the measurement engine unit B and a measurement result of the measurement engine unit C.

The main catalyst 62a purifies the exhaust gas most in the plurality of exhaust paths 69. As long as this condition is satisfied, the purification capability of the sub-catalysts 47 may be lower than or higher than the purification capability of the main catalyst 62a. A state in which the purification capability of the sub-catalysts 47 is lower than the purification capability of the main catalyst 62a indicates the following state. That is to say, the exhaust gas discharged from the atmosphere discharge port 67a when only a sub-catalyst is provided is purified more than the exhaust gas discharged from the atmosphere discharge port 67a when only the main catalyst 62a is provided.

The upstream catalyst deteriorates more rapidly than the downstream catalyst. For this reason, when hours of use become high, the magnitude correlation between the degree of the contribution to the purification of the main catalyst 62a and the degree of the contribution to the purification of the downstream sub-catalyst 47D may be reversed. For this reason, the state in which the degree of the contribution to the purification of the main catalyst 62a is higher than that of the downstream sub-catalyst 47D is defined as below. That is to say, this state is a state in which, when the running distance has not reached a predetermined distance (e.g., 1000km), the degree of the contribution to the purification of the main catalyst 62a is higher than that of the downstream sub-catalyst 47D.

The volume of the main catalyst 62a is preferably larger than the volume of the sub-catalyst 47. The surface area of the main catalyst 62a is preferably larger than the surface area of the sub-catalyst 47. The amount of noble metals in the main catalyst 62a is preferably larger than the amount of noble metals in the sub-catalyst.

The engine unit may include only one of the upstream sub-catalyst 47U and the downstream sub-catalyst 47D. In such a case, the degree of the contribution to purification can be calculated by a method which is a modification of the method above.

According to Modification 1, the exhaust gas purification performance is improved when compared to cases where no sub-catalyst 47 is provided. Alternatively, when compared to cases where no sub-catalyst 47 is provided, the main catalyst 62a is downsized while the exhaust gas purification performance is maintained. Due to this, the increase in size of the vehicle is restrained while the exhaust gas purification performance is further improved.

### (Second Embodiment)

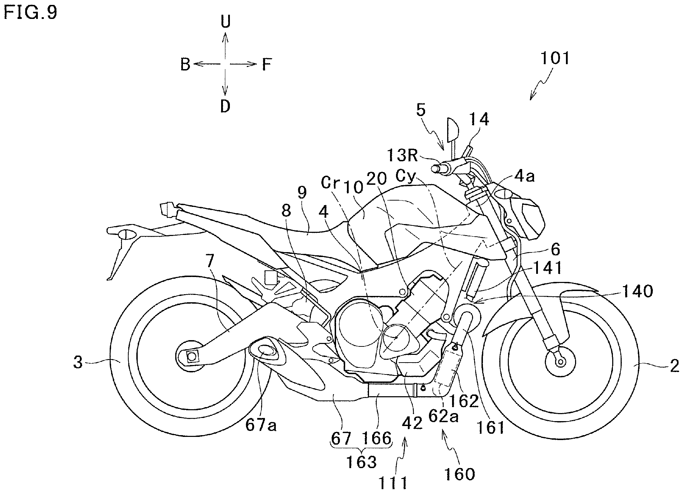

The following will describe a Second Embodiment of the present invention with reference to FIG. 9, FIG. 10, and FIG. 11. In the Second Embodiment, members identical to those in the First Embodiment above are indicated by the same reference numerals and detailed descriptions thereof may be omitted.

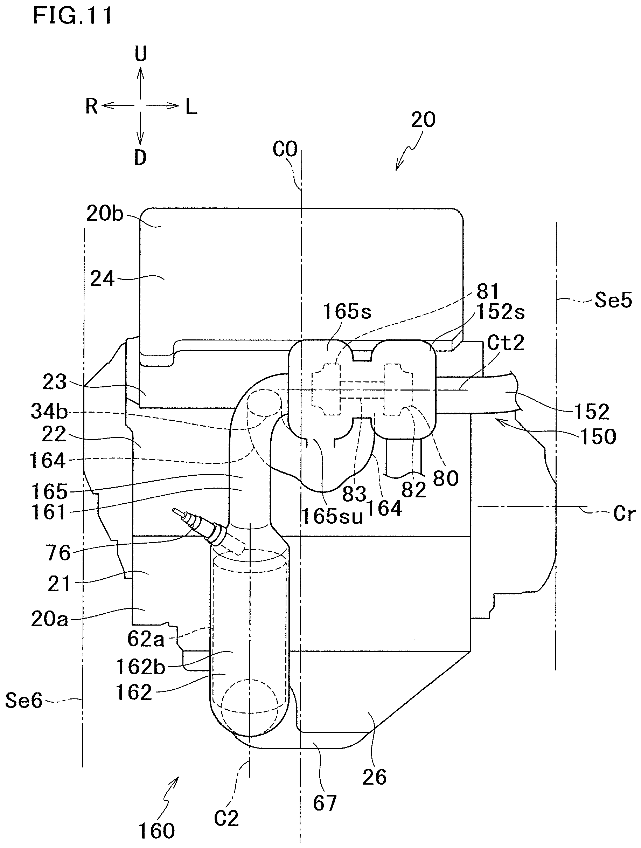

As shown in FIG. 9, in a motorcycle 101 of the present embodiment, the structure of an engine unit 111 is different from the structure of the engine unit 11 of the First Embodiment. The Second Embodiment is identical to the First Embodiment other than this. The engine unit 111 includes an engine main body 20, an exhaust passage member 160, an intake passage member 150 (see FIG. 11) and a water cooling device 140 (see FIG. 9). As shown in FIG. 9, a radiator 141 of the water cooling device 140 is shorter in the up-down direction than the radiator 41 of the First Embodiment. The lower end of the radiator 141 is positioned above the lower end of the radiator 41. The water cooling device 140 is identical to the water cooling device 40 of the First Embodiment except these points. In FIG. 9, a part of the water cooling device 140 is not shown. As shown in FIG. 11, the shape of a main intake passage member 152 of the intake passage member 150 is different from the shape of the main intake passage member 52 of the First Embodiment. Except this point, the intake passage member 150 is identical to the intake passage member 50 of the First Embodiment shown in FIG. 5.

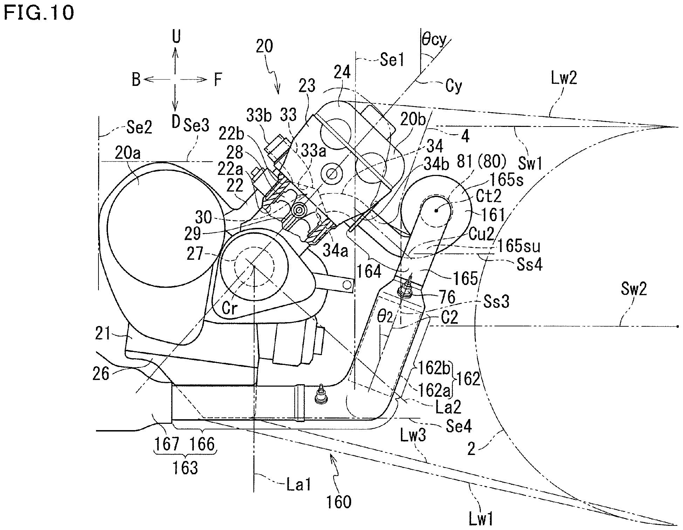

As shown in FIG. 10, the exhaust passage member 160 includes an upstream exhaust passage member 161, a catalyst portion 162, and a downstream collective exhaust passage member 163. The upstream exhaust passage member 161 includes two independent exhaust passage members 164 and an upstream collective exhaust passage member 165. The downstream collective exhaust passage member 163 includes a downstream exhaust passage member 166 and a muffler member 67. The independent exhaust passage members 164 are different in shape from the independent exhaust passage members 64 of the First Embodiment. The upstream collective exhaust passage member 165 is different in shape from the upstream collective exhaust passage member 65 of the First Embodiment. The downstream exhaust passage member 166 is different in shape from the downstream exhaust passage member 66 of the First Embodiment. Except for these points, the exhaust passage member 160 is identical to the exhaust passage member 60 of the First Embodiment shown in FIG. 5. The independent exhaust passage member 164 is equivalent to an external independent exhaust passage member of the present teaching. The upstream collective exhaust passage member 165 is equivalent to an external upstream collective exhaust passage member of the present teaching.

The engine unit 111 includes the turbocharger 80. As shown in FIG. 11, the turbine wheel 81 of the turbocharger 80 is provided in the upstream collective exhaust passage member 165. The compressor wheel 82 of the turbocharger 80 is provided in the main intake passage member 152. The turbine wheel 81 is provided to the right of the compressor wheel 82. The central axis Ct2 of the connecting shaft 83 is substantially in parallel to the left-right direction. The upstream collective exhaust passage member 165 includes a scroll exhaust passage member 165s. The main intake passage member 152 includes a scroll intake passage member 152s. The scroll exhaust passage member 165s is formed to wholly surround the outer circumference of the turbine wheel 81. The scroll exhaust passage member 165s is identical in size with the scroll exhaust passage member 65s of the First Embodiment. The scroll intake passage member 152s is formed to wholly surround the outer circumference of the compressor wheel 82. The scroll intake passage member 152s is identical in size with the scroll intake passage member 52s of the First Embodiment. The flow of the exhaust gas and the flow of the air in the turbocharger 80 are identical to those in the First Embodiment.

As shown in FIG. 10, a part of the scroll exhaust passage member 165s and a part of the scroll intake passage member 152s are provided above the exhaust port 34b. The entirety of the scroll exhaust passage member 165s may be provided above the exhaust port 34b. At least a part of the scroll exhaust passage member 165s is preferably provided above the exhaust port 34b. Similarly, at least a part of the scroll intake passage member 152s is preferably provided above the exhaust port 34b. At least a part of the scroll exhaust passage member 165s may be provided below the exhaust port 34b. Similarly, at least a part of the scroll intake passage member 152s may be provided below the exhaust port 34b. A plane which passes the rearmost end of the scroll exhaust passage member 165s and is orthogonal to the front-rear direction is termed a plane Ss3. The exhaust port 34b is positioned behind the plane Ss3. To put it differently, the scroll exhaust passage member 165s is provided forward of the exhaust port 34b. Similarly, the scroll intake passage member 152s is provided forward of the exhaust port 34b. As a matter of course, the turbine wheel 81 is provided forward of the exhaust port 34b.

As shown in FIG. 10, the upstream end 165su of the scroll exhaust passage member 165s is formed at a lower part of the scroll exhaust passage member 165s. The upstream end 165su of the scroll exhaust passage member 165s is positioned forward of the exhaust port 34b. At least a part of the upstream end 165su of the scroll exhaust passage member 165s is positioned below the exhaust port 34b. At the upstream end 165su of the scroll exhaust passage member 165s, the flow direction of the exhaust gas is along the front-rear direction. The upstream end 165su of the scroll exhaust passage member 165s may be provided at a rear part or a front part of the scroll exhaust passage member 165s. The downstream end of the scroll exhaust passage member 165s is formed at a central part of the scroll exhaust passage member 165s. As shown in FIG. 11, the downstream end of the scroll intake passage member 152s is formed at a lower part of the scroll intake passage member 152s. The downstream end of the scroll intake passage member 152s may be formed at an upper part of the scroll intake passage member 152s. The downstream end of the scroll intake passage member 152s may be formed at a rear part or a front part of the scroll intake passage member 152s. The upstream end of the scroll intake passage member 152s is formed at a central part of the scroll intake passage member 152s.

As shown in FIG. 10, an axis passing the center of the exhaust port 34b when viewed in the left-right direction is a central axis Cu2. The direction of the central axis Cu2 is identical to the flow direction of the exhaust gas at the exhaust port 34b. When viewed in the left-right direction, the scroll exhaust passage member 165s and the scroll intake passage member 152s are provided straight above the central axis Cu2. As a matter of course, the turbine wheel 81 is provided straight above the central axis Cu2 when viewed in the left-right direction. A part of the scroll exhaust passage member 165s may be provided straight below the central axis Cu2 when viewed in the left-right direction. At least a part of the scroll exhaust passage member 165s is preferably provided straight above the central axis Cu2. Similarly, at least a part of the scroll intake passage member 152s is preferably provided straight above the central axis Cu2.

As shown in FIG. 10, when viewed in the left-right direction, the scroll exhaust passage member 165s and the scroll intake passage member 152s are provided in front of the engine main body 20. Furthermore, when viewed in the left-right direction, the scroll exhaust passage member 165s and the scroll intake passage member 152s are provided forward of the engine main body 20. As a matter of course, when viewed in the left-right direction, the scroll exhaust passage member 165s and the scroll intake passage member 152s are provided forward of the crankcase member 20a. The scroll exhaust passage member 165s and the scroll intake passage member 152s are provided between the plane Se3 and the plane Se4. The plane Se3 is a plane which passes the uppermost end of the crankcase member 20a and is orthogonal to the up-down direction. The plane Se4 is a plane which passes the rearmost end of the crankcase member 20a and is orthogonal to the up-down direction. When viewed in the left-right direction, the scroll exhaust passage member 165s and the scroll intake passage member 152s are provided in front of the crankcase member 20a. As a matter of course, the turbine wheel 81 is provided in front of the crankcase member 20a when viewed in the left-right direction. When viewed in the left-right direction, a part of the scroll exhaust passage member 165s may not be provided in front of the crankcase member 20a. For example, at least a part of the scroll exhaust passage member 165s may be provided straight above the plane Se3. When viewed in the left-right direction, at least a part of the scroll exhaust passage member 165s is preferably provided in front of the crankcase member 20a. Similarly, when viewed in the left-right direction, at least a part of the scroll intake passage member 152s is preferably provided in front of the crankcase member 20a. At least a part of the turbine wheel 81 is preferably provided in front of the crankcase member 20a when viewed in the left-right direction.

As shown in FIG. 11, the scroll exhaust passage member 165s and the scroll intake passage member 152s are provided between the plane Se5 and the plane Se6. The plane Se5 is a plane which passes the leftmost end of the crankcase member 20a and is orthogonal to the left-right direction. The plane Se6 is a plane which passes the rightmost end of the crankcase member 20a and is orthogonal to the left-right direction. When viewed in the front-back direction, the scroll exhaust passage member 165s and the scroll intake passage member 152s overlap the crankcase member 20a. As a matter of course, the turbocharger 80 overlaps the crankcase member 20a when viewed in the front-back direction. When viewed in the front-rear direction, at least a part of the scroll intake passage member 152s may not overlap the engine main body 20. Furthermore, when viewed in the front-rear direction, a part of the scroll exhaust passage member 165s may not overlap the engine main body 20. When viewed in the front-rear direction, at least a part of the scroll exhaust passage member 165s preferably overlaps the engine main body 20. The scroll exhaust passage member 165s and the scroll intake passage member 152s are provided in front of the crankcase member 20a. As a matter of course, the turbocharger 80 is provided in front of the crankcase member 20a. A part of the scroll exhaust passage member 165s may not be provided in front of the crankcase member 20a. At least a part of the scroll intake passage member 152s may not be provided in front of the crankcase member 20a.

As shown in FIG. 10, when viewed in the left-right direction, the scroll exhaust passage member 165s and the scroll intake passage member 152s are provided in front of the linear line La1. In other words, the scroll exhaust passage member 165s and the scroll intake passage member 152s are provided forward of the crankshaft axis Cr. When viewed in the left-right direction, the scroll exhaust passage member 165s and the scroll intake passage member 152s are provided in front of (straight above) the linear line La2. The linear line La2 is a linear line which is orthogonal to the cylinder axial line Cy and passes the crankshaft axis Cr when viewed in the left-right direction. The scroll intake passage member 152s and the scroll intake passage member 152s are provided above the crankshaft axis Cr. Only a part of the scroll exhaust passage member 165s may be provided above the crankshaft axis Cr. At least a part of the scroll exhaust passage member 165s is preferably provided above the crankshaft axis Cr. At least a part of the scroll intake passage member 152s is preferably provided above the crankshaft axis Cr.

As shown in FIG. 10, when viewed in the left-right direction, the scroll exhaust passage member 165s and the scroll intake passage member 152s do not overlap the vehicle body frame 4. As a matter of course, the turbine wheel 81 does not overlap the vehicle body frame 4 when viewed in the left-right direction. When viewed in the left-right direction, at least a part of the scroll exhaust passage member 165s may overlap the vehicle body frame 4. When viewed in the left-right direction, at least a part of the scroll intake passage member 152s may overlap the vehicle body frame 4. At least a part of the turbine wheel 81 may overlap the vehicle body frame 4 when viewed in the left-right direction. The shape of the vehicle body frame 4 is not limited to the shape shown in FIG. 9.

As shown in FIG. 10, when viewed in the left-right direction, the scroll exhaust passage member 165s and the scroll intake passage member 152s are provided inside a rectangular region having the line segment Lw1 and the line segment Lw2 as two sides. The line segment Lw1 is a line segment which is the lowest one of line segments connecting points on the outline of the engine main body 20 with points on the outline of the front wheel unit 2 when viewed in the left-right direction. The line segment Lw2 is a line segment which is the highest one of line segments connecting points on the outline of the engine main body 20 with points on the outline of the front wheel unit 2 when viewed in the left-right direction. When viewed in the left-right direction, the scroll exhaust passage member 165s and the scroll intake passage member 152s are provided inside the above-described quadrangle and do not overlap the engine main body 20. In other words, when viewed in the left-right direction, the scroll exhaust passage member 165s and the scroll intake passage member 152s are provided between the engine main body 20 and the front wheel unit 2. When viewed in the left-right direction, only a part of the scroll exhaust passage member 165s may be provided between the engine main body 20 and the front wheel unit 2. For example, when viewed in the left-right direction, a part of the scroll exhaust passage member 165s may overlap the engine main body 20. Furthermore, for example, a part of the scroll exhaust passage member 165s may be positioned straight above the line segment Lw2. When viewed in the left-right direction, at least a part of the scroll exhaust passage member 165s is preferably provided between the engine main body 20 and the front wheel unit 2. Being similar to the scroll exhaust passage member 165s, when viewed in the left-right direction, at least a part of the scroll intake passage member 152s is preferably provided between the engine main body 20 and the front wheel unit 2.

As shown in FIG. 10, the scroll exhaust passage member 165s and the scroll intake passage member 152s are provided below the horizontal plane Sw1. The horizontal plane Sw1 is a horizontal plane passing the upper end of the front wheel unit 2. As a matter of course, the turbine wheel 81 is provided below the horizontal plane Sw1. A part of the scroll exhaust passage member 165s may be provided above the horizontal plane Sw1. At least a part of the scroll exhaust passage member 165s is preferably provided below the horizontal plane Sw1. At least a part of the scroll intake passage member 152s is preferably provided below the horizontal plane Sw1 in the same manner as the scroll exhaust passage member 165s. A part of the turbine wheel 81 may be provided above the horizontal plane Sw1. At least a part of the turbine wheel 81 is preferably provided below the horizontal plane Sw1.

As shown in FIG. 10, the scroll exhaust passage member 165s and the scroll intake passage member 152s are provided straight above the horizontal plane Sw2. The horizontal plane Sw2 is a horizontal plane passing the center of the front wheel unit 2.

In the left-right direction, the positions of the scroll exhaust passage member 165s and the scroll intake passage member 152s are substantially identical to the positions of the scroll exhaust passage member 65s and the scroll intake passage member 52s of the First Embodiment.

As shown in FIG. 10 and FIG. 11, the catalyst portion 162 includes the main catalyst 62a and the cylindrical part 162b. The cylindrical part 162b is connected to the downstream end of the upstream collective exhaust passage member 165 and the upstream end of the downstream exhaust passage member 166. The cylindrical part 162b may be integrally molded with a part of the upstream collective exhaust passage member 165. The cylindrical part 162b may be integrally molded with a part of the downstream exhaust passage member 166. Catalysts other than the main catalyst 62a are not provided in the exhaust passage member 160.

The central axis C2 of the catalyst portion 162 is coaxial with the central axis of the main catalyst 62a. The central axis C2 of the catalyst portion 162 indicates the central axis of the cylindrical part 162b. The length in the flow direction of the exhaust gas of the catalyst portion 162 is identical to the length in the flow direction of the exhaust gas of the main catalyst 62a. The center of the upstream end of the main catalyst 62a is identical in position to the center of the upstream end of the catalyst portion 162. The center of the downstream end of the main catalyst 162a is identical in position to the center of the downstream end of the catalyst portion 162.

As shown in FIG. 10, when viewed in the left-right direction, the central axis C2 of the catalyst portion 162 is inclined in the front-rear direction with respect to the up-down direction. When viewed in the left-right direction, an inclination angle of the central axis C2 with respect to the up-down direction is referred to as an inclination angle θ2. The inclination angle θ2 is not limited to the angle shown in FIG. 10. The inclination angle θ2 is greater than 0 degrees. The inclination angle θ2 is less than 45 degrees. Due to this, when viewed in the left-right direction, the central axis C2 is along the up-down direction. In other words, when viewed in the left-right direction, the flow direction of the exhaust gas flowing in the catalyst portion 162 is along the up-down direction. The inclination angle θ2 may be 0 degrees. The inclination angle θ2 may be greater than 45 degrees. In other words, when viewed in the left-right direction, the flow direction of the exhaust gas flowing in the catalyst portion 162 may be along the front-back direction. As shown in FIG. 11, when viewed in the front-rear direction, the central axis C2 of the catalyst portion 162 is along the up-down direction. To be more specific, when viewed in the front-rear direction, the central axis C2 of the catalyst portion 162 is substantially in parallel to the up-down direction. When viewed in the front-rear direction, the central axis C2 of the catalyst portion 162 may be tilted in the left-right direction with respect to the up-down direction. Although not illustrated, when viewed in the up-down direction, the central axis C2 of the catalyst portion 162 is along the front-rear direction. When viewed in the up-down direction, the central axis C2 of the catalyst portion 162 may be along the left-right direction. The flow direction of the exhaust gas flowing in the catalyst portion 162 is along the up-down direction.

As shown in FIG. 10, a part of the catalyst portion 162 is provided between the plane Se1 and the plane Se2. The plane Se1 is a plane which passes the frontmost end of the crankcase member 20a and is orthogonal to the front-rear direction. The plane Se2 is a plane which passes the rearmost end of the crankcase member 20a and is orthogonal to the front-rear direction. When viewed in the left-right direction, a part of the catalyst portion 162 is provided straight below the crankcase member 20a. The catalyst portion 162 may be entirely in front of the plane Se1. In other words, when viewed in the left-right direction, the catalyst portion 162 may not be entirely provided straight below the crankcase member 20a. As shown in FIG. 10, the catalyst portion 162 is provided between the plane Se3 and the plane Se4. The plane Se3 is a plane which passes the uppermost end of the crankcase member 20a and is orthogonal to the up-down direction. The plane Se4 is a plane which passes the rearmost end of the crankcase member 20a and is orthogonal to the up-down direction. When viewed in the left-right direction, the catalyst portion 162 is provided in front of the crankcase member 20a. When viewed in the left-right direction, only a part of the catalyst portion 162 may be provided in front of the crankcase member 20a. A part of the catalyst portion 162 is preferably provided in front of the crankcase member 20a. As shown in FIG. 11, the catalyst portion 162 is provided between the plane Se5 and the plane Se6. The plane Se5 is a plane which passes the leftmost end of the crankcase member 20a and is orthogonal to the left-right direction. The plane Se6 is a plane which passes the rightmost end of the crankcase member 20a and is orthogonal to the left-right direction. When viewed in the front-rear direction, at least a part of the catalyst portion 162 overlaps the crankcase member 20a. When viewed in the front-rear direction, at least a part of the catalyst portion 162 overlaps the engine main body 20. Although not illustrated, when viewed in the up-down direction, at least a part of the catalyst portion 162 overlaps the engine main body 20. At least a part of a catalyst portion 162 is provided in front of the engine main body 20. At least a part of a catalyst portion 162 is provided in front of the crankcase member 20a. A part of a catalyst portion 162 is provided straight below the engine main body 20.

When viewed in the left-right direction, the catalyst portion 162 is provided in front of the linear line La1. In other words, the catalyst portion 162 is provided forward of the crankshaft axis Cr. The catalyst portion 162 is provided below the crankshaft axis Cr. A part of the catalyst portion 162 may be provided above the crankshaft axis Cr. At least a part of the catalyst portion 162 is preferably provided below the crankshaft axis Cr. When viewed in the left-right direction, the catalyst portion 162 is provided in front of the cylinder axial line Cy. When viewed in the left-right direction, a part of the catalyst portion 162 is provided in front of (straight above) the linear line La2. The linear line La2 is a linear line which is orthogonal to the cylinder axial line Cy and passes the crankshaft axis Cr when viewed in the left-right direction. When viewed in the left-right direction, the catalyst portion 162 may be entirely provided in front of the linear line La2. When viewed in the left-right direction, at least a part of the catalyst portion 162 is preferably provided in front of the linear line La2.

As shown in FIG. 10, a plane which passes the lowermost end of the scroll exhaust passage member 165s and is orthogonal to the up-down direction is termed a plane Ss4. The catalyst portion 162 is provided straight below the plane Ss4. In other words, the catalyst portion 162 is provided below the scroll exhaust passage member 165s. Therefore the catalyst portion 162 is provided below the turbine wheel 81. As a matter of course, the downstream end of the catalyst portion 162 is provided below of the turbine wheel 81. When viewed in the left-right direction, a part of the catalyst portion 162 is provided straight below the scroll exhaust passage member 165s. In other words, when viewed in the left-right direction, a part of the catalyst portion 162 and a part of the scroll exhaust passage member 165s are side by side in the up-down direction. When viewed in the left-right direction, a part of the catalyst portion 162 may not be provided straight below the scroll exhaust passage member 165s. When viewed in the left-right direction, the catalyst portion 162 may be entirely provided straight below the scroll exhaust passage member 165s. When viewed in the left-right direction, at least a part of the catalyst portion 162 is preferably provided straight below the scroll exhaust passage member 165s. When viewed in the left-right direction, the catalyst portion 162 is not provided straight below the turbine wheel 81. When viewed in the left-right direction, a part of the catalyst portion 162 may be provided straight below the turbine wheel 81.

As shown in FIG. 10, a part of the catalyst portion 162 is disposed behind the plane Ss3. The plane Ss3 is a plane which passes the rearmost end of the scroll exhaust passage member 165s and is orthogonal to the front-rear direction. A part of the catalyst portion 162 is therefore provided rearward of the scroll exhaust passage member 165s. At least a part of catalyst portion 162 may be provided in front of the plane Ss3. At least a part of catalyst portion 162 may be provided behind the plane Ss3.

As shown in FIG. 11, the catalyst portion 162 is provided rightward of the turbine wheel 81. In other words, the catalyst portion 162 is provided on the side opposite to the compressor wheel 82 of the turbine wheel 81.

As shown in FIG. 10, when viewed in the left-right direction, the catalyst portion 162 is provided in a quadrangle having the line segment Lw1 and the line segment Lw2 as two sides. The line segment Lw1 is a line segment which is the lowest one of line segments connecting points on the outline of the engine main body 20 with points on the outline of the front wheel unit 2 when viewed in the left-right direction. The line segment Lw2 is a line segment which is the highest one of line segments connecting points on the outline of the engine main body 20 with points on the outline of the front wheel unit 2 when viewed in the left-right direction. When viewed in the left-right direction, the catalyst portion 162 is provided inside the above-described quadrangle and does not overlap the engine main body 20. In other words, when viewed in the left-right direction, the catalyst portion 162 is provided between the engine main body 20 and the front wheel unit 2. When viewed in the left-right direction, only a part of the catalyst portion 162 may be provided between the engine main body 20 and the front wheel unit 2. For example, when viewed in the left-right direction, a part of the catalyst portion 162 may overlap the engine main body 20. When viewed in the left-right direction, at least a part of the catalyst portion 162 is preferably provided between the engine main body 20 and the front wheel unit 2.

As shown in FIG. 10, when viewed in the left-right direction, the catalyst portion 162 is provided straight above the line segment Lw3. The line segment Lw3 is a line segment connecting the lowermost end of the engine main body 20 with the lowermost end of the front wheel unit 2 when viewed in the left-right direction. When viewed in the left-right direction, only a part of the catalyst portion 162 may be provided straight above the line segment Lw3. When viewed in the left-right direction, at least a part of the catalyst portion 162 is preferably provided straight above the line segment Lw3 and its extension.

As shown in FIG. 10, a part of the catalyst portion 162 is disposed below the horizontal plane Sw2. The horizontal plane Sw2 is a horizontal plane passing the center of the front wheel unit 2.

In the left-right direction, the position of the catalyst portion 162 is substantially identical to the position of the catalyst portion 62 of the First Embodiment.

The engine unit 111 of the present embodiment may include an upstream sub-catalyst 47U as in Modification 1 of the First Embodiment. The engine unit 111 of the present embodiment may include a downstream sub-catalyst 47D as in Modification 1 of the First Embodiment.

In regard to the arrangements similar to those in the First Embodiment, the motorcycle 101 of the present embodiment exerts effects similar to the effects described in the First Embodiment. The motorcycle 101 of the present embodiment has the following characteristics.

The flow direction of the exhaust gas flowing in the catalyst portion 162 is along the up-down direction. The length in the front-rear direction of the catalyst portion 162 is therefore shorter than the length in the up-down direction of the catalyst portion 162. It is therefore possible to restrain the increase in size of the motorcycle 101 in the front-back direction even when the catalyst portion 162 is provided in front of the engine main body 20.

When viewed in the left-right direction, at least a part of the catalyst portion 162 is provided in front of the linear line La2. The linear line La2 is a linear line which is orthogonal to the cylinder axial line Cy and passes the crankshaft axis Crwhen viewed in the left-right direction. Due to this, the path length from the combustion chamber 30 to the catalyst portion 162 is short when compared to cases where the catalyst portion 162 is entirely provided behind the linear line La2 when viewed in the left-right direction. For this reason, the temperature of the exhaust gas flowing into the main catalyst 62a is further increased. As a result, at the cold start of the engine unit 111, the time required to activate the deactivated main catalyst 62a is shortened. Due to this, the exhaust gas purification performance of the main catalyst 62a is further improved.

When viewed in the left-right direction, at least a part of the catalyst portion 162 is provided straight below the scroll exhaust passage member 165s. In other words, when viewed in the left-right direction, at least a part of the catalyst portion 162 and at least a part of the scroll exhaust passage member 165s are side by side in the up-down direction. The space where the catalyst portion 162 and the turbocharger 80 are provided is shortened in the front-rear direction. Due to this, the increase in size of the motorcycle 101 is restrained in the front-back direction.

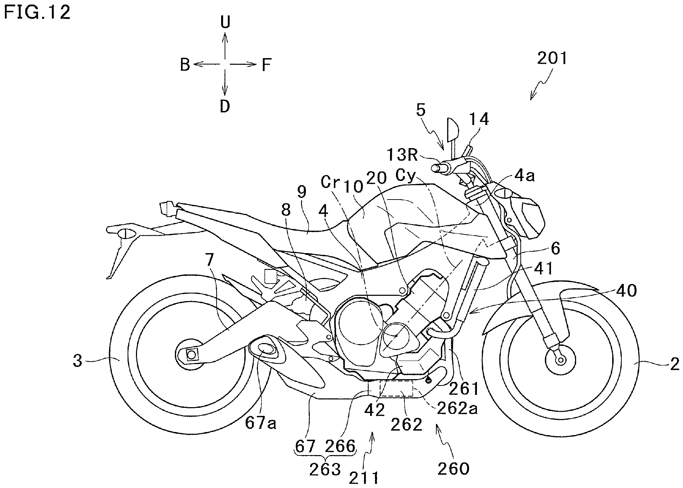

### (Third Embodiment described in the paragraphs {00178] to [0206] and shown in Figs. 12 to 14 is not encompassed in the scope of the present invention)

The following will describe the Third Embodiment of the present invention with reference to FIG. 12, FIG. 13, and FIG. 14. In the Third Embodiment, members identical to those in the First Embodiment above are indicated by the same reference numerals and detailed descriptions thereof may be omitted.

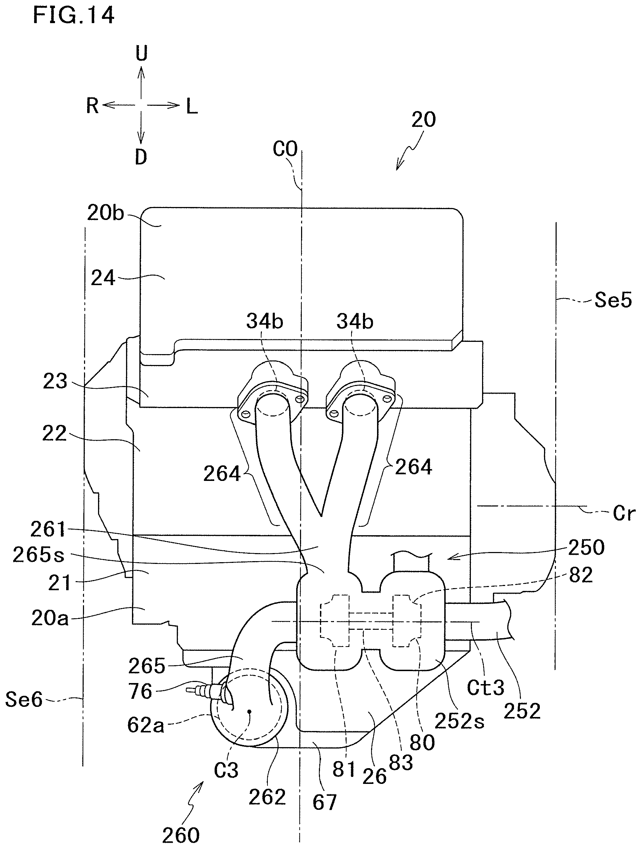

As shown in FIG. 12, in a motorcycle 201 of the present embodiment, the structure of an engine unit 211 is different from the structure of the engine unit 11 of the First Embodiment. The Third Embodiment is identical to the First Embodiment other than this. The engine unit 211 includes an engine main body 20, an exhaust passage member 260, an intake passage member 250 (see FIG. 14) and a water cooling device 40. As shown in FIG. 14, the shape of a main intake passage member 252 of the intake passage member 250 is different from the shape of the main intake passage member 52 of the First Embodiment. Except for this point, the intake passage member 250 is identical to the intake passage member 50 of the First Embodiment shown in FIG. 5.

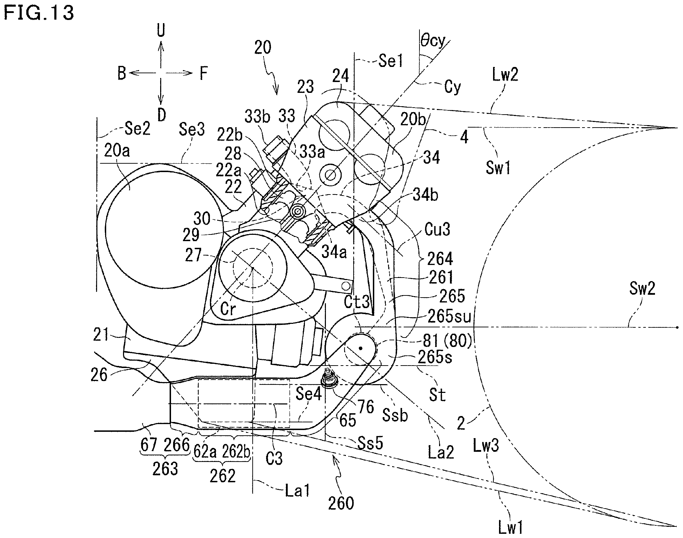

As shown in FIG. 13, the exhaust passage member 260 includes an upstream exhaust passage member 261, a catalyst portion 262, and a downstream collective exhaust passage member 263. The upstream exhaust passage member 261 includes two independent exhaust passage members 264 and an upstream collective exhaust passage member 265. The downstream collective exhaust passage member 263 includes a downstream exhaust passage member 266 and a muffler member 67. The independent exhaust passage members 264 are different in shape from the independent exhaust passage members 264 of the First Embodiment. The upstream collective exhaust passage member 265 is different in shape from the upstream collective exhaust passage member 65 of the First Embodiment. The downstream exhaust passage member 266 is different in shape from the downstream exhaust passage member 66 of the First Embodiment. Except for these points, the exhaust passage member 260 is identical to the exhaust passage member 60 of the First Embodiment shown in FIG. 5.

The engine unit 211 includes the turbocharger 80. As shown in FIG. 14, the turbine wheel 81 of the turbocharger 80 is provided in the upstream collective exhaust passage member 265. The compressor wheel 82 of the turbocharger 80 is provided in the main intake passage member 252. The turbine wheel 81 is provided to the right of the compressor wheel 82. The central axis Ct3 of the connecting shaft 83 is substantially in parallel to the left-right direction. The upstream collective exhaust passage member 265 includes a scroll exhaust passage member 265s. The main intake passage member 252 includes a scroll intake passage member 252s. The scroll exhaust passage member 265s is formed to wholly surround the outer circumference of the turbine wheel 81. The scroll exhaust passage member 265s is identical in size with the scroll exhaust passage member 65s of the First Embodiment. The scroll intake passage member 252s is formed to wholly surround the outer circumference of the compressor wheel 82. The scroll intake passage member 152s is identical in size with the scroll intake passage member 52s of the First Embodiment. The flow of the exhaust gas and the flow of the air in the turbocharger 80 are identical to those in the First Embodiment.

As shown in FIG. 13, the scroll exhaust passage member 265s and the scroll intake passage member 252s are provided below the exhaust port 34b. A plane which passes the rearmost end of the scroll exhaust passage member 265s and is orthogonal to the front-rear direction is termed a plane Ss5. The exhaust port 34b is positioned in front of the plane Ss5. A part of the scroll exhaust passage member 265s is provided rearward of the exhaust port 34b. Similarly, a part of the scroll intake passage member 252s is provided rearward of the exhaust port 34b. A part of the turbine wheel 81 is provided below the exhaust port 34b. The turbine wheel 81 is provided forward of the exhaust port 34b.

As shown in FIG. 13, the upstream end 265su of the scroll exhaust passage member 265s is formed at an upper part of the scroll exhaust passage member 265s. The upstream end 265su of the scroll exhaust passage member 265s is positioned below the exhaust port 34b. At least a part of the upstream end 265su of the scroll exhaust passage member 265s is positioned forward of the exhaust port 34b. At the upstream end 265su of the scroll exhaust passage member 265s, the flow direction of the exhaust gas is along the up-down direction. When viewed in the left-right direction, the flow direction of the exhaust gas from the upstream end of the exhaust passage member 260 to the scroll exhaust passage member 265s is along the up-down direction. The downstream end of the scroll exhaust passage member 265s is formed at a central part of the scroll exhaust passage member 265s. As shown in FIG. 14, the downstream end of the scroll intake passage member 252s is formed at an upper part of the scroll intake passage member 252s. The downstream end of the scroll intake passage member 252s may be formed at a lower part of the scroll intake passage member 252s. The downstream end of the scroll intake passage member 252s may be formed at a rear part or a front part of the scroll intake passage member 252s. The upstream end of the scroll intake passage member 252s is formed at a central part of the scroll intake passage member 252s.

As shown in FIG. 13, an axis passing the center of the exhaust port 34b when viewed in the left-right direction is a central axis Cu3. The direction of the central axis Cu3 is identical to the flow direction of the exhaust gas at the exhaust port 34b. When viewed in the left-right direction, the scroll exhaust passage member 265s and the scroll intake passage member 252s are provided straight below the central axis Cu3. As a matter of course, the turbine wheel 81 is provided straight below the central axis Cu3 when viewed in the left-right direction. A part of the scroll exhaust passage member 265s may be provided straight above the central axis Cu3 when viewed in the left-right direction. At least a part of the scroll exhaust passage member 265s is preferably provided straight below the central axis Cu3. Similarly, at least a part of the scroll intake passage member 252s is preferably provided straight below the central axis Cu3.

As shown in FIG. 13, when viewed in the left-right direction, the scroll exhaust passage member 265s and the scroll intake passage member 252s are provided straight below the engine main body 20. As a matter of course, the turbine wheel 81 is provided straight below the engine main body 20 when viewed in the left-right direction. When viewed in the left-right direction, only a part of the scroll exhaust passage member 265s may be provided straight below the engine main body 20. At least a part of the scroll exhaust passage member 265s is preferably provided straight below the engine main body 20. Similarly, at least a part of the scroll intake passage member 252s is preferably provided straight below the engine main body 20. As shown in FIG. 13, a part of the scroll exhaust passage member 265s and a part of the scroll intake passage member 252s are provided between the plane Se1 and the plane Se2. The plane Se1 is a plane which passes the frontmost end of the crankcase member 20a and is orthogonal to the front-rear direction. The plane Se2 is a plane which passes the rearmost end of the crankcase member 20a and is orthogonal to the front-rear direction. In other words, when viewed in the left-right direction, a part of the scroll exhaust passage member 265s and a part of the scroll intake passage member 252s are provided straight below the crankcase member 20a. As shown in FIG. 13, the scroll exhaust passage member 265s and the scroll intake passage member 252s are provided between the plane Se3 and the plane Se4. The plane Se3 is a plane which passes the uppermost end of the crankcase member 20a and is orthogonal to the up-down direction. The plane Se4 is a plane which passes the rearmost end of the crankcase member 20a and is orthogonal to the up-down direction. When viewed in the left-right direction, the scroll exhaust passage member 265s and the scroll intake passage member 252s are provided in front of the crankcase member 20a.

As shown in FIG. 14, the scroll exhaust passage member 265s and the scroll intake passage member 252s are provided between the plane Se5 and the plane Se6. The plane Se5 is a plane which passes the leftmost end of the crankcase member 20a and is orthogonal to the left-right direction. The plane Se6 is a plane which passes the rightmost end of the crankcase member 20a and is orthogonal to the left-right direction. When viewed in the front-back direction, the scroll exhaust passage member 265s overlaps the crankcase member 20a. When viewed in the front-rear direction, at least a part of the scroll intake passage member 252s may not overlap the engine main body 20. When viewed in the front-rear direction, a part of the scroll exhaust passage member 265s may not overlap the engine main body 20. The scroll exhaust passage member 265s and the scroll intake passage member 252s are provided in front of the crankcase member 20a.

As shown in FIG. 13, when viewed in the left-right direction, the scroll exhaust passage member 265s and the scroll intake passage member 252s are provided in front of the linear line La1. In other words, the scroll exhaust passage member 265s and the scroll intake passage member 252s are provided forward of the crankshaft axis Cr. When viewed in the left-right direction, a part of the scroll exhaust passage member 265s and a part of the scroll intake passage member 252s are provided in front of (straight above) the linear line La2. The linear line La2 is a linear line which is orthogonal to the cylinder axial line Cy and passes the crankshaft axis Cr when viewed in the left-right direction. In other words, the scroll exhaust passage member 265s and the scroll intake passage member 252s may be entirely provided in front of (straight above) the linear line La2. The scroll intake passage member 252s and the scroll intake passage member 252s are provided below the crankshaft axis Cr. Only a part of the scroll exhaust passage member 265s may be provided below the crankshaft axis Cr. At least a part of the scroll exhaust passage member 265s is preferably provided below the crankshaft axis Cr. Similarly, at least a part of the scroll intake passage member 252s is preferably provided below the crankshaft axis Cr.

As shown in FIG. 13, when viewed in the left-right direction, the scroll exhaust passage member 265s and the scroll intake passage member 252s do not overlap the vehicle body frame 4. As a matter of course, the turbine wheel 81 does not overlap the vehicle body frame 4 when viewed in the left-right direction.

As shown in FIG. 13, when viewed in the left-right direction, the scroll exhaust passage member 265s and the scroll intake passage member 252s are provided inside a rectangular region having the line segment Lw1 and the line segment Lw2 as two sides. The line segment Lw1 is a line segment which is the lowest one of line segments connecting points on the outline of the engine main body 20 with points on the outline of the front wheel unit 2 when viewed in the left-right direction. The line segment Lw2 is a line segment which is the highest one of line segments connecting points on the outline of the engine main body 20 with points on the outline of the front wheel unit 2 when viewed in the left-right direction. When viewed in the left-right direction, the scroll exhaust passage member 265s and the scroll intake passage member 252s are provided inside the above-described quadrangle and do not overlap the engine main body 20. In other words, when viewed in the left-right direction, the scroll exhaust passage member 265s and the scroll intake passage member 252s are provided between the engine main body 20 and the front wheel unit 2.

As shown in FIG. 13, the scroll exhaust passage member 265s and the scroll intake passage member 252s are provided below the horizontal plane Sw1. The horizontal plane Sw1 is a horizontal plane passing the upper end of the front wheel unit 2.

As shown in FIG. 13, a part of the scroll exhaust passage member 265s is provided straight above the horizontal plane Sw2. A part of the scroll intake passage member 252s is provided straight above the horizontal plane Sw2. The horizontal plane Sw2 is a horizontal plane passing the center of the front wheel unit 2. In other words, the scroll exhaust passage member 265s and the scroll intake passage member 252s may be entirely provided straight below the horizontal plane Sw2. Alternatively, the scroll exhaust passage member 265s and the scroll intake passage member 252s may be entirely provided straight above the horizontal plane Sw2.

In the left-right direction, the positions of the scroll exhaust passage member 265s and the scroll intake passage member 252s are substantially identical to the positions of the scroll exhaust passage member 65s and the scroll intake passage member 52s of the First Embodiment.

As shown in FIG. 13 and FIG. 14, the catalyst portion 262 includes the main catalyst 62a and the cylindrical part 262b. The cylindrical part 262b is connected to the downstream end of the upstream collective exhaust passage member 265 and the upstream end of the downstream exhaust passage member 266. The cylindrical part 262b may be integrally molded with a part of the upstream collective exhaust passage member 265. The cylindrical part 262b may be integrally molded with a part of the downstream exhaust passage member 266. Catalysts other than the main catalyst 62a are not provided in the exhaust passage member 260.

The central axis C3 of the catalyst portion 262 is coaxial with the central axis of the main catalyst 62a. The central axis C3 of the catalyst portion 262 indicates the central axis of the cylindrical part 262b. The length in the flow direction of the exhaust gas of the catalyst portion 262 is identical to the length in the flow direction of the exhaust gas of the main catalyst 62a. The center of the upstream end of the main catalyst 62a is identical in position to the center of the upstream end of the catalyst portion 262. The center of the downstream end of the main catalyst 62a is identical in position to the center of the downstream end of the catalyst portion 262.

As shown in FIG. 13, when viewed in the left-right direction, the central axis C3 of the catalyst portion 262 is along the front-rear direction. To be more specific, when viewed in the left-right direction, the central axis C3 of the catalyst portion 262 is substantially in parallel to the front-rear direction. When viewed in the left-right direction, the flow direction of the exhaust gas flowing in the catalyst portion 262 is along the front-rear direction. When viewed in the left-right direction, the central axis C3 of the catalyst portion 262 may be tilted in the up-down direction with respect to the front-rear direction. As shown in FIG. 14, when viewed in the front-rear direction, the central axis C3 of the catalyst portion 262 is substantially along the front-rear direction. When viewed in the front-rear direction, the central axis C3 of the catalyst portion 262 may be along the left-right direction. Although not illustrated, when viewed in the up-down direction, the central axis C3 of the catalyst portion 262 is along the front-rear direction. When viewed in the up-down direction, the central axis C3 of the catalyst portion 262 may be along the left-right direction. The flow direction of the exhaust gas flowing in the catalyst portion 262 is along the front-rear direction. The flow direction of the exhaust gas flowing in the catalyst portion 262 may be along the left-right direction. The flow direction of exhaust gas flowing in the catalyst portion 262 is preferably along the horizontal direction.

As shown in FIG. 13, when viewed in the left-right direction, the catalyst portion 262 is provided straight below the engine main body 20. The catalyst portion 262 is provided between the plane Se1 and the plane Se2. The plane Se1 is a plane which passes the frontmost end of the crankcase member 20a and is orthogonal to the front-rear direction. The plane Se2 is a plane which passes the rearmost end of the crankcase member 20a and is orthogonal to the front-rear direction. When viewed in the left-right direction, a part of the catalyst portion 262 is provided straight below the crankcase member 20a. As shown in FIG. 13, a part of the catalyst portion 262 is provided between the plane Se3 and the plane Se4. The plane Se3 is a plane which passes the uppermost end of the crankcase member 20a and is orthogonal to the up-down direction. The plane Se4 is a plane which passes the rearmost end of the crankcase member 20a and is orthogonal to the up-down direction. When viewed in the left-right direction, a part of the catalyst portion 262 is provided in front of the crankcase member 20a. As shown in FIG. 14, the catalyst portion 262 is provided between the plane Se5 and the plane Se6. The plane Se5 is a plane which passes the leftmost end of the crankcase member 20a and is orthogonal to the left-right direction. The plane Se6 is a plane which passes the rightmost end of the crankcase member 20a and is orthogonal to the left-right direction. When viewed in the front-rear direction, the catalyst portion 262 does not overlap the crankcase member 20a. Although not illustrated, when viewed in the up-down direction, at least a part of the catalyst portion 262 overlaps the crankcase member 20a. At least a part of a catalyst portion 262 is provided straight below the crankcase member 20a.

When viewed in the left-right direction, a part of the catalyst portion 262 is provided behind the linear line La1. In other words, a part of the catalyst portion 262 is provided rearward of the crankshaft axis Cr. When viewed in the left-right direction, the catalyst portion 262 is provided behind (straight below) the linear line La2. The linear line La2 is a linear line which is orthogonal to the cylinder axial line Cy and passes the crankshaft axis Cr when viewed in the left-right direction. When viewed in the left-right direction, the catalyst portion 262 is provided in front of the cylinder axial line Cy. When viewed in the left-right direction, the catalyst portion 262 is provided straight below the crankshaft axis Cr.

As shown in FIG. 13, a plane which passes the lowermost end of the scroll exhaust passage member 265s and is orthogonal to the up-down direction is termed a plane Ss6. A part of the catalyst portion 262 is provided straight below the plane Ss6. To put it differently, a part of the catalyst portion 262 is provided below the scroll exhaust passage member 265s. Alternatively, the catalyst portion 262 may be entirely provided below the scroll exhaust passage member 265s. A plane which passes the lowermost end of the turbine wheel 81 and is orthogonal to the up-down direction is termed a plane St. The catalyst portion 262 is provided straight below the plane St. In other words, the catalyst portion 262 is provided below the turbine wheel 81. The downstream end of the catalyst portion 262 is also provided below the turbine wheel 81.

As shown in FIG. 13, the catalyst portion 262 is disposed behind the plane Ss5. The plane Ss5 is a plane which passes the rearmost end of the scroll exhaust passage member 265s and is orthogonal to the front-rear direction. Due to this, the catalyst portion 262 is provided rearward of the scroll exhaust passage member 265s. A part of the catalyst portion 262 may be provided in front of the plane Ss5.

As shown in FIG. 14, the catalyst portion 262 is provided rightward of the turbine wheel 81. In other words, the catalyst portion 262 is provided on the side opposite to the compressor wheel 82 of the turbine wheel 81.

As shown in FIG. 13, when viewed in the left-right direction, a part of the catalyst portion 262 is provided in a quadrangle having the line segment Lw1 and the line segment Lw2 as two sides. The line segment Lw1 is a line segment which is the lowest one of line segments connecting points on the outline of the engine main body 20 with points on the outline of the front wheel unit 2. The line segment Lw2 is a line segment which is the highest one of line segments connecting points on the outline of the engine main body 20 with points on the outline of the front wheel unit 2 when viewed in the left-right direction. When viewed in the left-right direction, a part of the catalyst portion 262 is provided inside the above-described quadrangle and does not overlap the engine main body 20. In other words, when viewed in the left-right direction, a part of the catalyst portion 262 is provided between the engine main body 20 and the front wheel unit 2.

As shown in FIG. 13, when viewed in the left-right direction, a part of the catalyst portion 262 is provided straight above the line segment Lw3. The line segment Lw3 is a line segment connecting the lowermost end of the engine main body 20 with the lowermost end of the front wheel unit 2 when viewed in the left-right direction. When viewed in the left-right direction, only a part of the catalyst portion 262 may be provided straight above the line segment Lw3. When viewed in the left-right direction, at least a part of the catalyst portion 262 is preferably provided straight above the line segment Lw3 and its extension.

As shown in FIG. 13, a part of the catalyst portion 262 is disposed below the horizontal plane Sw2. The horizontal plane Sw2 is a horizontal plane passing the center of the front wheel unit 2.

In the left-right direction, the position of the catalyst portion 262 is substantially identical to the position of the catalyst portion 62 of the First Embodiment.

The engine unit 211 of the present embodiment may include an upstream sub-catalyst 47U as in Modification 1 of the First Embodiment. The engine unit 211 of the present embodiment may include a downstream sub-catalyst 47D as in Modification 1 of the First Embodiment.

In regard to the arrangements similar to those in the First Embodiment, the motorcycle 101 of the present embodiment exerts effects similar to the effects described in the First Embodiment.

A preferred embodiment of the present invention has been described. It should be noted that the present invention is not limited to the above-described embodiments and modifications, and various changes, substitutions, and alterations can be made herein without departing from the spirit and scope of the invention as defined by the appended claims. Further, modifications described below may be used in combination as needed. For example, the term "preferably" or "preferable" herein is non-exclusive and means "preferably/preferable, but not limited to."

In the First Embodiment to the Third Embodiment above, the crankcase 21 and the cylinder body 22 are different members. Alternatively, the crankcase and the cylinder body may be integrally formed. In the First Embodiment to the Third Embodiment above, the cylinder body 22, the cylinder head 23, and the head cover 24 are different members. Alternatively, two or three of the cylinder body, the cylinder head, and the head cover may be integrally formed. In the First Embodiment to the Third Embodiment above, the crankcase 21 and the oil pan 26 are different members. Alternatively, the crankcase and the oil pan may be integrally formed.

In the First Embodiment to the Third Embodiment above, the cross-sectional area of the main catalyst 62a cut along the direction orthogonal to the flow direction of the exhaust gas is circular. The cross-sectional shape of the main catalyst 62a, however, is not limited to circular. The cross-sectional shape of the main catalyst 62a may be elliptic and long in the left-right direction. In other words, the cross-sectional shape may be flat. The cross-sectional shape of the catalyst portion 62 is preferably analogous to the cross-sectional shape of the main catalyst 62a.

When the sub-catalyst 47 has a porous structure, this modification may be employed in the sub-catalyst 47.

In the First Embodiment to the Third Embodiment above, the length Dc1 of the catalyst portion 62 is longer than the length Dc2 of the catalyst portion 62. In this regard, the length Dc1 of the catalyst portion 62 may be shorter than the length Dc2 of the catalyst portion 62. The length Dc1 is the length of the catalyst portion 62 along the flow direction of the exhaust gas. The length Dc2 is the maximum length of the catalyst portion 62 in the direction orthogonal to the flow direction of the exhaust gas.

The main catalyst 62a may include a plurality of catalysts provided to be close to one another. Each catalyst includes a base and a catalyst material. Providing a plurality of catalysts to be close to one another indicates the following state. That is to say, catalysts are close to one another in the sense that the distance between neighboring catalysts is short, rather than the length of each catalyst is short in the flow direction of the exhaust gas. The bases of the catalysts may be formed of the same or different materials. The catalyst materials of the catalysts may be the same or different noble metals.

This modification may be employed in the sub-catalyst 47.

In the First Embodiment above, the exhaust passage member 60 is arranged so that the catalyst portion 62 is disposed at a right part of the motorcycle 1. Alternatively, the exhaust passage member 60 may be arranged so that the catalyst portion 62 is disposed at a left part of the motorcycle 1. In this case, the muffler member 67 is also preferably disposed at a left part of the motorcycle 1. Furthermore, the catalyst portion 62 is preferably provided leftward of the turbine wheel 81. The exhaust passage member 60 may be arranged so that the central axis C1 of the catalyst portion 62 is provided at the center C0 in the left-right direction of the motorcycle 1. The exhaust passage member 60 may be arranged so that the center of the upstream end and the center of the downstream end of the catalyst portion 62 are positioned on the respective sides of the center C0 in the left-right direction of the motorcycle 1.

This modification may be employed in the exhaust passage member 160, 260 of the Second Embodiment and the Third Embodiment described above.

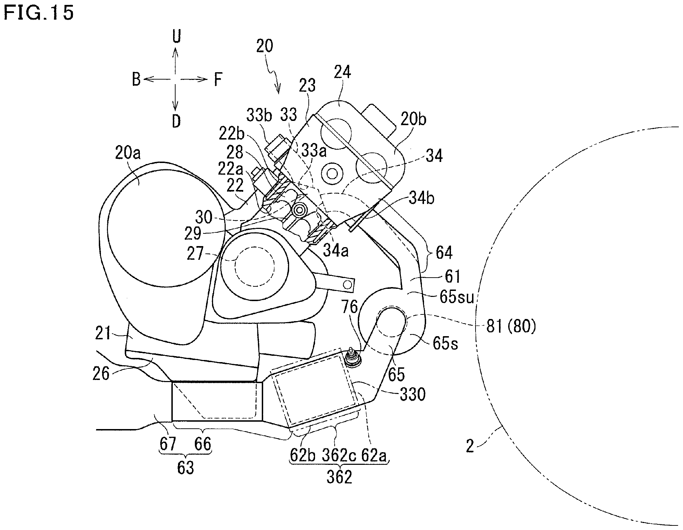

As shown in FIG. 15, at least a part of the outer surface of the cylindrical part 62b may be covered with a catalyst protector 330. In the catalyst protector 330, a part covering the outer surface of the cylindrical part 62b is termed a catalyst protector portion 362c. The catalyst protector portion 362c is included in a catalyst portion 362. A part of the catalyst protector 330 may be included in the upstream collective exhaust passage member 65. A part of the catalyst protector 330 may be included in the downstream exhaust passage member 66. The catalyst protector portion 362c may or may not be cylindrical in shape. When the catalyst protector portion 362c is provided, the heat keeping effect of the main catalyst 62a is improved. As a result, at the cold start of the engine unit, the time required to activate the deactivated main catalyst 62a is further shortened. Due to this, the exhaust gas purification performance of the main catalyst 62a is further improved. Furthermore, the catalyst protector portion 362c protects the cylindrical part 62b and the main catalyst 62a. Furthermore, the catalyst protector portion 362c improves the appearance.

This modification may be employed in the catalyst portion 162, 262 of the Second Embodiment and the Third Embodiment described above.

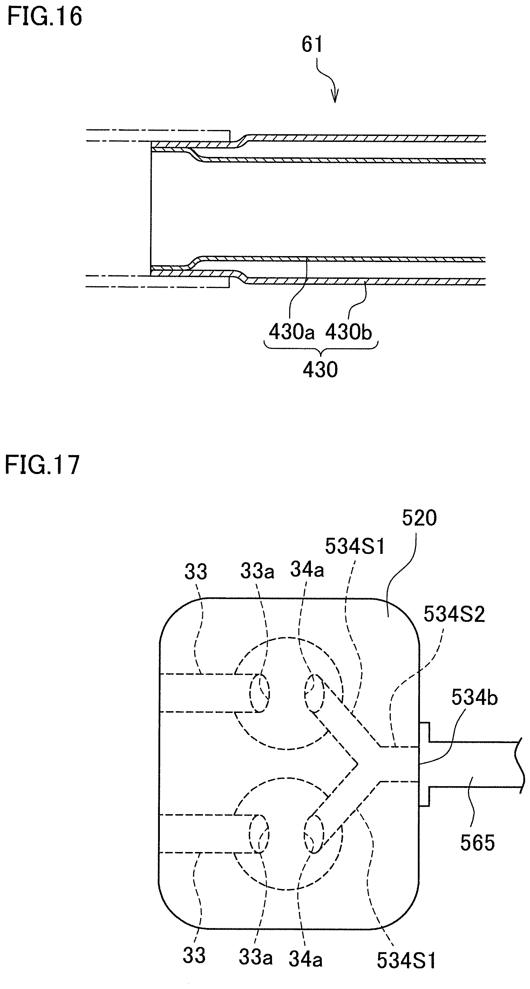

At least a part of the upstream exhaust passage member 61 may be formed of a multi-walled pipe. The multi-walled pipe is constituted by an inner pipe and at least one outer pipe covering the inner pipe. As shown in FIG. 16, the multi-walled pipe may be a double-walled pipe 430. The double-walled pipe 430 includes an inner pipe 430a and an outer pipe 430b. The both end portions of the inner pipe 430a are in contact with the both end portions of the outer pipe 430b. The inner pipe 430a and the outer pipe 430b may be in contact with each other at a part other than the both end portions. For example, the inner pipe 430a and the outer pipe 430b may be in contact with each other at a bended portion. The multi-walled pipe 430 restrains the decrease in the temperature of the exhaust gas in the upstream exhaust passage member 61. As a result, at the cold start of the engine unit 11, the time required to activate the deactivated main catalyst 62a is shortened. Due to this, the exhaust gas purification performance of the main catalyst 62a is further improved. This modification may be employed in the upstream exhaust passage member 161, 261 of the Second Embodiment and the Third Embodiment described above.

The exhaust passage member 60 may include two muffler members 67 for one catalyst portion 62. In other words, the exhaust passage member 60 may include two atmosphere discharge ports 67a for one catalyst portion 62. In this case, the downstream exhaust passage member 66 is branched into two. The two muffler members 67 are provided to be side by side in the up-down direction. Alternatively, the two muffler members 67 are disposed at a right part and a left part of the motorcycle 1, respectively.

This modification may be employed in the exhaust passage member 160, 260 of the Second Embodiment and the Third Embodiment described above.

In the First Embodiment to the Third Embodiment, the number of exhaust ports 34b is identical to the number of combustion chambers 30 in the engine main body 20. In this regard, when a plurality of combustion chamber exhaust ports 34a are provided for one combustion chamber 30, the number of exhaust ports 34b may be larger than the number of combustion chambers 30.

The number of exhaust ports 34b may be plural and smaller than the number of combustion chambers 30. Although not encompassed in the scope of the present teaching, the number of exhaust ports 34b may be one. In either case, the exhaust gas discharged from the combustion chambers 30 is gathered inside the engine main body 20. FIG. 17 shows a specific example of the case where the number of exhaust port is one. In Fig. 17, an engine main body 520 includes a plurality of internal independent exhaust passage members 534S1 and an internal collective exhaust passage member 534S2. The plurality of internal independent exhaust passage members 534S1 are connected to the combustion chambers 30, respectively. The internal collective exhaust passage member 534S2 is connected to the downstream ends of the internal independent exhaust passage members 534S1. The internal collective exhaust passage member 534S2 gathers the exhaust gas discharged from the internal independent exhaust passage members 534S1. The exhaust port 534b is at the downstream end of the internal collective exhaust passage member 534S2. The internal collective exhaust passage member 534S2 is connected to the upstream end of the upstream collective exhaust passage member 565. A plurality of independent exhaust passage members 64 are not provided.

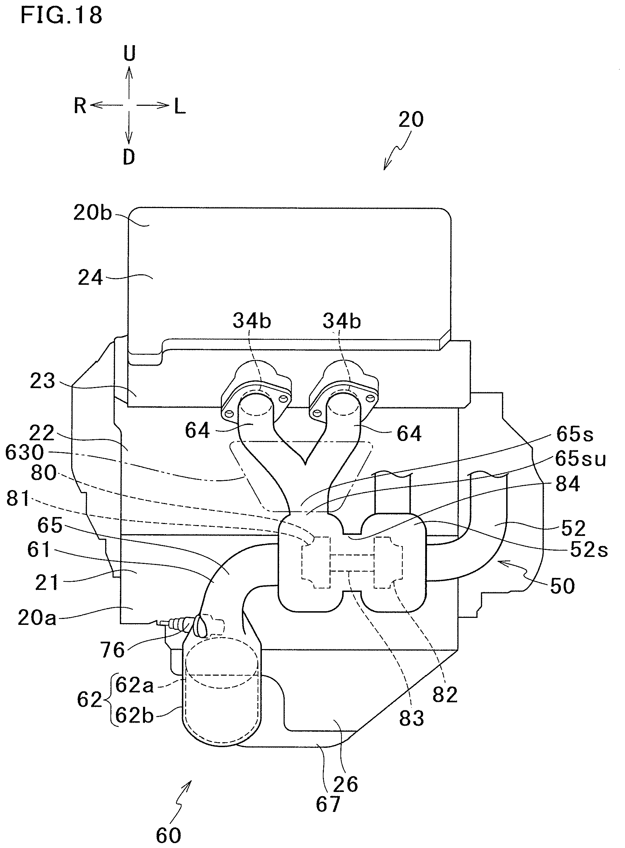

The engine unit 11 may be arranged such that the exhaust gas is cooled by coolant water in a passage member from the combustion chamber 30 to the catalyst portion 62. In other words, the engine unit 11 may include an exhaust gas cooling passage member in which coolant water for cooling the exhaust gas flows. For example, as shown in FIG. 18, at least a part of the exhaust gas cooling passage member 630 may be formed at the outer periphery of at least a part of the upstream collective exhaust passage member 65. Alternatively, for example, as shown in FIG. 18, at least a part of the exhaust gas cooling passage member 630 may be formed at the outer periphery of at least a part of each of the independent exhaust passage members 64. At least a part of the exhaust gas cooling passage member may be formed at the outer periphery of at least a part of each of the internal exhaust passage members 34. To put it differently, at least a part of the exhaust gas cooling passage member may be formed at the outer periphery of at least a part of each of the independent exhaust passage members 68. The upstream collective exhaust passage member 65 is equivalent to an upstream collective exhaust passage member of the present teaching. The coolant water flowing in the exhaust gas cooling passage member may be shared with or different from the coolant water for cooling the engine main body 20. The cooling of the exhaust gas may be carried out by means of a cooling medium other than water, instead of the coolant water. From the cold start of the engine unit 11 to a predetermined timing, the coolant water in the exhaust gas cooling passage member is preferably not circulated. In other words, the exhaust gas is preferably not to be cooled by the coolant water during this period. The predetermined timing is determined based on, for example, an elapsed time, the total rotation number of the crankshaft 27, or the temperature of the exhaust gas. According to this modification, because the exhaust gas is cooled by the coolant water, excessive increase in the temperature of the exhaust gas flowing into the catalyst portion 62 is prevented. It is therefore possible to prevent the deterioration of the main catalyst 62a due to excessive heating. Due to this, the exhaust gas purification performance of the main catalyst 62a is further improved. Furthermore, when at least a part of the exhaust gas cooling passage member is formed at the outer periphery of at least a part of the upstream collective exhaust passage member 65, the following effect is obtained. The exhaust gas cooling passage member is downsized when compared to cases where the exhaust gas cooling passage member is not provided at the outer periphery of the upstream collective exhaust passage member 65 but provided at the outer periphery of each of the independent exhaust passage members 68. It is therefore possible to restrain the increase in size of the vehicle in the up-down direction and the front-rear direction.

This modification may be employed in the engine unit 111, 211 of the Second Embodiment and the Third Embodiment above.

The combustion chamber 30 may include a main combustion chamber and an auxiliary combustion chamber connected to the main combustion chamber. In this case, one combustion chamber of the present teaching is formed of the main combustion chamber and the auxiliary combustion chamber.

In the First Embodiment to the Third Embodiment above, the engine main body 20 includes two combustion chambers 30. The number of combustion chambers 30 in the engine main body 20 may be three or more.

When the number of combustion chambers 30 is four or more, a plurality of catalyst portions 62 may be provided. Only the exhaust gas discharged from one or some of the combustion chambers 30 may be allowed to pass one catalyst portion 62. This arrangement will be explained with the assumption that the number of combustion chambers 30 is four. The exhaust device 60 includes a plurality of independent exhaust passage members, two upstream collective exhaust passage members, two catalyst portions, and two downstream collective exhaust passage members. The first upstream collective exhaust passage member gathers the exhaust gas discharged from the right two combustion chambers 30. The second upstream collective exhaust passage member gathers the exhaust gas discharged from the left two combustion chambers 30. The first catalyst portion is connected to the downstream end of the first upstream collective exhaust passage member and the upstream end of the first downstream collective exhaust passage member. The first catalyst portion is connected to the downstream end of the second upstream collective exhaust passage member and the upstream end of the second downstream collective exhaust passage member. Each of the first downstream collective exhaust passage member and the second downstream collective exhaust passage member has an atmosphere discharge port. The turbocharger 80 is provided on at least one of the first upstream collective exhaust passage member and the second upstream collective exhaust passage member. When the turbocharger 80 is provided on the first upstream collective exhaust passage member, the first catalyst portion is equivalent to the catalyst portion of the present teaching. Furthermore, a passage member which is a combination of the two independent exhaust passage members and the first upstream collective exhaust passage member is equivalent to the upstream exhaust passage member of the present teaching. When the turbocharger 80 is provided on the second upstream collective exhaust passage member, the second catalyst portion is equivalent to the catalyst portion of the present teaching. Furthermore, a passage member which is a combination of the two independent exhaust passage members and the second upstream collective exhaust passage member is equivalent to the upstream exhaust passage member of the present teaching.

When the number of combustion chambers 30 is four or more, the engine main body 20 may be a so-called V engine. For example, a V4 engine has four combustion chambers, and two combustion chambers are provided in a front side whereas the remaining two combustion chambers are provided in a rear side. The combustion chambers provided in the front part of the V engine are termed front combustion chambers. The front combustion chambers are side by side in the left-right direction. The combustion chambers provided in the rear part of the V engine are termed rear combustion chambers. The rear combustion chambers are side by side in the left-right direction. A cylinder hole forming a part of the front combustion chamber is termed a front cylinder hole. The direction of the central axis of the front cylinder hole is identical to the direction of the cylinder axial line Cy. Each front combustion chamber communicates with the internal exhaust passage member 34, the upstream exhaust passage member 61, the catalyst portion 62, and the downstream collective exhaust passage member 63. The front combustion chambers are encompassed in the plurality of combustion chambers of the present teaching.

When the engine main body 20 is a V engine, the exhaust gas discharged from the rear combustion chambers may be merged with the exhaust gas discharged from the front combustion chambers. For example, the downstream end of an exhaust passage member communicating with the rear combustion chambers may be connected to the upstream collective exhaust passage member 65. The turbine wheel 81 is provided downstream of a part of the upstream collective exhaust passage member 65. The exhaust passage member communicating with a rear combustion chamber connects with the part. In this case, the exhaust gas discharged from the rear combustion chamber is purified by the main catalyst 62a. In this case, the rear combustion chamber may or may not be encompassed in the plurality of combustion chambers of the present teaching. For example, the downstream end of an exhaust passage member communicating with the rear combustion chamber may be connected to the downstream exhaust passage member 66. In this case, a catalyst for purifying the exhaust gas discharged from the rear combustion chambers is provided in addition to the main catalyst 62a. In this case, the rear combustion chamber is not encompassed in the plurality of combustion chambers of the present teaching. In this case, a turbocharger which is driven solely by the exhaust gas exhausted from the rear combustion chamber may or may not be provided.

When the engine main body 20 is a V engine, the exhaust gas discharged from the rear combustion chambers may not be merged with the exhaust gas discharged from the front combustion chambers. In this case, a catalyst for purifying the exhaust gas discharged from the rear combustion chambers is provided in addition to the main catalyst 62a. In this case, the rear combustion chambers are not encompassed in the plurality of combustion chambers of the present teaching. In this case, a turbocharger which is driven solely by the exhaust gas exhausted from the rear combustion chamber may or may not be provided.

In the First Embodiment to the Third Embodiment above, the cylinder axial line Cy is inclined with a positive slope in the forward direction. Alternatively, the cylinder axial line Cy may be inclined with a negative slope in the forward direction. In other words, the cylinder portion 20b may be tilted rearward.

When the number of independent exhaust passage members 64 is three or more, the downstream end of one independent exhaust passage member 64 may be downstream of the downstream end of another independent exhaust passage member 64. In this case, the oxygen sensor 76 is preferably provided downstream of the downstream ends of all independent exhaust passage members 64.

This modification may be employed in the independent exhaust passage member 164, 264 of the Second Embodiment and the Third Embodiment described above.

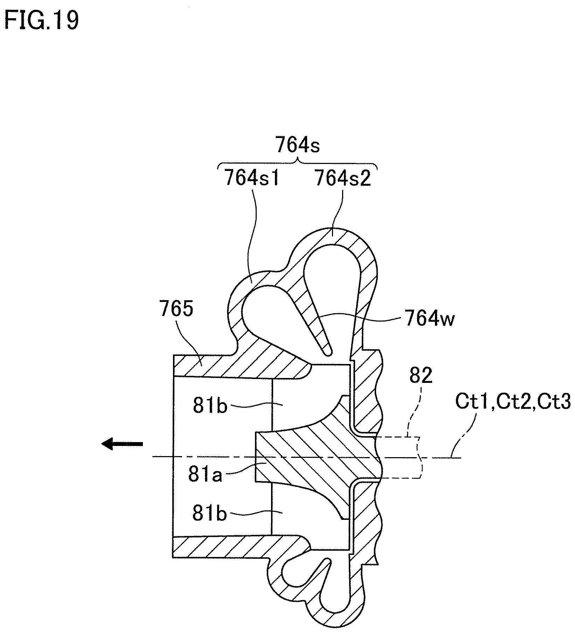

In the First Embodiment to the Third Embodiment above, the scroll exhaust passage member 65s, 165s, 265s is of a single-scroll type in which only one port is provided to introduce exhaust gas. The scroll exhaust passage member of the present teaching may be of a twin-scroll type in which two ports are provided to introduce exhaust gas. FIG. 19 is a cross-section of a part of a twin-scroll-type scroll exhaust passage member 764s. The scroll exhaust passage member 764s includes a first scroll passage member 764s1 and a second scroll passage member 764s2. The first scroll passage member 764s1 and the second scroll passage member 764s2 are formed in two independent exhaust passage members 764, respectively. The turbine wheel 81 is provided in an upstream collective exhaust passage member 765. The first scroll passage member 764s1 and the second scroll passage member 764s2 are arranged to be side by side in the direction along the central axis Ct1, Ct2, Ct3 of the connecting shaft 83. The first scroll passage member 764s1 is separated from the second scroll passage member 764s2 by a partition wall 764w. The exhaust gas in the first scroll passage member 764s1 and the exhaust gas in the second scroll passage member 764s2 are blown onto the outer periphery of the turbine wheel 81. The flows of the exhaust gas discharged from the two scroll passage members 764s1 and 764s2 are gathered (merged) when passing the turbine wheel 81. Due to this, as the twin-scroll-type scroll exhaust passage member is provided, it is possible to prevent the discharge of the exhaust gas from one combustion chamber 30 from being obstructed by the pressure of the exhaust gas discharged from another combustion chamber 30. It is therefore possible to prevent the decrease in the flow rate and pressure of the exhaust gas. The decrease in the output of the engine is prevented for this reason. Furthermore, because the decrease in the flow rate and pressure of the exhaust gas is prevented, the decrease in the rotation speed of the turbine wheel 81 is prevented. The decrease in the intake efficiency is prevented for this reason. As the decrease in the intake efficiency is prevented, the increase in the fuel consumption is prevented and the decrease in the output of the engine is prevented.

When the number of combustion chambers 30 is three or more, the exhaust gas discharged from two or more combustion chambers 30 flows in at least one of the first scroll passage member 764s1 and the second scroll passage member 764s2. For example, when the number of combustion chambers 30 is four, only the exhaust gas discharged from two combustion chambers 30 flows in each scroll passage member 764s1, 764s2. In this case, the exhaust gas discharged from the two combustion chambers 30 is gathered while the exhaust gas flows from the two combustion chambers 30 to the first scroll passage member 764s1. Similarly, the exhaust gas discharged from the two combustion chambers 30 is gathered while the exhaust gas flows from the remaining two combustion chambers 30 to the second scroll passage member 764s2. The upstream end of an exhaust passage member which gathers exhaust gas discharged from the two combustion chambers 30 is provided outside the engine main body 20.

The shape of the upstream exhaust passage member 161 in the Second Embodiment above may be employed in the First Embodiment and the Third Embodiment above. In other words, when viewed in the left-right direction, the turbine wheel 81 may be provided straight above the central axis Cu1, Cu3 of the exhaust port 34b. According to this modification, the path length from the downstream end of the scroll exhaust passage member to the catalyst portion is longer than the path length in the Second Embodiment. The Second Embodiment above may be modified as below. The length in the up-down direction of the catalyst portion 162 is shortened and the turbine wheel 81 is provided straight below the central axis Cu2 of the exhaust port 34b.

In the First Embodiment above, the gas flowing in the exhaust path 69 during the driving of the engine unit 11 is only the exhaust gas discharged from the combustion chamber 30. The engine unit 11, however, may include a secondary air supply mechanism configured to supply air to the exhaust path 69. A known arrangement is employed for the specific arrangement of the secondary air supply mechanism. The secondary air supply mechanism may forcibly supply air to the exhaust path 69 by means of an air pump. The secondary air supply mechanism may take air into the exhaust path 69 by a negative pressure in the exhaust path 69. In this case, the secondary air supply mechanism includes a reed valve which is opened and closed in accordance with a pressure change in the exhaust path 69. When the secondary air supply mechanism is included, the turbocharger 80 may be provided upstream or downstream of a position of air inflow.

This modification may be employed in the engine unit 111, 211 of the Second Embodiment and the Third Embodiment above.

The engine unit of the straddled vehicle in which the present teaching is employed may be an air-cooled engine. The engine unit of the straddled vehicle in which the present teaching is employed may be a natural air-cooled engine unit or a forced air-cooled engine unit.

The applications of the present teaching are not limited to motorcycles. The present teaching may be applied to a leaning vehicle which is not a motorcycle. The leaning vehicle is a vehicle including a vehicle body frame which is configured to lean rightward of the vehicle when turning right and lean leftward of the vehicle when turning left. The present teaching may be applied to a straddled vehicle which is not a motorcycle. The straddled vehicle indicates all types of vehicles on which a rider straddles a vehicle on a saddle. The straddled vehicle to which the present teaching is applicable encompasses vehicles such as motorcycles, tricycles, and four-wheeled buggies (ATVs: All Terrain Vehicles). The front wheel unit of the present teaching may include a plurality of front wheels. The rear wheel unit of the present teaching may include a plurality of rear wheels.

In the specification of the present teaching, the phrase that the upstream collective exhaust passage member 65 merges the exhaust gas discharged from the three independent exhaust passage members 64 indicates that the exhaust gas discharged from the three independent exhaust passage members 64 can be merged. However, the exhaust gas discharged from the three independent exhaust passage members 64 may not be mixed. As described above, the combustion process is carried out at different timings in the three combustion chambers 30. Due to this, the exhaust gas discharged from the three combustion chambers 30 may not be mixed in some cases.

This definition is also applicable to the Second Embodiment and the Third Embodiment above.

In this specification, an "end" of a component indicates a leading end of the component or a part which forms the outline of the component when the component is viewed in one direction. Meanwhile, an "end portion" of a component indicates a part which includes an "end" of the component and its surroundings.

In this specification, a passage member indicates walls and the like which form a path by surrounding the path. A path indicates a space through which a target passes. The exhaust passage member indicates walls or the like which form the exhaust path by surrounding the exhaust path. The exhaust path indicates a space through which exhaust gas passes.

In this specification, the path length of any part of the exhaust path 69 indicates the length of a line passing the center of the exhaust path. Furthermore, the path length in the expansion chamber in the muffler member 67 is the length of the path connecting the center of the inflow port of the expansion chamber with the center of the outflow port of the expansion chamber in the shortest distance.

In this specification, an inclination angle of a linear line A with respect to a direction B indicates a smaller angle formed by the linear line A and the direction B.

In this specification, a direction along a direction A is not limited to a direction in parallel to the direction A. The direction along the direction A includes a direction tilted by +45 to -45 degrees with respect to the direction A. This definition is applied to cases where a linear line is along the direction A. The direction A does not indicate any specific direction. The direction A may be the horizontal direction or the front-rear direction.

In this specification, when a component A and a component B are side by side in a direction X, the following case is indicated. The component A and the component B are provided to be on a linear line along the direction X. The component A and the component B may or may not be arranged so that a linear line in parallel to the direction X passes through the components.

In this specification, when a component A is provided forward of a component B, the following case is indicated. The component A is provided in front of a plane which passes the frontmost end of the component B and is orthogonal to the front-rear direction. The component A and the component B may or may not be arranged so that a linear line in parallel to the front-rear direction passes through the components. This definition is applicable to directions other than the front-rear direction. Furthermore, this definition is applicable not only to components but also to a part of a component, a linear line, and a plane.

In this specification, when a component A is provided in front of a component B, the entirety of the component A is provided in front of a part of the front surface of the component B, which faces the component A. In this regard, the component A and the component B are arranged so that a linear line in parallel to the front-rear direction passes through the components. Furthermore, when viewed in the front-rear direction, at least a part of the component B overlaps the entire component A. In regard to this definition, when a part of the front surface of the component B, which faces the component A, is the frontmost end of the component B, the component A is provided forward of the component B. When a part of the front surface of the component B, which faces the component A, is not the frontmost end of the component B, the component A may or may not be provided forward of the component B. This definition is applicable to directions other than the front-rear direction. Furthermore, this definition is applicable not only to components but also to a part of a component, a linear line, and a plane. The front surface of the component B indicates a surface which is visible when the component B is viewed from the front side. Depending on the shape of the component B, the front surface of the component B may be formed of a plurality of planes, rather than a single continuous plane.

In this specification, when a component A is provided in front of a component B when viewed in the left-right direction, the entirety of the component A is provided in front of the front surface of the component B when viewed in the left-right direction. In this regard, when viewed in the left-right direction, the component A and the component B are arranged so that a linear line in parallel to the front-rear direction passes through the components. In three dimensions, the component A and the component B may or may not be arranged so that a linear line in parallel to the front-rear direction passes through the components. This definition is applicable to directions other than the front-rear direction. Furthermore, this definition is applicable not only to components but also to a part of a component, a linear line, and a plane.

In this specification, when a component A is provided between a component B and a component C when viewed in the left-right direction, the following state is indicated. To begin with, a case where the component B and the component C are side by side in the front-rear direction when viewed in the left-right direction will be explained. A line segment, which is the uppermost one of line segments connecting points on the outline of the component B with points on the outline of the component C when viewed in the left-right direction, is referred to as a line segment LU. Furthermore, a line segment, which is the lowermost one of line segments connecting the points on the outline of the component B with the points on the outline of the component C when viewed in the left-right direction, is referred to as a line segment LD. The state above is a state in which, when viewed in the left-right direction, the component A is in a quadrangular region having the line segments LU and LD as two sides and does not overlap the components B and C. Subsequently, a case where the component B and the component C are side by side in the up-down direction when viewed in the left-right direction will be explained. A line segment, which is the leftmost one of line segments connecting points on the outline of the component B with points on the outline of the component C when viewed in the left-right direction, is referred to as a line segment LL. Furthermore, a line segment, which is the rightmost one of line segments connecting points on the outline of the component B with points on the outline of the component C when viewed in the left-right direction, is referred to as a line segment line segment LR. The state is a state in which, when viewed in the left-right direction, the component A is in a quadrangular region having the line segments LL and LR as two sides and does not overlap the components B and C. This definition is applicable to cases where the viewing direction is not the left-right direction. Furthermore, this definition is applicable not only to components but also to a part of a component, a linear line, and a plane.

### [Reference Signs List]

1, 101, 201 motorcycle (straddled vehicle)
2 front wheel unit
3 rear wheel unit
4 vehicle body frame
11, 111, 211 engine unit
20, 520 engine main body
22a cylinder hole
27 crankshaft
30 combustion chamber
34 internal exhaust passage member
34b, 534b exhaust port
39 injector (fuel injector)
50, 150, 250 intake passage member
52, 152, 252 main intake passage member
52a atmosphere suction port
52s, 152s, 252s scroll intake passage member
60, 160, 260 exhaust passage member
61, 161, 262 upstream exhaust passage member
62, 162, 262, 362 catalyst portion
62a main catalyst
63, 163, 263 downstream collective exhaust passage member
64, 164, 264, 764 independent exhaust passage member (external independent exhaust passage member)
65, 165, 265, 765 upstream collective exhaust passage member (external upstream collective exhaust passage member)
65s, 165s, 265s, 764s scroll exhaust passage member
66, 166, 266 downstream exhaust passage member
67a atmosphere discharge port
68 independent exhaust passage member
69 exhaust path
80 turbocharger
81 turbine wheel
82 compressor wheel
83 connecting axis
534S1 internal independent exhaust passage member
534S2 internal collective exhaust passage member
565 upstream collective exhaust passage member (upstream exhaust passage member)
630 exhaust gas cooling passage member

## Claims

1. A straddled vehicle comprising:
a vehicle body frame (4);
an engine unit (11, 111) supported by the vehicle body frame (4);
a front wheel unit (2) including at least one front wheel and provided in front of the engine unit (11, 111) in a vehicle front-rear direction when viewed in a vehicle left-right direction; and
a rear wheel unit (3) including at least one rear wheel and provided behind the engine unit (11, 111) in the front-rear direction when viewed in the left-right direction,
the engine unit (11, 111) including:
an engine main body (20) including combustion chambers;
an intake passage member (50, 150) which is connected to the engine main body (20) and includes an atmosphere suction port (52a) through which air is sucked from atmosphere, air supplied to the combustion chambers (30) passing through the intake passage member (50, 150);
an upstream exhaust passage member (61, 161) which is connected to the engine main body (20), exhaust gas exhausted from the combustion chambers (30) passing through the upstream exhaust passage member (61, 161);
a downstream collective exhaust passage member (63, 163) which includes an atmosphere discharge port (67a) through which the exhaust gas is discharged to the atmosphere;
a turbocharger (80) which includes a turbine wheel (81) provided in the upstream exhaust passage member (61, 161) and a compressor wheel (82) which is provided in the intake passage member (50, 150) and is connected to the turbine wheel (81) via a connecting shaft (83) having a central axis (Ct1, Ct2) along the left-right direction; and
a catalyst portion (62, 162, 362) having a main catalyst (62a) which purifies the exhaust gas discharged from the combustion chambers (30) most in exhaust paths from the combustion chambers (30) to the atmosphere discharge port (67a), the length of the catalyst portion (62, 162, 362) in a flow direction of the exhaust gas being identical to the length of the main catalyst (62a) in the flow direction of the exhaust gas , the catalyst portion (62, 162, 362) being connected to a downstream end of the upstream exhaust passage member (61, 161) and an upstream end of the downstream collective exhaust passage member (63, 163), a downstream end of the catalyst portion (62, 162, 362) being provided below the turbine wheel (81) in a vehicle up-down direction, at least a part of the catalyst portion (62, 162, 362) being, when viewed in the left-right direction, provided, in the up-down direction, straight above a linear line (Lw3) which passes a lowermost end of the front wheel unit (2) and a lowermost end of the engine main body (20), and at least a part of the catalyst portion (62, 162, 362) overlapping the engine main body (20) when viewed in the front-rear direction,
the upstream exhaust passage member (61, 161) including a scroll exhaust passage member (65s, 165s, 764s ) which wholly surrounds an outer circumference of the turbine wheel (81), at least a part of the scroll exhaust passage member (65s, 165s, 764s ) being below a horizontal plane passing an upper end of the front wheel unit (2), and at least a part of the scroll exhaust passage member (65s, 165s, 764s ) overlapping the engine main body (20) when viewed in the front-rear direction, wherein the distance (Dt1) in the left-right direction between the center in the left-right direction of the vehicle and the turbine wheel (81) is shorter than the distance (Dt2) in the left-right direction between the center in the left-right direction of the vehicle and the compressor wheel (82),
each of the combustion chambers (30) is connected to an internal intake passage member (33) provided for each combustion chamber (30),
the intake passage member (50, 150) includes one main intake passage member (52, 152) and branched intake passage members (51) each having an upstream end connected to a downstream end of the one main intake passage member (52, 152) in the flow direction of air, and
the engine main body (20) includes injectors (39) each of which is positioned to inject fuel in the combustion chamber (30), the internal intake passage member (33), or the branched intake passage member (51),
the upstream exhaust passage member (61, 161) includes:
independent exhaust passage members (64, 164, 764) connected to the engine main body (20); and an upstream collective exhaust passage member (65, 165, 765) which is connected to downstream ends of the independent exhaust passage members (64, 164, 764) and an upstream end of the catalyst portion (62, 162, 362) and gathers the exhaust gas exhausted from the independent exhaust passage members (64, 164, 764), the turbine wheel (82) being provided in the upstream collective exhaust passage member (65, 165, 765),
the downstream collective exhaust passage member (63, 163) includes:
a downstream exhaust passage member (66, 166) having an upstream end connected to a downstream end of the catalyst portion (62, 162, 362); and
a muffler member (67) having an upstream end connected to the downstream end of the catalyst portion (62, 162, 362),
on the upstream collective exhaust passage member (65, 165, 765), a first oxygen sensor (76) is provided downstream of the turbine wheel (81) to detect oxygen density in the exhaust gas in the upstream collective exhaust passage member (65, 165, 765), and
a second oxygen sensor is provided either on the downstream exhaust passage member (66, 166) or on the muffler member (67).

2. The straddled vehicle according to claim 1, wherein,
the engine main body (20) includes a crankshaft (27) having a central axis (Cr) along the left-right direction, and
at least a part of the catalyst portion (62, 162, 362) is provided forward of the central axis (Cr) of the crankshaft (27) in the front-rear direction.

3. The straddled vehicle according to claim 1 or 2, wherein, at least a part of the catalyst portion (62, 162, 362) is provided below a horizontal plane passing the center of the front wheel unit (2).

4. The straddled vehicle according to any one of claims 1 to 3, wherein, when viewed in the front-rear direction, the catalyst portion (62, 162, 362) is provided leftward of or rightward of the turbine wheel (81) in the left-right direction.

5. The straddled vehicle according to any one of claims 1 to 4, wherein,
the engine main body (20) includes a crankshaft (27) having a central axis (Cr) along the left-right direction and has cylinder holes (22a) each forming a part of the combustion chambers (30), and
when viewed in the left-right direction, at least a part of the scroll exhaust passage member (65s, 165s, 764s) is provided, in the front-rear direction, in front of a linear line (La2) which is orthogonal to the central axis (Cy) of the cylinder hole (22a) and passes the central axis (Cr) of the crankshaft (27).

6. The straddled vehicle according to any one of claims 1 to 5, wherein, the catalyst portion (62, 162, 362) is provided below the turbine wheel (81) in the up-down direction.

7. The straddled vehicle according to any one of claims 1 to 6, wherein,
the engine main body (20) has cylinder holes (22a) each forming a part of the combustion chambers (30), and
the engine main body (20) is disposed so that the central axes (Cy) of the cylinder holes (22a) are along the up-down direction.

8. The straddled vehicle according to claim 7, wherein, the catalyst portion (162) is disposed so that the flow direction of the exhaust gas flowing in the catalyst portion (162,) is along the up-down direction.

9. The straddled vehicle according to claim 8, wherein,
the engine main body (20) includes a crankshaft (27) having a central axis (Cr) along the left-right direction, and
when viewed in the left-right direction, at least a part of the catalyst portion (162) is provided, in the front-rear direction, in front of a linear line (La2) which is orthogonal to the central axis (Cy) of the cylinder hole (22a) and passes the central axis (Cr) of the crankshaft (27).

10. The straddled vehicle according to claim 8 or 9, wherein, when viewed in the left-right direction, at least a part of the catalyst portion (162) is provided straight below the scroll exhaust passage member (165s) in the up-down direction.

11. The straddled vehicle according to any one of claims 1 to 7, wherein, the catalyst portion (62, 362) is disposed so that the flow direction of the exhaust gas flowing in the catalyst portion (62, 362) is along a horizontal direction.

12. The straddled vehicle according to claim 11, wherein,
the engine main body (20) includes a crankshaft (27) having a central axis (Cr) along the left-right direction and has cylinder holes (22a) each forming a part of the combustion chambers (30), and
when viewed in the left-right direction, at least a part of the catalyst portion (62, 362) is provided, in the front-rear direction, behind a linear line (La2) which is orthogonal to the central axis (Cy) of the cylinder hole (22a) and passes the central axis (Cr) of the crankshaft (27).

13. The straddled vehicle according to any one of claims 1 to 12, wherein,
the engine unit (11, 111) includes:
an exhaust gas cooling passage member (630) in which cooling medium for cooling the exhaust gas flows, at least a part of the exhaust gas cooling passage member (630) being formed at an outer periphery of at least a part of the upstream collective exhaust passage member (65).

## Patentansprüche

1. Ein Spreizsitzfahrzeug, das folgende Merkmale aufweist:
einen Fahrzeugkarosserierahmen (4);
eine Motoreinheit (11, 111), die durch den Fahrzeugkarosserierahmen (4) getragen wird;
eine Vorderradeinheit (2), die zumindest ein Vorderrad umfasst und in einer Fahrzeug-Vorne-Hinten-Richtung vor der Motoreinheit (11, 111) vorgesehen ist, in einer Fahrzeug-Links-Rechts-Richtung gesehen; und
eine Hinterradeinheit (3), die zumindest ein Hinterrad umfasst und in der Vorne-Hinten-Richtung hinter der Motoreinheit (11, 111) vorgesehen ist, in der Links-Rechts-Richtung gesehen,
wobei die Motoreinheit (11, 111) folgende Merkmale umfasst:
einen Motorhauptkörper (20), der Verbrennungskammern umfasst;
ein Einlassdurchgangsbauglied (50, 150), das mit dem Motorhauptkörper (20) verbunden ist und eine Atmosphärenansaugöffnung (52a) umfasst, durch die Luft aus der Atmosphäre angesaugt wird, wobei Luft, die den Verbrennungskammern (30) zugeführt wird, durch das Einlassdurchgangsbauglied (50, 150) verläuft;
ein stromaufwärtiges Auslassdurchgangsbauglied (61, 161), das mit dem Motorhauptkörper (20) verbunden ist, wobei Abgas, das aus den Verbrennungskammern (30) ausgelassen wird, durch das stromaufwärtige Auslassdurchgangsbauglied (61, 161) verläuft;
ein stromabwärtiges Sammelauslassdurchgangsbauglied (63, 163), das eine Atmosphärenauslassöffnung (67a) umfasst, durch die das Abgas in die Atmosphäre ausgelassen wird;
einen Turbolader (80), der ein Turbinenrad (81), das in dem stromaufwärtigen Auslassdurchgangsbauglied (61, 161) vorgesehen ist, und ein Verdichterrad (82) umfasst, das in dem Einlassdurchgangsbauglied (50, 150) vorgesehen ist und mit dem Turbinenrad (81) über eine Verbindungswelle (83) verbunden ist, die entlang der Links-Rechts-Richtung eine Mittelachse (Ct1, Ct2) aufweist; und
einen Katalysatorabschnitt (62, 162, 362), der einen Hauptkatalysator (62a) aufweist, der das Abgas, das aus den Verbrennungskammern (30) ausgelassen wird, am meisten in Auslasswegen von den Verbrennungskammern (30) zu der Atmosphärenauslassöffnung (67a) reinigt, wobei die Länge des Katalysatorabschnitts (62, 162, 362) in einer Strömungsrichtung des Abgases identisch mit der Länge des Hauptkatalysators (62a) in der Strömungsrichtung des Abgases ist, wobei der Katalysatorabschnitt (62, 162, 362) mit einem stromabwärtigen Ende des stromaufwärtigen Auslassdurchgangsbauglieds (61, 161) und einem stromaufwärtigen Ende des stromabwärtigen Sammelauslassdurchgangsbauglieds (63, 163) verbunden ist, wobei ein stromabwärtiges Ende des Katalysatorabschnitts (62, 162, 362) in einer Fahrzeug-Oben-Unten-Richtung unterhalb des Turbinenrads (81) vorgesehen ist, wobei zumindest ein Teil des Katalysatorabschnitts (62, 162, 362), in der Links-Rechts-Richtung gesehen, in der Oben-Unten-Richtung gerade oberhalb einer linearen Linie (Lw3) vorgesehen ist, die durch ein unterstes Ende der Vorderradeinheit (2) und ein unterstes Ende des Motorhauptkörpers (20) verläuft, und wobei zumindest ein Teil des Katalysatorabschnitts (62, 162, 362) in der Vorne-Hinten-Richtung gesehen den Motorhauptkörper (20) überlappt,
wobei das stromaufwärtige Auslassdurchgangsbauglied (61, 161) ein Spiralauslassdurchgangsbauglied (65s, 165s, 764s ) umfasst, das einen Außenumfang des Turbinenrads (81) vollständig umgibt, wobei zumindest ein Teil des Spiralauslassdurchgangsbauglieds (65s, 165s, 764s ) unterhalb einer horizontalen Ebene liegt, die durch ein oberes Ende der Vorderradeinheit (2) verläuft, und wobei zumindest ein Teil des Spiralauslassdurchgangsbauglieds (65s, 165s, 764s ) in der Vorne-Hinten-Richtung gesehen den Motorhauptkörper (20) überlappt, wobei der Abstand (Dt1) in der Links-Rechts-Richtung zwischen der Mitte in der Links-Rechts-Richtung des Fahrzeugs und dem Turbinenrad (81) kürzer ist als der Abstand (Dt2) in der Links-Rechts-Richtung zwischen der Mitte in der Links-Rechts-Richtung des Fahrzeugs und dem Verdichterrad (82),
jede der Verbrennungskammern (30) mit einem inneren Einlassdurchgangsbauglied (33) verbunden ist, das für jede Verbrennungskammer (30) vorgesehen ist,
das Einlassdurchgangsbauglied (50, 150) ein Haupteinlassdurchgangsbauglied (52, 152) und verzweigte Einlassdurchgangsbauglieder (51) umfasst, die jeweils ein stromaufwärtiges Ende aufweisen, das mit einem stromabwärtigen Ende des einen Haupteinlassdurchgangsbauglieds (52, 152) in der Strömungsrichtung von Luft verbunden ist, und
der Motorhauptkörper (20) Einspritzvorrichtungen (39) umfasst, von denen jede positioniert ist, um Kraftstoff in die Verbrennungskammer (30), das innere Einlassdurchgangsbauglied (33) oder das verzweigte Einlassdurchgangsbauglied (51) einzuspritzen,
das stromaufwärtige Auslassdurchgangsbauglied (61, 161) folgende Merkmale umfasst:
unabhängige Auslassdurchgangsbauglieder (64, 164, 764), die mit dem Motorhauptkörper (20) verbunden sind; und
ein stromaufwärtiges Sammelauslassdurchgangsbauglied (65, 165, 765), das mit stromabwärtigen Enden der unabhängigen Auslassdurchgangsbauglieder (64, 164, 764) und einem stromaufwärtigen Ende des Katalysatorabschnitts (62, 162, 362) verbunden ist und das Abgas sammelt, das aus den unabhängigen Auslassdurchgangsbaugliedern (64, 164, 764) ausgelassen wird, wobei das Turbinenrad (82) in dem stromaufwärtigen Sammelauslassdurchgangsbauglied (65, 165, 765) vorgesehen ist,
das stromabwärtige Sammelauslassdurchgangsbauglied (63, 163) folgende Merkmale umfasst:
ein stromabwärtiges Auslassdurchgangsbauglied (66, 166), das ein stromaufwärtiges Ende aufweist, das mit einem stromabwärtigen Ende des Katalysatorabschnitts (62, 162, 362) verbunden ist; und
ein Schalldämpferbauglied (67), das ein stromaufwärtiges Ende aufweist, das mit dem stromabwärtigen Ende des Katalysatorabschnitts (62, 162, 362) verbunden ist,
an dem stromaufwärtigen Sammelauslassdurchgangsbauglied (65, 165, 765) ein erster Sauerstoffsensor (76) stromabwärts von dem Turbinenrad (81) vorgesehen ist, um eine Sauerstoffdichte in dem Abgas in dem stromaufwärtigen Sammelauslassdurchgangsbauglied (65, 165, 765) zu erfassen, und
ein zweiter Sauerstoffsensor entweder an dem stromabwärtigen Auslassdurchgangsbauglied (66, 166) oder an dem Schalldämpferbauglied (67) vorgesehen ist.

2. Das Spreizsitzfahrzeug gemäß Anspruch 1, bei dem
der Motorhauptkörper (20) eine Kurbelwelle (27) umfasst, die entlang der Links-Rechts-Richtung eine Mittelachse (Cr) aufweist, und
zumindest ein Teil des Katalysatorabschnitts (62, 162, 362) in der Vorne-Hinten-Richtung vor der Mittelachse (Cr) der Kurbelwelle (27) vorgesehen ist.

3. Das Spreizsitzfahrzeug gemäß Anspruch 1 oder 2, bei dem zumindest ein Teil des Katalysatorabschnitts (62, 162, 362) unterhalb einer horizontalen Ebene vorgesehen ist, die durch die Mitte der Vorderradeinheit (2) verläuft.

4. Das Spreizsitzfahrzeug gemäß einem der Ansprüche 1 bis 3, bei dem, in der Vorne-Hinten-Richtung gesehen, der Katalysatorabschnitt (62, 162, 362) in der Links-Rechts-Richtung links von oder rechts von dem Turbinenrad (81) vorgesehen ist.

5. Das Spreizsitzfahrzeug gemäß einem der Ansprüche 1 bis 4, bei dem
der Motorhauptkörper (20) eine Kurbelwelle (27) umfasst, die entlang der Links-Rechts-Richtung eine Mittelachse (Cr) aufweist und Zylinderlöcher (22a) aufweist, die jeweils einen Teil der Verbrennungskammern (30) bilden, und
in der Links-Rechts-Richtung gesehen, zumindest ein Teil des Spiralabgasdurchgangsbauglieds (65s, 165s, 764s) in der Vorne-Hinten-Richtung vor einer linearen Linie (La2) vorgesehen ist, die orthogonal zu der Mittelachse (Cy) des Zylinderlochs (22a) ist und durch die Mittelachse (Cr) der Kurbelwelle (27) verläuft.

6. Das Spreizsitzfahrzeug gemäß einem der Ansprüche 1 bis 5, bei dem der Katalysatorabschnitt (62, 162, 362) in der Oben-Unten-Richtung unterhalb des Turbinenrads (81) vorgesehen ist.

7. Das Spreizsitzfahrzeug gemäß einem der Ansprüche 1 bis 6, bei dem
der Motorhauptkörper (20) Zylinderlöcher (22a) aufweist, die jeweils einen Teil der Verbrennungskammern (30) bilden, und
der Motorhauptkörper (20) so angeordnet ist, dass die Mittelachsen (Cy) der Zylinderlöcher (22a) entlang der Oben-Unten-Richtung verlaufen.

8. Das Spreizsitzfahrzeug gemäß Anspruch 7, bei dem der Katalysatorabschnitt (162) so angeordnet ist, dass die Strömungsrichtung des in dem Katalysatorabschnitt (162) strömenden Abgases entlang der Oben-Unten-Richtung verläuft.

9. Das Spreizsitzfahrzeug gemäß Anspruch 8, bei dem
der Motorhauptkörper (20) eine Kurbelwelle (27) umfasst, die entlang der Links-Rechts-Richtung eine Mittelachse (Cr) aufweist, und
in der Links-Rechts-Richtung gesehen, zumindest ein Teil des Katalysatorabschnitts (162) in der Vorne-Hinten-Richtung vor einer linearen Linie (La2) vorgesehen ist, die orthogonal zu der Mittelachse (Cy) des Zylinderlochs (22a) ist und durch die Mittelachse (Cr) der Kurbelwelle (27) verläuft.

10. Das Spreizsitzfahrzeug gemäß Anspruch 8 oder 9, bei dem in der Links-Rechts-Richtung gesehen zumindest ein Teil des Katalysatorabschnitts (162) in der Oben-Unten-Richtung gerade unterhalb des Spiralabgasdurchgangsbauglieds (165s) vorgesehen ist.

11. Das Spreizsitzfahrzeug gemäß einem der Ansprüche 1 bis 7, bei dem der Katalysatorabschnitt (62, 362) so angeordnet ist, dass die Strömungsrichtung des in dem Katalysatorabschnitt (62, 362) strömenden Abgases entlang einer horizontalen Richtung verläuft.

12. Das Spreizsitzfahrzeug gemäß Anspruch 11, bei dem
der Motorhauptkörper (20) eine Kurbelwelle (27) umfasst, die entlang der Links-Rechts-Richtung eine Mittelachse (Cr) aufweist und Zylinderlöcher (22a) aufweist, die jeweils einen Teil der Verbrennungskammern (30) bilden, und
in der Links-Rechts-Richtung gesehen, zumindest ein Teil des Katalysatorabschnitts (62, 362) in der Vorne-Hinten-Richtung hinter einer linearen Linie (La2) vorgesehen ist, die orthogonal zu der Mittelachse (Cy) des Zylinderlochs (22a) ist und durch die Mittelachse (Cr) der Kurbelwelle (27) verläuft.

13. Das Spreizsitzfahrzeug gemäß einem der Ansprüche 1 bis 12, bei dem
die Motoreinheit (11, 111) folgende Merkmale umfasst:
ein Abgaskühlungsdurchgangsbauglied (630), in dem ein Kühlmedium zum Kühlen des Abgases strömt, wobei zumindest ein Teil des Abgaskühlungsdurchgangsbauglieds (630) an einem Außenumfang von zumindest einem Teil des stromaufwärtigen Sammelauslassdurchgangsbauglieds (65) gebildet ist.

## Revendications

1. Véhicule à enfourcher comprenant :
un châssis (4) de carrosserie de véhicule ;
une unité moteur (11, 111) supportée par le châssis (4) de carrosserie de véhicule ;
une unité roue avant (2) incluant au moins une roue avant et située devant l'unité moteur (11, 111) dans une direction avant-arrière de véhicule lorsqu'elle est vue dans une direction gauche-droite de véhicule ; et
une unité roue arrière (3) incluant au moins une roue arrière et située derrière l'unité moteur (11, 111) dans la direction avant-arrière lorsqu'elle est vue dans la direction gauche-droite,
l'unité moteur (11, 111) incluant :
un corps principal (20) de moteur incluant des chambres de combustion ;
un élément passage d'admission (50, 150) qui est relié au corps principal (20) de moteur et inclut un orifice d'aspiration d'atmosphère (52a) par lequel de l'air est aspiré depuis l'atmosphère, l'air apporté aux chambres de combustion (30) traversant l'élément passage d'admission (50, 150) ;
un élément passage d'échappement amont (61, 161) qui est relié au corps principal (20) de moteur, les gaz d'échappement s'échappant des chambres de combustion (30) traversant l'élément passage d'échappement amont (61, 161) ;
un élément passage d'échappement collectif aval (63, 163) qui inclut un orifice d'évacuation dans l'atmosphère (67a) par lequel les gaz d'échappement sont évacués dans l'atmosphère ;
un turbocompresseur (80) qui inclut une roue de turbine (81) située dans l'élément passage d'échappement amont (61, 161) et une roue de compresseur (82) qui est située dans l'élément passage d'admission (50, 150) et est reliée à la roue de turbine (81) par le biais d'un arbre de liaison (83) présentant un axe central (Ct1, Ct2) le long de la direction gauche-droite ; et
une portion catalyseur (62, 162, 362) présentant un catalyseur principal (62a) qui purifie les gaz d'échappement évacués depuis les chambres de combustion (30) la plupart dans des chemins d'échappement allant des chambres de combustion (30) jusqu'à l'orifice d'évacuation dans l'atmosphère (67a), la longueur de la portion catalyseur (62, 162, 362) dans une direction d'écoulement des gaz d'échappement étant identique à la longueur du catalyseur principal (62a) dans la direction d'écoulement des gaz d'échappement, la portion catalyseur (62, 162, 362) étant reliée à une extrémité aval de l'élément passage d'échappement amont (61, 161) et à une extrémité amont de l'élément passage d'échappement collectif aval (63, 163), une extrémité aval de la portion catalyseur (62, 162, 362) étant située sous la roue de turbine (81) dans une direction haut-bas de véhicule, au moins une partie de la portion catalyseur (62, 162, 362) étant, lorsqu'elle est vue dans la direction gauche-droite, située, dans la direction haut-bas, juste au-dessus d'une ligne linéaire (Lw3) qui passe par une extrémité la plus basse de l'unité roue avant (2) et une extrémité la plus basse du corps principal (20) de moteur, et au moins une partie de la portion catalyseur (62, 162, 362) chevauchant le corps principal (20) de moteur lorsqu'elle est vue dans la direction avant-arrière,
l'élément passage d'échappement amont (61, 161) incluant un élément passage d'échappement en spirale (65s, 165s, 764s) qui entoure entièrement une circonférence extérieure de la roue de turbine (81), au moins une partie de l'élément passage d'échappement en spirale (65s, 165s, 764s) étant sous un plan horizontal passant par une extrémité supérieure de l'unité roue avant (2), et au moins une partie de l'élément passage d'échappement en spirale (65s, 165s, 764s) chevauchant le corps principal (20) de moteur lorsqu'elle est vue dans la direction avant-arrière, dans lequel la distance (Dt1) dans la direction gauche-droite entre le centre dans la direction gauche-droite du véhicule et la roue de turbine (81) est plus courte que la distance (Dt2) dans la direction gauche-droite entre le centre dans la direction gauche-droite du véhicule et la roue de compresseur (82),
chacune des chambres de combustion (30) est reliée à un élément passage d'admission interne (33) prévu pour chaque chambre de combustion (30),
l'élément passage d'admission (50, 150) inclut un élément passage d'admission principal (52, 152) et des éléments passages d'admission dérivés (51) présentant chacun une extrémité amont reliée à une extrémité aval de l'élément passage d'admission principal (52, 152) dans la direction d'écoulement d'air, et
le corps principal (20) de moteur inclut des injecteurs (39) dont chacun est positionné pour injecter du carburant dans la chambre de combustion (30), l'élément passage d'admission interne (33), ou les éléments passages d'admission dérivés (51),
l'élément passage d'échappement amont (61, 161) inclut :
des éléments passages d'échappement indépendants (64, 164, 764) reliés au corps principal (20) de moteur ; et
un élément passage d'échappement collectif amont (65, 165, 765) qui est relié à des extrémités aval des éléments passages d'échappement indépendants (64, 164, 764) et à une extrémité amont de la portion catalyseur (62, 162, 362) et collecte les gaz d'échappement s'échappant des éléments passages d'échappement indépendants (64, 164, 764), la roue de turbine (82) étant située dans l'élément passage d'échappement collectif amont (65, 165, 765),
l'élément passage d'échappement collectif aval (63, 163) inclut :
un élément passage d'échappement aval (66, 166) présentant une extrémité amont reliée à une extrémité aval de la portion catalyseur (62, 162, 362) ; et
un élément silencieux (67) présentant une extrémité amont reliée à l'extrémité aval de la portion catalyseur (62, 162, 362),
sur l'élément passage d'échappement collectif amont (65, 165, 765), un premier capteur d'oxygène (76) est situé en aval de la roue de turbine (81) pour détecter la densité d'oxygène dans les gaz d'échappement dans l'élément passage d'échappement collectif amont (65, 165, 765), et
un second capteur d'oxygène est situé sur l'élément passage d'échappement aval (66, 166) ou sur l'élément silencieux (67).

2. Véhicule à enfourcher selon la revendication 1, dans lequel,
le corps principal (20) de moteur inclut un vilebrequin (27) présentant un axe central (Cr) le long de la direction gauche-droite, et
au moins une partie de la portion catalyseur (62, 162, 362) est située en avant de l'axe central (Cr) du vilebrequin (27) dans la direction avant-arrière.

3. Véhicule à enfourcher selon la revendication 1 ou 2, dans lequel, au moins une partie de la portion catalyseur (62, 162, 362) est située sous un plan horizontal passant par le centre de l'unité roue avant (2).

4. Véhicule à enfourcher selon l'une quelconque des revendications 1 à 3, dans lequel, lorsqu'elle est vue dans la direction avant-arrière, la portion catalyseur (62, 162, 362) est située à gauche ou à droite de la roue de turbine (81) dans la direction gauche-droite.

5. Véhicule à enfourcher selon l'une quelconque des revendications 1 à 4, dans lequel,
le corps principal (20) de moteur inclut un vilebrequin (27) présentant un axe central (Cr) le long de la direction gauche-droite et comporte des trous cylindriques (22a) formant chacun une partie des chambres de combustion (30), et
lorsqu'elle est vue dans la direction gauche-droite, au moins une partie de l'élément passage d'échappement en spirale (65s, 165s, 764s) est située, dans la direction avant-arrière, devant une ligne linéaire (La2) qui est orthogonale à l'axe central (Cy) du trou cylindrique (22a) et passe par l'axe central (Cr) du vilebrequin (27).

6. Véhicule à enfourcher selon l'une quelconque des revendications 1 à 5, dans lequel, la portion catalyseur (62, 162, 362) est située sous la roue de turbine (81) dans la direction haut-bas.

7. Véhicule à enfourcher selon l'une quelconque des revendications 1 à 6, dans lequel,
le corps principal (20) de moteur présente des trous cylindriques (22a) formant chacun une partie des chambres de combustion (30), et
le corps principal (20) de moteur est disposé de telle sorte que les axes centraux (Cy) des trous cylindriques (22a) sont le long de la direction haut-bas.

8. Véhicule à enfourcher selon la revendication 7, dans lequel, la portion catalyseur (162) est disposée de telle sorte que la direction d'écoulement des gaz d'échappement s'écoulant dans la portion catalyseur (162) est le long de la direction haut-bas.

9. Véhicule à enfourcher selon la revendication 8, dans lequel,
le corps principal (20) de moteur inclut un vilebrequin (27) présentant un axe central (Cr) le long de la direction gauche-droite, et
lorsqu'elle est vue dans la direction gauche-droite, au moins une partie de la portion catalyseur (162) est située, dans la direction avant-arrière, devant une ligne linéaire (La2) qui est orthogonale à l'axe central (Cy) du trou cylindrique (22a) et passe par l'axe central (Cr) du vilebrequin (27).

10. Véhicule à enfourcher selon la revendication 8 ou 9, dans lequel, lorsqu'elle est vue dans la direction gauche-droite, au moins une partie de la portion catalyseur (162) est située juste sous l'élément passage d'échappement en spirale (165s) dans la direction haut-bas.

11. Véhicule à enfourcher selon l'une quelconque des revendications 1 à 7, dans lequel, la portion catalyseur (62, 362) est disposée de telle sorte que la direction d'écoulement des gaz d'échappement s'écoulant dans la portion catalyseur (62, 362) est le long d'une direction horizontale.

12. Véhicule à enfourcher selon la revendication 11, dans lequel,
le corps principal (20) de moteur inclut un vilebrequin (27) présentant un axe central (Cr) le long de la direction gauche-droite et présente des trous cylindriques (22a) formant chacun une partie des chambres de combustion (30), et
lorsqu'elle est vue dans la direction gauche-droite, au moins une partie de la portion catalyseur (62, 362) est située, dans la direction avant-arrière, derrière une ligne linéaire (La2) qui est orthogonale à l'axe central (Cy) du trou cylindrique (22a) et passe par l'axe central (Cr) du vilebrequin (27).

13. Véhicule à enfourcher selon l'une quelconque des revendications 1 à 12, dans lequel,
l'unité moteur (11, 111) inclut :
un élément passage de refroidissement de gaz d'échappement (630) dans lequel s'écoule un milieu de refroidissement destiné à refroidir les gaz d'échappement, au moins une partie de l'élément passage de refroidissement de gaz d'échappement (630) étant formée au niveau d'une périphérie extérieure d'au moins une partie de l'élément passage d'échappement collectif amont (65).
